(19) **Europäisches Patentamt / European Patent Office / Office européen des brevets**

(11) **EP 2 450 731 B1**

(12) **EUROPEAN PATENT SPECIFICATION**

(45) Date of publication and mention
of the grant of the patent:
**05.06.2013  Bulletin 2013/23**

(51) Int Cl.:
***G02B 15/177*** (2006.01)

(21) Application number: **12153251.9**

(22) Date of filing: **27.03.2003**

(54) **Electronic imaging system comprising a zoom lens**

Elektronisches Abbildungssystem mit Zoomobjektiv

Système d'imagerie électronique avec objectif de zoom

(84) Designated Contracting States:
**DE FR GB SE**

(30) Priority: 05.04.2002  JP 2002103594
07.05.2002  JP 2002131458
29.05.2002  JP 2002156209
23.01.2003  JP 2003014458
10.02.2003  PCT/JP03/01361

(43) Date of publication of application:
**09.05.2012  Bulletin 2012/19**

(62) Document number(s) of the earlier application(s) in
accordance with Art. 76 EPC:
**03715536.3 / 1 494 053**

(73) Proprietor: **Olympus Corporation**
**Shibuya-ku**
**Tokyo 151-0072 (JP)**

(72) Inventors:
• **Mihara, Shinichi**
**Tokyo, 192-0023 (JP)**

• **Konishi, Hirokazu**
**Tokyo, 192-0023 (JP)**
• **Watanabe, Masahito**
**Tokyo, 192-0023 (JP)**
• **Ishii, Atsujiro**
**Tokyo, 192-0023 (JP)**
• **Takeyama, Tetsuhide**
**Tokyo, 192-0023 (JP)**
• **Imamura, Ayami**
**Tokyo, 192-0023 (JP)**
• **Hanzawa, Toyoharu**
**Tokyo, 192-0023 (JP)**

(74) Representative: **Tiesmeyer, Johannes**
**Weickmann & Weickmann**
**Patentanwälte**
**Postfach 86 08 20**
**81635 München (DE)**

(56) References cited:
**US-A1- 2001 038 496**

**Description**

ART FIELD

The present invention relates generally to an electronic imaging system with a zoom lens, and more particularly to an electronic imaging system such as a video camera or a digital camera, the depth dimension of which is diminished by providing some contrivances to an optical system portion such as a zoom lens.

BACKGROUND ART

In recent years, digital cameras (electronic cameras) have received attention as the coming generation of cameras, an alternative to silver-halide 35 mm-film (of the 135 format) cameras. Currently available digital cameras are broken down into some categories in a wide range from the high-end type for commercial use to the portable low-end type.

In view of the category of the portable low-end type in particular, the primary object of the present invention is to provide the technology for implementing easy-to-handle video or digital cameras whose depth dimension is reduced while high image quality is ensured.

The gravest bottleneck in diminishing the depth dimension of cameras is the thickness of an optical system, especially a zoom lens system from the surface located nearest to its object side to an image pickup plane.

Recent technologies for slimming down camera bodies rely primarily on a collapsible lens mount that allows the optical system to be taken out of a camera body for phototaking and received therein for carrying now becomes mainstream. Typical examples of an optical system that can effectively be slimmed down while relying on the collapsible lens mount are disclosed in JP-A's 11-194274, 11-287953 and 2000-9997. Each publication discloses an optical system comprising, in order from its object side, a first lens group having negative refracting power and a second lens group having positive refracting power, wherein both lens groups move during zooming. However, the use of the collapsible lens mount is not preferable for the operability of such an optical system because some considerable time is taken to put it from the collapsed to the ready state. An arrangement wherein the lens group located nearest to the object side is movable is not preferable for water- and dust-proofing purposes.

US 2001/0038496 A1 discloses an electronic imaging system according to the preamble of claim 1.

SUMMARY OF THE INVENTION

In view of such problems with the prior art as mentioned above, the primary object of the present disclosure is to provide a zoom lens that has high optical performance specifications such as high zoom ratios, wide angles of view, reduced F-numbers and limited aberrations, and an electronic imaging system using the same. The zoom lens enables a camera to be immediately put into the ready state unlike a collapsible lens mount camera, makes the camera preferable for water- and dust-proofing purposes, and ensures that the optical path (optical axis) through the optical system can easily be bent by a reflecting optical element such as a mirror.

An object of the invention is to provide an electronic imaging system, the depth dimension of which is much reduced, and which incorporates a rear focus type zoom lens wherein an optical path (an optical axis) therethrough is bent by a reflecting optical element such as a mirror, so that limiting factors on movement of zooming groups can be overcome while high specifications and performance are kept.

The present provides an electronic imaging system according to claim 1.

By adoption of the optical systems having the following constructional features in particular, high optical performance specifications are ensured even when the first lens group is designed to remain fixed.

    a) The lens group B is composed of, in order from its object side, two positive lenses and one negative lens.
    b) The lens group B is composed of, in order from its object side, a positive lens, a negative lens and a positive lens.
    c) The zoom lens further comprises a lens group C located adjacent to the image side of the lens group B, wherein the lens group B is composed of one positive lens and one negative lens and the lens group C is composed of, in order from its object side, two positive lenses and one negative lens.
    d) The zoom lens further comprises a lens group C located adjacent to the image side of the lens group B, wherein the lens group B is composed of one positive lens and one negative lens and the lens group C is composed of, in order from its object side, a positive lens, a negative lens and a positive lens.

It is acceptable that an additional lens group or groups may be interposed between the moving lens group B and the fixed-during-zooming lens group A. To make the length of the zoom lens short, it is more preferable to sandwich an air space between the moving lens group B and the fixed-during-zooming lens group A. It is more preferable to locate the fixed-during-zooming lens group A nearest to the object side of the zoom lens because any increase in the size of the entrance surface of the zoom lens can be avoided.

Each zoom lens should preferably satisfy the following conditions (1), (2) and (3) with respect to the lens groups A and B.

$$0.9 < -f_A / \sqrt{(f_W \cdot f_T)} < 2.0 \qquad \ldots (1)$$

$$1.0 < f_B / \sqrt{(f_W \cdot f_T)} < 3.0 \qquad \ldots (2)$$

$$0.9 < \log \gamma_B / \log \gamma < 10 \qquad \ldots (3)$$

Here $f_A$ is the focal length of the lens group A, $f_B$ is the focal length of the lens group B, $f_W$ is the focal length of the zoom lens at the wide-angle end, $f_T$ is the focal length of the zoom lens at the telephoto end, $\gamma = f_T/f_W$, and $\gamma_B$ is the ratio of the magnification of the lens group B at the telephoto end/the magnification of the lens group B at the wide-angle end.

Condition (1) is provided to define the proper focal length range for the lens group A. As the upper limit of 2.0 to this condition is exceeded, it is difficult to ensure any satisfactory zoom ratio, and as the lower limit of 0.9 is not reached, it is difficult to make correction for off-axis aberrations such as distortion.

Condition (2) is provided to define the proper focal length range for the lens group B. As the upper limit of 3.0 to this condition is exceeded, the optical system becomes long, and as the lower limit of 1.0 is not reached, it is difficult to make correction for spherical aberrations and coma.

Condition (3) is provided to define the zoom ratio of the lens group B upon zooming from the wide-angle end to the telephoto end. As the upper limit of 10 to this condition is exceeded, there is an increase in the amount of movement of the lens group B upon zooming, and as the lower limit of 0.9 is not reached, too much load is placed on a group or groups having a zooming action other than the lens group B, leading to an increase in the number of lenses to form the zoom lens.

More preferably, one or more of the following conditions (1)', (2)' and (3)' should be satisfied:

$$1.0 < -f_A / \sqrt{(f_W \cdot f_T)} < 1.8 \qquad \ldots (1)'$$

$$1.2 < f_B / \sqrt{(f_W \cdot f_T)} < 2.7 \qquad \ldots (2)'$$

$$1.0 < \log \gamma_B / \log \gamma < 9 \qquad \ldots (3)'$$

Even more preferably, at least one of the following conditions (1)", (2)" and (3)" should be satisfied:

$$1.1 < -f_A / \sqrt{(f_W \cdot f_T)} < 1.6 \qquad \ldots (1)''$$

$$1.4 < f_B / \sqrt{(f_W \cdot f_T)} < 2.4 \qquad \ldots (2)''$$

$$1.1 < \log \gamma_B / \log \gamma < 8 \qquad \ldots (3)''$$

More preferably, the aforesaid arrangements a) to d) should be modified as follows.

a) In the lens group B, the negative lens is cemented to the positive lens adjacent to its object side to give two lens components consisting of three lenses.
b) In the lens group B, the negative lens is cemented to either one of the positive lenses adjacent thereto to give two lens components consisting of three lenses.
c) In the lens group C, the negative lens is cemented to the positive lens adjacent to its object side to give two lens components consisting of three lenses.

d) In the lens group C, the negative lens is cemented to either one of the positive lenses adjacent thereto to give two lens components consisting of three lenses.

By such cementation, it is possible to slack the relative decentration sensitivity between the lenses that form the lens group including the doublet. Further, the aforesaid zoom lens arrangement a) should preferably satisfy the following condition (4) with respect to the lens group B (which condition relates to correction of aberrations and the slacking of decentration sensitivity).

$$0.25 < R_{22R}/R_{22F} < 0.95 \quad \dots (4)$$

Here $R_{22F}$ and $F_{22R}$ are the axial radii of curvature of the surfaces of the image-side lens component in the lens group B, located nearest to the object and image sides thereof, respectively.

Exceeding the upper limit of 0.95 to condition (4) makes the action of cementation on slacking decentration sensitivity slender although that may be favorable for correction of spherical aberrations, coma and astigmatism among aberrations throughout the zoom lens system. As the lower limit of 0.25 is not reached, correction of spherical aberrations, coma and astigmatism among aberrations throughout the zoom lens system tends to become difficult.

More preferably,

$$0.30 < R_{22R}/R_{22F} < 0.90 \quad \dots (4)'$$

Most preferably,

$$0.33 < R_{22R}/R_{22F} < 0.85 \quad \dots (4)''$$

Furthermore, this zoom lens arrangement should preferably satisfy the following conditions (5) and (6) with respect to correction of chromatic aberrations.

$$-1.0 < L/R_{22C} < 0.8 \quad \dots (5)$$

$$14 < \nu_{22F} - \nu_{22R} \quad \dots (6)$$

Here $R_{22C}$ is the axial radius of curvature of the cementing surface in the image-side lens component in the lens group B, L is the diagonal length in mm of an effective image pickup area of the electronic image pickup device on condition that the electronic image pickup device should be used at an angle of view of 55° or greater at the wide-angle end, and $V_{22F}$ and $\nu_{22R}$ are the d-line based Abbe numbers of the media of the positive lens and the negative lens, respectively, in the image-side lens component in the lens group B.

Falling short of the lower limit of -1.0 to condition (5) may be favorable for correction of longitudinal chromatic aberration and chromatic aberration of magnification, but that is not preferable because chromatic aberration of spherical aberration is likely to occur. In particular, although spherical aberrations at the reference wavelength may be well corrected, spherical aberrations at short wavelengths remain over-corrected, causing chromatic blurring of images. As the upper limit of 0.8 is exceeded, it is likely that the longitudinal chromatic aberration and chromatic aberration of magnification as well as spherical aberrations at short wavelengths remain under-corrected.

As the lower limit of 14 to condition (6) is not reached, under-correction of longitudinal chromatic aberration is likely to occur. On the other hand, the possible uppermost limit may be 70 at which inexpensive materials are available.

More preferably, the following conditions (5)' and/or (6)' should be satisfied.

$$-0.8 < L/R_{22C} < 0.6 \quad \dots (5)'$$

$$18 < \nu_{22F} - \nu_{22R} \quad \dots (6)'$$

Even more preferably, the following conditions (5)" or (6)" should be satisfied.

$$-0.6 < L/R_{22C} < 0.4 \qquad \ldots (5)''$$

$$22 < \nu_{22F} - \nu_{22R} \qquad \ldots (6)''$$

Most preferably, both conditions (5)" and (6)" should be satisfied.

It is noted that so long as the image-side lens component in the lens group B is composed of a cemented component, a single lens suffices for the object-side lens component.

Further, it is preferable to satisfy the following conditions (7) and (8) that may be subordinate to condition (4).

$$-1.6 < (R_{21F} + R_{21R})/(R_{21F} - R_{21R}) < 1.2 \qquad \ldots (7)$$

$$-1.2 < L/f_{2R} < 0.1 \qquad \ldots (8)$$

Here $R_{21F}$ and $R_{21R}$ are the axial radii of curvature of the surfaces nearest to the object side and the image side, respectively, of the object-side lens component in the moving lens group B, L is the diagonal length of an effective image pickup area of the electronic image pickup device, and $f_{2R}$ is the focal length of the image-side lens component in the moving lens group B.

Referring here to correction of aberrations, a divergent beam is incident on the lens group B because the lens group A has negative refracting power. Thus, any deviation from the upper limit of 1.2 and the lower limit of -1.6 to the shape factor condition (7) at or near the optical axis of the object-side positive lens component makes correction of spherical aberrations difficult even when a plurality of aspheric surfaces are introduced to the object side of the lens group B.

As the lower limit of -1.2 to condition (8) is not reached, an exit pupil position comes close to the image plane leading often to shading, and the decentration sensitivity between the two components in.the lens group B tends to become high. As the upper limit of 0.1 is exceeded, it is difficult to ensure a compact zoom lens having high zoom ratios.

More preferably, the following conditions (7)' and/or (8)' should be satisfied.

$$-1.2 < (R_{21F} + R_{21R})/(R_{21F} - R_{21R}) < 0.8 \qquad \ldots (7)'$$

$$-1.0 < L/f_{2R} < 0.0 \qquad \ldots (8)'$$

Even more preferably, the following conditions (7)" or (8)" should be satisfied.

$$-0.8 < (R_{21F} + R_{21R})/(R_{21F} - R_{21R}) < 0.5 \qquad \ldots (7)''$$

$$-0.9 < L/f_{2R} < -0.1 \qquad \ldots (8)''$$

Most preferably, both conditions (7)" and (8)" should be satisfied.

Alternatively, for another solution to the zoom lens arrangement a), what corresponds to condition (4) may be transformed to condition (9). In this case, it is preferable to satisfy the following conditions (10), (11), (12) and (13) in place of the aforesaid conditions (5), (6), (7) and (8) as will be explained below.

$$0.6 < R_{21R}/R_{21F} < 1.0 \qquad \ldots (9)$$

Here $R_{21F}$ and $F_{21R}$ are the paraxial radii of curvature of the object-side surface and the image-side surface, respectively, of the object-side lens component in the moving lens group B.

Exceeding the upper limit of 1.0 to condition (9) may be favorable for correction of spherical aberrations, coma and astigmatism among aberrations throughout the zoom lens system, but that makes the effect of cementation on slacking decentration sensitivity slender. As the lower limit of 0.6 is not reached, it is difficult to make correction for spherical aberrations, coma and astigmatism among aberrations throughout the zoom lens system.

More preferably,

$$0.65 < R_{21R}/R_{21F} < 0.9 \qquad \dots (9)'$$

Most preferably,

$$0.7 < R_{21R}/R_{21F} < 0.8 \qquad \dots (9)''$$

Further, it is preferable to satisfy conditions (10) and (11) with respect to correction of chromatic aberrations.

$$-1.6 < L/R_{22C} < -0.4 \qquad \dots (10)$$

$$20 < \nu_{22F} - \nu_{22R} \qquad \dots (11)$$

Here $R_{22C}$ is the axial radius of curvature of the cementing surface in the image-side lens component in the lens group B, L is the diagonal length of an effective image pickup area of the electronic image pickup device used on condition that the electronic image pickup device should be used at an angle of view of 55° or greater at the wide-angle end, and $\nu_{22F}$ and $\nu_{22R}$ are the d-line based Abbe numbers of the media of the positive lens and the negative lens, respectively, in the image-side lens component in the lens group B.

Falling short of the lower limit of -1.6 to condition (10) may be favorable for correction of longitudinal chromatic aberration and chromatic aberration of magnification, but that is not preferable because chromatic aberration of spherical aberration is likely to occur. In particular, although spherical aberrations at the reference wavelength may be well corrected, spherical aberrations at short wavelengths remain over-corrected, causing chromatic blurring of images. As the upper limit of -0.4 is exceeded, it is likely that the longitudinal chromatic aberration and chromatic aberration of magnification as well spherical aberrations at short wavelengths remain under-corrected.

As the lower limit of 20 to condition (11) is not reached, under-correction of longitudinal chromatic aberration is likely to occur. On the other hand, the possible uppermost limit to condition (11) may be 70 at which inexpensive materials are available.

More preferably, the following conditions (10)' and/or (11)' should be satisfied.

$$-1.4 < L/R_{22C} < -0.6 \qquad \dots (10)'$$

$$25 < \nu_{22F} - \nu_{22R} \qquad \dots (11)'$$

Even more preferably, the following conditions (10) " or (11)" should be satisfied.

$$-1.2 < L/R_{22C} < -0.8 \qquad \dots (10)''$$

$$30 < \nu_{22F} - \nu_{22R} \qquad \dots (11)''$$

Most preferably, both conditions (10)" and (11)" should be satisfied.

For the zoom lens arrangement a) that satisfies condition (9), it is preferable to satisfy conditions (12) and (13) instead of conditions (7) and (8). These conditions may be subordinate to condition (9).

$$-1.5 < (R_{22F} + R_{22R}) / (R_{22F} - R_{22R}) < 0.2 \qquad \ldots (12)$$

$$0.05 < L/f_{2R} < 0.5 \qquad \ldots (13)$$

Here $R_{22F}$ and $R_{22R}$ are the axial radii of curvature of the surfaces nearest to the object side and the image side, respectively, of the image-side lens component in the moving lens group B, L is the diagonal length of an effective image pickup area of the electronic image pickup device, and $f_{2R}$ is the focal length of the image-side lens component in the moving lens group B.

Condition (12) is provided to define the shape factor of the image-side lens component in the lens group B. As the lower limit of -1.5 is not reached, it may be easy to make the air space between the two lens components in the lens group B thin, but it is difficult to make correction for coma and astigmatism. Exceeding the upper limit of 0.2 is not preferable because of the likelihood of mechanical interference between the two lens components. To avoid this, the spacing between both lens components must be widened.

As the lower limit of 0.05 to condition (13) is not reached, the exit pupil position comes close to the image plane leading to the likelihood of shading, and the decentration sensitivity between the two lens components in the lens group B tends to become high. As the upper limit of 0.5 is exceeded, it is difficult to obtain a compact zoom lens having high zoom ratios.

More preferably, the following conditions (12)' and/or (13)' should be satisfied.

$$-1.2 < (R_{22F} + R_{22R}) / (R_{22F} - R_{22R}) < -0.2 \qquad \ldots (12)'$$

$$0.1 < L/f_{2R} < 0.4 \qquad \ldots (13)'$$

Even more preferably, the following conditions (12)" or (13)" should be satisfied.

$$-1.0 < (R_{22F} + R_{22R}) / (R_{22F} - R_{22R}) < -0.6 \qquad \ldots (12)''$$

$$0.15 < L/f_{2R} < 0.3 \qquad \ldots (13)''$$

Most preferably, both conditions (12)" and (13)" should be satisfied.

While the zoom lens arrangement a) has been described, it is understood that the zoom lens arrangement c) is achievable by applying what is described in conjunction with the lens group B to the lens group C.

To put it another way, the following condition (4C) is set instead of condition (4).

$$0.25 < R_{32R}/R_{32F} < 0.75 \qquad \ldots (4C)$$

Here $R_{32F}$ and $R_{32R}$ are the axial radii of curvature of the surfaces nearest to the object side and the image side, respectively, of the image-side lens component in the third lens group C.

The same is valid for conditions (4)' and (4)" subordinate to condition (4).

Instead of conditions (5) and (6), the following conditions (5C) and (6C) are set.

$$-1.0 < L/R_{32C} < 0.6 \qquad \ldots (5C)$$

$$14 < \nu_{32F} - \nu_{32R} \qquad \ldots (6C)$$

Here $R_{32C}$ is the axial radius of curvature of the cementing surface in the image-side lens component in the third lens group C, L is the diagonal length in mm of an effective image pickup area of the electronic image pickup device used, and $\nu_{32F}$ and $\nu_{32R}$ are the d-line based Abbe numbers of the media of the positive lens and the negative lens, respectively, in the image-side lens component in the third lens group C.

The same is valid for the subordinate conditions (5)', (5)", (6)' and (6)".

Instead of conditions (7) and (8), the following conditions (7C) and (8C) are set.

$$-1.6 < (R_{31F} + R_{31R}) / (R_{31F} - R_{31R}) < 0.4 \qquad \ldots (7C)$$

$$-1.2 < L/f_{3R} < -0.1 \qquad \ldots (8C)$$

Here $R_{31F}$ and $R_{31R}$ are the axial radii of curvature of the surfaces nearest to the object side and the image side, respectively, of the object-side lens component in the third lens group C, L is the diagonal length of an effective image pickup area of the electronic image pickup device, and $f_{3R}$ is the focal length of the image-side lens component in the third lens group C.

The same is valid for conditions (7C)', (7C)" and (8C)' and (8C)" that are subordinate to condition (7C) and (8C), respectively.

Instead of condition (9), the following condition (9C) is provided.

$$0.6 < R_{31R}/R_{31F} < 1.0 \qquad \ldots (9C)$$

Here $R_{31F}$ and $F_{31R}$ are the axial radii of curvature of the object-side surface and the image-side surface, respectively, of the object-side lens component in the third lens group C.

The same is valid for conditions (9C)' and (9C)" that are subordinate to condition (9C).

Instead of conditions (10) and (11), the following conditions (10C) and (11C) are provided.

$$-1.6 < L/R_{32C} < -0.4 \qquad \ldots (10C)$$

$$20 < v_{32F} - v_{32R} \qquad \ldots (11C)$$

Here $R_{32C}$ is the axial radius of curvature of the cementing surface in the image-side lens component in the third lens group C, L is the diagonal length of an effective image pickup area of the electronic image pickup device used, and $v_{32F}$ and $v_{32R}$ are the d-line based Abbe numbers of the media of the positive lens and the negative lens, respectively, in the image-side lens component in the third lens group C.

The same is valid for conditions (10C)', (10C)" and (11C)' and (11C)" that are subordinate to conditions (10C) and (11C), respectively.

Instead of conditions (12) and (13), the following conditions (12C) and (13C) are provided.

$$-1.5 < (R_{32F} + R_{32R}) / (R_{32F} - R_{32R}) < 0.2 \qquad \ldots (12C)$$

$$0.05 < L/f_{3R} < 0.5 \qquad \ldots (13C)$$

Here $R_{32F}$ and $R_{32R}$ are the axial radii of curvature of the surfaces nearest to the object side and the image side, respectively, of the image-side lens component in the third lens group C, L is the diagonal length of an effective image pickup area of the electronic image pickup device, and $f_{3R}$ is the focal length of the image-side lens component in the third lens group C.

The same is valid for conditions (12C)', (12C)" and (13C)' and (13C)" that are subordinate to conditions (12C) and (13C), respectively.

For the lens group B in the zoom lens arrangement b), it is then preferable to satisfy the following conditions (14) to (19).

$$0.6 < R_{21R}/R_{21F} < 1.2 \qquad \ldots (14)$$

Here $R_{21F}$ and $F_{21R}$ are the axial radii of curvature of the surfaces nearest to the object side and the image side, respectively, of the object-side lens component in the moving lens group B.

Exceeding the upper limit of 1.2 to condition (14) may be favorable for correction of spherical aberrations, coma and astigmatism among aberrations throughout the zoom lens system, but this makes the effect of cementation on slacking decentration sensitivity slender. As the lower limit of 0.6 is not reached, it is difficult to make correction for spherical aberrations, coma and astigmatism among aberrations throughout the zoom lens system.

More preferably,

$$0.7 < R_{21R}/R_{21F} < 1.1 \qquad \dots (14)'$$

Most preferably,

$$0.8 < R_{21R}/R_{21F} < 1.0 \qquad \dots (14)''$$

Further, it is preferable to satisfy conditions (15) and (16) with respect to correction of chromatic aberrations.

$$0.3 < L/R_{21C} < 1.6 \qquad \dots (15)$$

$$10 < \nu_{21F} - \nu_{21R} \qquad \dots (16)$$

Here $R_{21C}$ is the axial radius of curvature of the cementing surface in the object-side lens component in the moving lens group B, L is the diagonal length of an effective image pickup area of the electronic image pickup device on condition that the electronic image pickup device should be used at an angle of view 55° or greater at the wide-angle end, and $\nu_{21F}$ and $\nu_{21R}$ are the d-line based Abbe numbers of the media of the positive lens and the negative lens, respectively, in the object-side lens component in the lens group B.

Falling short of the lower limit of 0.3 to condition (15) may be favorable for correction of longitudinal chromatic aberration and chromatic aberration of magnification, but this is not preferable because chromatic aberration of spherical aberration is likely to occur. In particular, although spherical aberrations at the reference wavelength may be well corrected, spherical aberrations at short wavelengths remain over-corrected, causing chromatic blurring of images. As the upper limit of 1.6 is exceeded, it is likely that the longitudinal chromatic aberration and chromatic aberration of magnification as well spherical aberrations at short wavelengths remain under-corrected.

As the lower limit of 10 to condition (16) is not reached, under-correction of longitudinal chromatic aberration is likely to occur. On the other hand, the possible uppermost limit to condition (16) may be 70 at which inexpensive materials are available.

More preferably, the following conditions (15)' and/or (16)' should be satisfied.

$$0.35 < L/R_{21C} < 1.5 \qquad \dots (15)'$$

$$15 < \nu_{21F} - \nu_{21R} \qquad \dots (16)'$$

Even more preferably, the following conditions (15)" or (16)" should be satisfied.

$$0.4 < L/R_{21C} < 1.4 \qquad \dots (15)''$$

$$20 < \nu_{21F} - \nu_{21R} \qquad \dots (16)''$$

Most preferably, both conditions (15)" and (16)" should be satisfied.

For the zoom lens arrangement b) that satisfies condition (14), it is preferable to satisfy conditions (17) and (18) subordinate to condition (14).

$$-5.0 < (R_{22F} + R_{22R}) / (R_{22F} - R_{22R}) < 0.7 \qquad \dots \quad (17)$$

$$0.1 < L/f_{2R} < 1.0 \qquad \dots \quad (18)$$

Here $R_{22F}$ and $R_{22R}$ are the axial radii of curvature of the surfaces nearest to the object side and the image side, respectively, of the image-side lens component in the moving lens group B, L is the diagonal length of an effective image pickup area of the electronic image pickup device, and $f_{2R}$ is the focal length of the image-side lens component in the moving lens group B.

Condition (17) is provided to define the shape factor of the image-side lens component in the lens group B. As the lower limit of -5.0 is not reached, it may be easy to make the air space between the two lens components in the lens group B thin, but it is difficult to make correction for coma and astigmatism. Exceeding the upper limit of 0.7 is not preferable because of the likelihood of mechanical interference between the two lens components. To avoid this, the spacing between both lens components must be widened.

As the lower limit of 0.1 to condition (18) is not reached, the exit pupil position comes close to the image plane leading to the likelihood of shading, and the decentration sensitivity between the two lens components in the lens group B tends to become high. As the upper limit of 1.0 is exceeded, it is difficult to obtain a compact zoom lens having high zoom ratios.

More preferably, the following conditions (17)' and/or (18)' should be satisfied.

$$-3.5 < (R_{22F} + R_{22R}) / (R_{22F} - R_{22R}) < 0.5 \qquad \dots \quad (17)'$$

$$0.2 < L/f_{2R} < 0.8 \qquad \dots \quad (18)'$$

Even more preferably, the following conditions (17)" or (18)" should be satisfied.

$$-0.7 < (R_{22F} + R_{22R}) / (R_{22F} - R_{22R}) < 0.3 \qquad \dots \quad (17)''$$

$$0.25 < L/f_{2R} < 0.6 \qquad \dots \quad (18)''$$

Most preferably, both conditions (17)" and (18)" should be satisfied.

While the zoom lens arrangement b) has been described, it is understood that the zoom lens arrangement d) is achievable by applying what is described in conjunction with the lens group B to the lens group C.

That is, instead of condition (14) the following condition (14C) is provided.

$$0.6 < R_{31R}/R_{31F} < 1.2 \qquad \dots \quad (14C)$$

Here $R_{31F}$ and $F_{31R}$ are the axial radii of curvature of the surfaces nearest to the object side and the image side, respectively, of the object-side lens component in the third lens group C.

The same holds true for conditions (14C)' and (14C)" that are subordinate to condition (14C).

Instead of conditions (15) and (16), the following conditions (15C) and (16C) are provided.

$$0.3 < L/R_{31C} < 1.6 \qquad \dots \quad (15C)$$

$$10 < v_{31F} - v_{31R} \qquad \dots \quad (16C)$$

Here $R_{31C}$ is the axial radius of curvature of the cementing surface in the object-side lens component in the third lens group C, L is the diagonal length of an effective image pickup area of the electronic image pickup device, and $\nu_{31F}$ and $\nu_{31R}$ are the d-line based Abbe numbers of the media of the positive lens and the negative lens, respectively, in the object-side lens component in the third lens group C.

The same holds true for conditions (15C)', (15C)" and (16C)' and (16C)" that are subordinate to conditions (15C) and (16C), respectively.

Instead of conditions (17) and (18), the following conditions (17C) and (18C) are provided.

$$-5.0 < (R_{32F} + R_{32R}) / (R_{32F} - R_{32R}) < 0.7 \qquad \ldots (17C)$$

$$0.1 < L / f_{3R} < 1.0 \qquad \ldots (18C)$$

Here $R_{32F}$ and $R_{32R}$ are the axial radii of curvature of the surfaces nearest to the object side and the image side, respectively, of the image-side lens component in the third lens group C, L is the diagonal length of an effective image pickup area of the electronic image pickup device, and $f_{3R}$ is the focal length of the image-side lens component in the third lens group C.

The same holds true for conditions (17C)', (17C)" and (18C)', (18C)".

It is noted that in order for the zoom lens arrangements a) and b) to have both a zooming function and a focal point-correction function, it is preferable to locate at least one movable lens group on the image side of the lens group B. It is then preferable that the lens group C adjacent to the lens group B is used as that movable lens group. To make the imaging system itself thin, on the other hand, it is preferable to simplify a zoom lens mechanism as much as possible. In other words, the number of lens groups movable during both zooming and focusing must be two in all.

The conditions mentioned below are all common to the zoom lens arrangements a) to d).

Focusing should preferably be carried out at a lens group in the rear of the lens group B, especially at the lens group C when it is provided. An axial air space $D_{FT}$ from the lens group B to the lens group C upon focused on an infinite object point at the telephoto end should preferably satisfy the following condition (19).

$$0.1 < D_{FT} / f_T < 1.0 \qquad \ldots (19)$$

Here $f_T$ is the focal length of the zoom lens upon focused on an infinite object point at the telephoto end.

As the upper limit of 1.0 to condition (19) is exceeded, it is difficult to ensure any zoom ratio, and as the lower limit of 0.1 is not reached, it is impossible to obtain any ample focusable distance range.

More preferably,

$$0.2 < D_{FT} / f_T < 0.8 \qquad \ldots (19)'$$

Most preferably,

$$0.3 < D_{FT} / f_T < 0.6 \qquad \ldots (19)''$$

To alleviate loads on the power of the lens group B and make correction of aberrations easy, the third lens group C should preferably have positive refracting power. For focusing on a nearer distance object in this case, the third lens group C is moved toward the object side.

$$-0.4 < L / f_C < 0.8 \qquad \ldots (20)$$

Here $f_C$ is the focal length of the third lens group C, and L is the diagonal length of an effective image pickup area of the image pickup device.

As the lower limit of -0.4 to condition (20) is not reached, the amount of movement of the third lens group C upon focusing becomes too large, leading to a possible interference thereof with the lens group B, and fluctuations of aberrations with focusing tend to become large. As the upper limit of 0.8 is exceeded, the power of the lens group B becomes weak, resulting in an increase in the amount of the lens group B upon zooming or a zoom ratio drop.

More preferably,

$$-0.3 < L/f_C < 0.6 \qquad \dots \text{(20)}'$$

Most preferably,

$$-0.2 < L/f_C < 0.4 \qquad \dots \text{(20)}''$$

For zooming from the wide-angle end to the telephoto end, it is preferable to adopt a zooming mode wherein the lens groups B and C move while their relative spacing varies. With this mode, it is possible to make efficient use of a space, thereby attaining high zoom ratios while making correction for the focal position with zooming. It is then preferable to satisfy the following condition (21) with respect to the ratio between the amounts of movement $M_2$ and $M_3$ of the lens groups B and C during zooming from the wide-angle end to the telephoto end upon focused at an infinite object point.

$$0.0 < M_3/M_2 < 1.6 \qquad \dots \text{(21)}$$

Here $M_2$ and $M_3$ are the amounts of movement of the moving lens group B and the third lens group C, respectively, at the telephoto end with respect to the wide-angle end upon focused on an infinite object point, provided that the movement of each group toward the image side is positive.

As the upper limit of 1.6 to condition (21) is exceeded, it is impossible to obtain any ample zoom ratio or any sufficient focusable distance range. As the lower limit of 0.0 is not reached, it is again difficult to obtain any adequate zoom ratio.

More preferably,

$$0.2 < M_3/M_2 < 1.4 \qquad \dots \text{(21)}'$$

Most preferably,

$$0.4 < M_3/M_2 < 1.2 \qquad \dots \text{(21)}''$$

It is noted that for the purpose of improving on correction of aberrations and exit side telecentricity, it desired to locate a lens group D on the image side with respect to the lens group C. Further, it is preferable to satisfy the following condition (22).

$$0.0 < L/f_D < 0.7 \qquad \dots \text{(22)}$$

Here $f_D$ is the focal length of the fourth lens group D, and L is the diagonal length of an effective image pickup area of the electronic image pickup device.

As the lower limit of 0.0 to condition (22) is not reached, the exit pupil position tends to come close to the image plane at the wide-angle end, and as the upper limit of 0.7 is exceeded, the amount of fluctuations of the exit pupil position with zooming becomes too large. In either case, shading tends to occur.

More preferably,

$$0.1 < L/f_D < 0.5 \qquad \dots \text{(22)}'$$

Most preferably,

$$0.2 < L/f_D < 0.35 \qquad \dots \text{(22)}''$$

The introduction of an aspheric surface to the lens group D is effective to make correction for portions of aberrations that cannot be corrected at the lens groups A and B. This is particularly effective for correction of off-axis aberrations such as distortion, astigmatism and coma. Substantial portions of aberrations occurring on the object side with respect to the lens group D are canceled at that lens group D, and so the movement of the lens group D for focusing, etc. will tilt aberration balances. It is thus desired that the lens group D remain fixed during focusing.

To direct the entrance surface of the zoom lens toward the object side of the zoom lens yet reduce the depth dimension thereof, an optical path should preferably be bent at a position as close to the object side of a phototaking optical system as possible and at a site where the height of rays is low. In view of rendering a collapsible lens mount waterproof and dustproof, it is preferable to locate moving lens groups on the image side with respect to the bending position.

To reduce the bending space as much as possible, it is preferable to keep low the height of all rays contributing to image formation near the bending site. With this in mind, it is desired that the composite focal length of a partial optical system from the lens group nearest to the object side, where the bending site is located, to just before a lens group movable during zooming be negative.

With a zoom lens wherein, as contemplated herein, the lens group A having negative refracting power and located nearest to its object side remains fixed, it is easy to bend an optical path thereby cutting down the depth dimension of a camera. According to the present invention a reflecting optical element is in the lens group A thereby bending the optical path. It is then desired that the lens group A be composed of a subgroup A1 comprising a negative meniscus lens convex on its object side, a reflecting optical element for bending the optical path, and a subgroup A2 comprising at least a positive lens.

Whatever the zoom lens type may be, it is preferable that an axial length d, as calculated on an air basis, from the surface apex of the subgroup A1 located nearest to the image side to the surface apex of the subgroup A2 located nearest to the object side, i.e., an axial length d, as calculated on an air basis, from a refracting surface having refracting power, located just before the reflecting surface of the reflecting optical element in the lens group A fixed during zooming to a refracting surface having refracting power, located just after that reflecting surface should satisfy the following condition (23).

$$0.8 < d/L < 2.0 \qquad \dots (23)$$

Exceeding the upper limit of 2.0 to condition (23) renders the object-side optical element including a prism likely to become large, and is unfavorable for correction of aberrations as well. In addition, the composite magnification of the lens group B and the subsequent lens group or groups becomes low, leading to an increase in the amount of movement of the lens group B or it is difficult to ensure any high zoom ratio. As the lower limit of 0.8 is not reached, a light beam contributing to image formation at the periphery of an image does not satisfactorily arrive at the image plane or ghosts are likely to occur.

It is noted that when the angle of view in the optical path-bending direction is 25° ±3° and about 19° ± 3°, respectively, it is desired to satisfy the following respective conditions (23-1) and (23-2).

$$0.9 < d/L < 1.7 \qquad \dots (23-1)$$

$$1.0 < d/L < 1.8 \qquad \dots (23-2)$$

Most preferably,

$$1.0 < d/L < 1.5 \qquad \dots (23-1)'$$

$$1.2 < d/L < 1.7 \qquad \dots (23-2)'$$

For size reductions of the object-side optical element including a prism and correction of aberrations, it is favorable that the reflecting optical element is composed of a prism formed of a medium having large refracting power.

$$1.5 < n_{pri} \qquad \cdots \ (24)$$

Here $n_{pri}$ is the d-line refractive index of the prism medium.

Falling short of the lower limit of 1.5 to condition (24) renders the object-side optical element including a prism likely to become large, and is unfavorable for correction of aberrations as well. In addition, the composite magnification of the lens group B and the subsequent lens group or groups becomes low, leading to an increase in the amount of movement of the lens group B or it is difficult to ensure any high zoom ratio. The upper limit should preferably be prima facie 1.90. Exceeding the upper limit renders ghosts likely to occur by total reflection. The upper limit should be more preferably 1.87, and even more preferably 1.84.

More preferably,

$$1.6 < n_{pri} \qquad \cdots \ (24)'$$

Most preferably,

$$1.7 < n_{pri} \qquad \cdots \ (24)''$$

For correction of off-axis aberrations such as chromatic aberrations and distortions, it is preferable that the subgroup A2 in the lens group A is composed of two lenses, i.e., a negative lens and a positive lens lens in order from its object side, and according to the present invention satisfies the following condition (25).

$$-0.5 < L/f_{12} < 0 \qquad \cdots \ (25)$$

Here L is the diagonal length of an effective image pickup area of the electronic image pickup device, and $f_{12}$ is the focal length of the image-side subgroup A2 in the lens group A that remains fixed during zooming.

As the upper limit of 0 to condition (25) is exceeded, the composite magnification of the lens group B and the subsequent lens group or groups becomes low, leading to an increase in the amount of movement of the lens group B, or it is difficult to ensure any high zoom ratio. Falling short of the lower limit of -0.5 renders the object-side optical element inclusive of a prism likely to become large, and is unfavorable for correction of aberrations as well.

More preferably,

$$-0.4 < L/f_{12} < -0.05 \qquad \cdots \ (25)'$$

Most preferably,

$$-0.3 < L/f_{12} < -0.1 \qquad \cdots \ (25)''$$

Whatever the zoom lens type may be, it is acceptable to configure the reflecting surface in a surface form other than the planar surface form, thereby achieving a proper paraxial refracting power profile. It is more preferable to use a control system whose reflecting surface can freely be varied, e.g., a variable shape mirror with a controllable shape, thereby making correction for fluctuations of focal position or aberrations with zooming or performing focusing or zooming. Alternatively, it is acceptable to use as the reflecting optical element a prism with a planoconcave lens cemented to its planar surface or configure an effective ray transmitting or reflecting surface of the prism with a curved surface. In view of the balance of the level of correction of distortion against the target size of the electronic imaging system, it is also acceptable to add a positive lens of weak power to the site of the zoom lens nearest to the object side. In this case, the subgroup A2 in the lens group A may be dispensed with. It is further acceptable that while the subgroup A1 in the lens group A is fixed during zooming, the subgroup A2 may be movable because it is designed to move with relative ease. In this case, it is desired that the subgroup A2 move in a convex locus toward the image size during zooming.

It is noted that the reflecting optical element is not always required to be interposed between a plurality of lenses in the fixed lens group A; it may be located nearest to the object or image side of the fixed lens group A.

Any one of the following constructional requirements is added to the zoom lens arrangement so that a bending zoom lens of much higher performance specifications and much simpler construction can be obtained, making contributions to further thickness reductions of the imaging system.

The first requirement is that the subgroup A1 in the lens group A be composed of only one negative lens convex on its object side.

This arrangement enables the depth dimension of the optical system to be minimized while the angle of view is kept intact.

In this case, the negative lens counts for nothing without having any power. That is, the second requirement is that the power ratio between the subgroups A1 and A2 in the lens group A should satisfy the following condition (26).

$$0 < f_{11}/f_{12} < 1.6 \qquad \dots \ (26)$$

Here $f_{11}$ and $f_{12}$ are the focal lengths of the subgroups A1 and A2, respectively, in the lens group A.

Any deviation from the upper limit 1.6 and the lower limit 0 to condition (26) makes the bending optical element likely to become large.

More preferably,

$$0.1 < f_{11}/f_{12} < 1.5 \qquad \dots \ (26)'$$

Most preferably,

$$0.2 < f_{11}/f_{12} < 1.4 \qquad \dots \ (26)''$$

When costs are cut down on by reducing the number of lenses, it is acceptable that either one of the lens groups B and C is composed of a single lens, and that another is constructed in such a way as to include at least a negative lens. One merit of the lens groups B and C according to the present invention is that they can make shared use of a moving space because they are designed to move in much the same direction during zooming while their relative spacing varies slightly, so that zooming can be performed while the focal length is kept constant in a limited space. Another merit is that chromatic aberrations can mutually be corrected at the lens groups B and C. In other words, it is not always necessary to bring correction of chromatic aberrations at the lens groups B and C to completion. Thus, such an arrangement as mentioned above is achievable.

To keep the relative spacing change between the lens groups B and C as small as possible, it is preferable that zooming is performed where the magnification of the combined system of the lens group B and the subsequent lens group or groups is at or near -1. For correction of aberrations, however, the absolute value of magnification should preferably be reduced as much as possible. It is thus preferable to satisfy the following condition (27) at the telephoto end.

$$0.8 < -\beta_{Rt} < 2.1 \qquad \dots \ (27)$$

Here $\beta_{Rt}$ is the composite magnification of the combined system of the lens group B and the subsequent lens group or groups at the telephoto end upon focused on an object point at infinity.

Any deviation from the upper limit of 2.1 and the lower limit of 0.8 to condition (27) results in an increase in the amount of change in the relative spacing between the lens groups B and C.

More preferably,

$$0.9 < -\beta_{Rt} < 1.9 \qquad \dots \ (27)'$$

Most preferably,

$$1.0 < -\beta_{Rt} < 1.7 \qquad \dots \ (27)''$$

In such arrangements as mentioned above, it is acceptable to interpose other lens group between the third and fourth lens groups C and D. More preferably for size reductions, the third and fourth lens groups C and D should be located with a variable air space interposed between them.

In such zoom lens arrangements as described above, it is preferable to use a prism as the reflecting optical element for bending the optical path because an entrance pupil is easily located at a shallow position and size reductions of the lens group A are favorably achievable. It is also preferable to furnish at least one transmitting surface of that prism with curvature, i.e., imparting refracting power to the prism, because the number of lenses can be cut down, contributing to size reductions and cost reductions. To reduce the depth dimension of the zoom lens in particular, that prism should preferably be located nearest to the object side of the zoom lens, while the entrance surface of the prism is directed at a concave surface toward the object side. It is thus possible to dispense with the negative meniscus lens located on the object side with respect to the prism and required for a prism all surfaces of which are defined by planar surfaces, thereby making the depth dimension smaller. It is noted, however, that such an arrangement is unfavorable for correction of off-axis aberrations such as distortions, but these aberrations can be corrected by the introduction of an aspheric surface. The introduction of an aspheric surface to the entrance surface of the prism makes it difficult to ensure decentration precision with the exit surface of the prism; however, the precision needed for inter-surface decentration is slacked by configuring the exit surface in a planar form.

Most preferably for size reductions and depth dimension reductions, the lens group A should be made up of a prism A1 having a transmitting (entrance) surface concave on its object side for bending an optical path and a subgroup A2 comprising at least a positive lens.

Especially in this arrangement, when the lens groups B and C are each of the type $\underline{b}$ (zoom lens b), coma, astigmatism and distortion occur in varying ways. It is thus preferable to satisfy the numerical ranges given by the following conditions (3) to (8), (21), (23) and (26) (corresponding to the aforesaid conditions (3) to (8), (21), (23) and (26), and corresponding to further limited conditions (3)', (3)", etc.).

$$(3) \quad 2.0 < \log \gamma_B / \log \gamma < 10$$

$$(3)' \quad 2.2 < \log \gamma_B / \log \gamma < 9$$

$$(3)'' \quad 2.4 < \log \gamma_B / \log \gamma < 8$$

$$(4) \quad 0.45 < R_{22R} / R_{22F} < 0.95$$

$$(4)' \quad 0.50 < R_{22R} / R_{22F} < 0.90$$

$$(4)'' \quad 0.55 < R_{22R} / R_{22F} < 0.85$$

$$(5) \quad -0.8 < L / R_{22C} < 0.8$$

$$(5)' \quad -0.6 < L / R_{22C} < 0.6$$

$$(5)'' \quad -0.4 < L / R_{22C} < 0.4$$

$$(6) \quad 25 < \nu_{22F} - \nu_{22R}$$

$$(6)' \quad 30 < \nu_{22F} - \nu_{22R}$$

$$(6)'' \quad 35 < \nu_{22F} - \nu_{22R}$$

$$(7) \quad -1.2 < (R_{21F} + R_{21R}) / (R_{21F} - R_{21R}) < 1.2$$

$$(7)' \quad -0.8 < (R_{21F} + R_{21R}) / (R_{21F} - R_{21R}) < 0.8$$

$$(7)'' \quad -0.5 < (R_{21F} + R_{21R}) / (R_{21F} - R_{21R}) < 0.5$$

$$(8) \quad -1.2 < L / f_{2R} < 0.1$$

$$(8)' \quad -1.0 < L / f_{2R} < 0.0$$

$$(8)'' \quad -0.9 < L / f_{2R} < -0.1$$

$$(21) \quad 0.4 < M_3 / M_2 < 1.6$$

$$(21)' \quad 0.5 < M_3 / M_2 < 1.4$$

$$(21)'' \quad 0.6 < M_3 / M_2 < 1.2$$

$$(23) \quad 0.8 < d / L < 1.8$$

$$(23\text{-}1) \quad 0.9 < d / L < 1.5$$

$$(23\text{-}2) \quad 1.0 < d / L < 1.6$$

$$(23\text{-}1)' \quad 1.0 < d / L < 1.3$$

$$(23\text{-}2)' \quad 1.2 < d / L < 1.5$$

$$(26) \quad 0.5 < f_{11} / f_{12} < 1.6$$

$$(26)' \quad 0.6 < f_{11} / f_{12} < 1.5$$

$$(26)'' \quad 0.7 < f_{11} / f_{12} < 1.4$$

Except when the lens groups B and C are each of the type b and the entrance surface of the prism in the lens group A is concave on its object side, it is preferable to satisfy the numerical ranges given by the following conditions (corresponding to the aforesaid conditions (3) to (8), (21), (23) and (26), and corresponding to further limited conditions (3)', (3)", etc.).

$$(3) \quad 0.9 < \log \gamma_B / \log \gamma < 4.5$$

$$(3)' \quad 1.0 < \log \gamma_B / \log \gamma < 4.0$$

$$(3)'' \quad 1.1 < \log \gamma_B / \log \gamma < 3.8$$

$$(4) \quad 0.25 < R_{22R} / R_{22F} < 0.75$$

$$(4)' \quad 0.30 < R_{22R} / R_{22F} < 0.65$$

$$(4)'' \quad 0.33 < R_{22R} / R_{22F} < 0.55$$

$$(5) \quad -1.0 < L / R_{22C} < 0.6$$

$$(5)' \quad -0.8 < L / R_{22C} < 0.4$$

$$(5)'' \quad -0.6 < L / R_{22C} < 0.2$$

$$(6) \quad 14 < \nu_{22F} - \nu_{22R}$$

$$(6)' \quad 18 < \nu_{22F} - \nu_{22R}$$

$$(6)'' \quad 22 < \nu_{22F} - \nu_{22R}$$

$$(7) \quad -1.6 < (R_{21F} + R_{21R}) / (R_{21F} - R_{21R}) < 0.4$$

$$(7)' \quad -1.2 < (R_{21F} + R_{21R}) / (R_{21F} - R_{21R}) < 0.0$$

$$(7)'' \quad -0.8 < (R_{21F} + R_{21R}) / (R_{21F} - R_{21R}) < -0.4$$

$$(8) \quad -1.2 < L / f_{2R} < -0.1$$

$$(8)' \quad -1.0 < L / f_{2R} < -0.2$$

$$(8)" \quad -0.9 < L / f_{2R} < -0.3$$

$$(21) \quad 0.0 < M_3 / M_2 < 1.0$$

$$(21)' \quad 0.2 < M_3 / M_2 < 0.9$$

$$(21)" \quad 0.4 < M_3 / M_2 < 0.8$$

$$(23) \quad 1.0 < d / L < 2.0$$

$$(23\text{-}1) \quad 1.1 < d / L < 1.7$$

$$(23\text{-}2) \quad 1.2 < d / L < 1.8$$

$$(23\text{-}1)' \quad 1.2 < d / L < 1.5$$

$$(23\text{-}2)' \quad 1.4 < d / L < 1.7$$

$$(26) \quad 0 < f_{11} / f_{12} < 1.1$$

$$(26)' \quad 0.1 < f_{11} / f_{12} < 1.0$$

$$(26)" \quad 0.2 < f_{11} / f_{12} < 0.9$$

Furthermore, the zoom lens may be made up of, in order from its object side, a lens group A that remains fixed during zooming, a moving lens group B, a third lens group C and a fourth lens group D. A compact four-group zoom lens could thus be constructed.

In the present disclosure, there is used an optical path bending zoom optical system comprising at least one lens group that moves toward only an object side of said optical system upon zooming from a wide-angle end to a telephoto end of said optical system and at least one reflecting optical element for bending an optical path, which element is located between said object side of said optical system and a lens included in all lens groups movable during zooming and located nearest to said object side of said optical system. To direct the entrance surface of the lens system toward the object side and reduce the depth dimension thereof, it is preferable that the optical path is turned back at a position of a photo-taking optical system which is as close to the object side as possible and at an air space where the height of light rays is low. To simplify the driving system for zooming and focusing purposes, the moving lens group(s) is preferably located at an image side position with respect to the turn-back position. To reduce turn-back space as much as possible, it is preferable that the composite focal length of a partial system from the lens disposed nearest to the object side, at which the turn-back portion exists, to just before the lens group that moves during zooming, is negative, because the heights of all light rays contributing to the formation of images at or near the turn-back position should preferably be low.

Specifically, one lens arrangement well fit for the bending zoom optical system is of the type that comprises, in order from its object side, a 1-1st lens group comprising a negative lens group and a reflecting optical element for bending an optical path, a 1-2nd lens group comprising one positive lens and a second lens group having positive refracting power, wherein during zooming from the wide-angle end to the telephoto end of the arrangement, the second lens group moves only toward the object side of the arrangement.

Another lens arrangement well suitable for the bending zoom optical system is of the type that comprises, in order from its object side, a 1-1st group comprising a negative lens group and a prism that is a reflecting optical element for bending an optical path, a 1-2nd lens group comprising one positive lens and a second lens group having positive refracting power, wherein during zooming from the wide-angle end to the telephoto end of the arrangement, the second lens group moves only toward the object side of the arrangement.

Yet another lens arrangement lending itself well to the bending zoom optical system of the type that comprises, in order from its object side, a 1-1st lens group comprising a prism that is a reflecting optical element for bending an optical path wherein at least one of its entrance surface and its exit surface is a concave surface, a 1-2nd lens group comprising one positive lens and a second lens group having positive refracting power, wherein during zooming from the wide-angle end to the telephoto end, said second lens group moves monotonously toward the object side.

In any type, it is preferable that an axial distance $\underline{d}$, as calculated on an air basis, from a refracting surface just before the reflecting surface of the reflecting optical element to a refracting surface just after the reflecting surface should satisfy the following condition (a):

$$0.5<d/L<2.1 \qquad (a)$$

As the upper limit of 2.1 to this condition (a) is exceeded, the optical system becomes too large. As the lower limit of 0.5 is not reached, a light beam that contributes to image-formation at the perimeter of an image does not satisfactorily arrive at the image plane or ghosts are likely to occur.

It is noted that when the angle of view in the optical path turn-back direction is in the range of $25° \pm 3°$, condition (a) should preferably be reduced down to the following condition (a-1), and when it is in the range of about $19° \pm 3°$, condition (a) should preferably be reduced down to the following condition (a-2).

$$0.8<d/L<1.9 \qquad (a-1)$$

$$0.5<d/L<1.5 \qquad (a-2)$$

More preferably,

$$0.9<d/L<1.8 \qquad (a'-1)$$

$$0.6<d/L<1.4 \qquad (a'-2)$$

In any type, the profile of paraxial refracting power may be properly determined even when surfaces other than planar surface are used for the reflecting surfaces. Preferably, however, a control system that allows the shape of the reflecting surface to be freely transformed is provided to make up a variable-shape mirror that makes correction for fluctuations of focal position and aberrations with zooming, and is of controllable shape for focusing or zooming purposes.

Alternatively, the reflecting optical element may be constructed as by cementing a plano-concave lens to a planar portion of the prism. To reconcile the level of correction of distortion well with the target size of the electronic image pickup system, it is acceptable to add a positive lens of weak power to the surface of the reflecting optical element located nearest to the object side. In that case, the 1-2nd lens group may be dispensed with.

Preferably in each of the two zoom types, the final lens group should be made up of a single lens having an aspheric surface. This is very effective for correction of off-axial aberrations such as distortions, astigmatisms and comas. This lens serves to cancel out aberrations produced at portions of the optical system, which are present on the object side with respect thereto; as the lens moves as by focusing, aberrations get out of balance. Thus, it is preferable to fix the final lens group.

Focusing should preferably be carried out with the second lens group and, if any, the subsequent lens group and groups except for the final lens group, because the first lens group is provided for turning back the optical path and so is not appropriate for any focusing group. It is particularly preferable to carry out focusing with the second lens group as counted from the final lens group toward the object side, because that lens group is less vulnerable to focal length and aberration fluctuations. When, in this case, the optical system is focused on a near distance object, such second lens group is moved outward. For focusing, it is then preferable that the optical axis air space $D_{FT}$ between the second and the third lens group as counted from the final lens group toward the object side, upon focused on an infinite-distance object at the telephoto end, satisfies the following condition (b).

$$0.1 < D_{FT}/f_T < 1.5 \qquad (b)$$

Here $f_T$ is the focal length of the zoom optical system upon focused on an infinite-distance object at the telephoto end.

As the upper limit of 1.5 to condition (b) is exceeded, it is difficult to ensure any desired zoom ratio, and as the lower limit of 0.1 is not reached, it is impossible to allow any sufficient distance range in which focusing is feasible.

More preferably,

$$0.2 < D_{FT}/f_T < 1 \qquad (b')$$

Even more preferably,

$$0.25 < D_{FT}/f_T < 0.8 \qquad (b'')$$

Each of the aforesaid two zoom types should preferably comprise an additional or third lens group located on the image side of the second lens group and having positive refracting power, so that upon zooming from the wide-angle end to the telephoto end, the second and third lens groups move with a change in the relative spacing between them. With this zooming mode, it is possible to make the zoom ratio of the optical system high while its focal position upon zooming is corrected by taking advantage of space.

Preferably in that case, the ratio between the amounts $M_2$ and $M_3$ of movement of the second and third lens groups upon zooming from the wide-angle end to the telephoto end of the optical system when focused on a point at infinity should satisfy the following range:

$$0.5 < M_3/M_2 < 2.0 \qquad (c)$$

As the upper limit of 2.0 to condition (c) is exceeded, it is impossible to ensure any satisfactory zoom ratio or focusable distance range. As the lower limit of 0.5 is not reached, it is again impossible to ensure any satisfactory zoom ratio.

More preferably,

$$0.7 < M_3/M_2 < 1.4 \qquad (c')$$

Even more preferably,

$$0.8 < M_3/M_2 < 1.25 \qquad (c'')$$

Preferably in each of the aforesaid two zoom types, the first lens group (the combined 1-1st and 1-2nd system) should remain fixed upon focusing, because it is an optical path turn-back system that is difficult to move for mechanical reasons. It is here noted that while the 1-1st lens group remains fixed upon zooming, the 1-2nd lens group may be movable because of being relatively easy to move. Preferably in this case, the 1-2nd lens group should be designed to move in a locus convex toward the image side. It is also preferable that the 1-2nd lens group comprises, in order from its object side, two lenses, a negative and a positive or, alternatively, one positive lens for the purpose of correcting off-axis aberrations such as chromatic aberrations and distortions.

Furthermore, if any one of such structural limitations as mentioned below is added to the bending zoom lens system, it is then possible to better its specifications and performance and simplify its construction, resulting in additional contributions to thickness reductions of the associated image pickup systems.

Limitation 1:

In the 1-1st lens group, the negative lens group located on the object side with respect to the reflecting optical element for turning back the optical path comprises only one negative lens convex on its object side. With this arrangement, it is possible to minimize the depth dimension of the optical system while some angle of view is maintained.

Limitation 2:

In that case, it is of significance that the negative lens has some power. In other words, the power ratio between the 1-1$^{st}$ lens group and the 1-2$^{nd}$ lens group should preferably satisfy:

$$-0.8 < f_{11}/f_{12} < 1.9 \qquad (d)$$

where $f_{11}$ is the focal length of the 1-1$^{st}$ lens group and $f_{12}$ is the focal length of the 1-2$^{nd}$ lens group. Any deviation from the upper and lower limits of 1.9 and -0.8 makes the turn-back optical element likely to become large.
More preferably,

$$-0.6 < f_{11}/f_{12} < 1.7 \qquad (d')$$

Even more preferably,

$$-0.4 < f_{11}/f_{12} < 1.5 \qquad (d'')$$

Limitation 3:

One of the second and third lens groups comprises a single lens, and another comprises at least a concave lens.
The second and third lens groups move in approximately the same direction while the relative spacing between them changes slightly so that they can share the common use of a narrow space for zooming while the focal position is kept constant. Another merit is that correction of chromatic aberrations is not necessarily brought to completion for each lens group. In short, chromatic aberrations at the second lens group can be corrected separately from those at the third lens group, so that either one can be composed of a single lens, resulting in some contribution to the size and weight reductions of the optical system.

Limitation 4:

To reduce the change in the relative spacing between the second and the third lens group as much as possible, zooming should preferably be carried out at the magnification of the combined system of the second and subsequent lens groups, which is around -1. To this end, it is desired to satisfy the following condition:

$$0.7 < -\beta_{Rt} < 2.1 \qquad (e)$$

Here $\beta_{Rt}$ is the combined magnification of the second and subsequent lens groups at the telephoto end (upon focused on an object point at infinity).
Any deviation from the upper and lower limits of 2.1 and 0.7 to this condition incurs an increase in the amount of change in the relative spacing between the second and the third lens group.
More preferably,

$$0.8 < -\beta_{Rt} < 1.9 \qquad (e')$$

Even more preferably,

$$0.85 < -\beta_{Rt} < 1.7 \qquad (e'')$$

The present disclosure also provides an electronic image pickup system comprising:

an optical path bending zoom optical system comprising at least one lens group that moves only toward its object side upon zooming from the wide-angle end to the telephoto end of the optical system and at least one reflecting optical element for, upon zooming, bending an optical path toward the object side with respect to the lens located nearest to the object side in all movable lens groups,

said optical path being defined by an entrance surface and an exit surface, at least one of which has a curvature, and an electronic image pickup device located on the image side of said optical system.

Thus, if the reflecting optical element (prism) for bending the optical path is allowed to have refracting power, it is then possible to diminish the number of lenses, making contributions to size reductions or cost reductions.

In this case, the reflecting optical element for bending the optical path may be located nearest to the object side of the optical path bending zooming optical system.

Thus, if the optical path bending element is located as near to the object side as possible, it is then possible to diminish the depth dimension of the electronic image pickup system.

Furthermore, the concave entrance surface of the reflecting optical element for the optical path bending optical path may be directed toward the object side of the zoom optical system.

According to the present disclosure, there is provided a slim electronic image pickup system constructed using a zoom optical system comprising, in order from its object side, a negative meniscus lens and an optical path bending prism. If the optical path bending prism is designed to have an entrance surface with negative refracting power, it is then possible to make the depth dimension of the electronic image pickup system by far smaller, because that negative meniscus lens can be dispensed with.

In that case, the entrance surface of the reflecting optical element for bending the optical path may be defined by an aspheric surface.

The axial curvature of the entrance surface having a negative value (the entrance surface being concave on object side) is unfavorable in consideration of correction of off-axis aberrations such as distortions. With the introduction of the aspheric surface, however, such aberrations can be well corrected.

Furthermore, the exit surface of the reflecting optical element for bending the optical path may be defined by a planar surface.

It is here noted that when an aspheric surface is applied to the entrance surface as mentioned above, it is difficult to ensure any desired decentration accuracy between that surface and the exit surface. However, if another surface (exit surface) is defined by a planar surface, it is then possible to slacken off demand for decentration accuracy between both surfaces.

The lens group that moves only toward the object side upon zooming form the wide-angle end to the telephoto end is made up of two positive lenses and at least one negative lens. It is then acceptable that at least each positive lens and the negative lens are cemented together.

In the lens group that moves only toward the object side upon zooming form the wide-angle end to the telephoto end, there is a tendency for aberrations to deteriorate largely due to relative decentration between the positive lens and the negative lens. It is thus preferable that the positive and the negative lens are cemented to the greatest extent practicable.

The lens group that moves only toward the object side upon zooming from the wide-angle end to the telephoto end is made up of two positive lenses and at least one negative lens. It is then acceptable that at least one positive lens and the negative lens are cemented together.

Thus, the lens group that moves only toward the object side upon zooming from the wide-angle end to the telephoto end should comprise at least two positive lenses and at least one negative lens, at least three lenses in all.

In order to slim down an electronic image pickup system, not only contrivances for an associated optical system but also contrivances for its mechanical mechanism and layouts are of importance. In particular, it is important to take advantage of the collapsible lens mount type wherein a lens mount is received in the optical system body where it is not used for phototaking. For the lens arrangement of the present disclosure, it is preferable to make use of a specific collapsible lens mount type wherein the reflecting optical element already in the optical system body is relocated from the optical path in a separate space in the optical system body, and the lens groups that are located on the object side with respect to the reflecting optical element and move out of the optical system body during phototaking are received in the resulting space on the optical path.

This specific collapsible lens mount type may also be applied to an optical system having a lens arrangement other than that of the present disclosure, provided that it comprises, in order from its object side, a first lens group of negative power, a reflecting optical element for bending an optical path and a second lens group of positive power. The reflecting optical element is relocated from the optical path in a separate space in the optical system body, so that the first lens group is received in the resulting space on the optical path.

Preferably in this case, while the first lens group is received in the optical system body, the second lens group is shifted to the image side with respect to the position farthest away from the image plane at the time of phototaking.

There is also a moving space for zooming or focusing subsequent to the second lens group. To make effective use of that space during lens reception or the like, the second lens is put down as close to the image side as possible and, if required, the reflecting optical element is shifted to the image side, so that the first lens group is received in place.

For instance, when the reflecting optical element is constructed of a reflecting mirror comprising a thin plate with a reflecting mirror coating applied thereon, the first lens group can be received in place with no need of any separate space, because the reflecting mirror is relocated vertically to the optical axis with the reflecting surface turned back.

Alternatively, each of lenses other than the reflecting optical element may be tilted or shifted during lens reception, thereby creating some reception space.

When the prism is constructed of a solid outer shell with a liquid or the like filled therein, thickness reductions may be achieved by removing the liquid from inside.

It is noted that with an optical system using a reflecting optical element, the following embodiments are feasible.

The best embodiment is a TTL single-lens reflex optical system fused with a Porro prism type finder.

In one typical embodiment of this optical system, between a phototaking optical system including a reflecting optical element and an image pickup device there is interposed a second reflecting surface for splitting (in time division, amplitude division or any other modes) an optical path toward a side nearly at right angles with a plane including an optical axis before and after reflection at the reflecting optical element. A third reflecting surface is disposed along the opposite side, with the normal lying in much the same plane with respect to the normal to the second reflecting surface and nearly at right angles therewith. Furthermore, a fourth reflecting surface is disposed in such a way that an optical path after reflection threat runs parallel with the optical axis of the entrance side of the phototaking optical system. This makes a great deal of contribution to the thickness reductions of a camera.

In the second exemplary application, the reflecting optical element and an optical system on an object side with respect thereto are operable to rotate at or near the entrance pupil position of, for instance, a phototaking optical system to turn phototaking direction or make optical correction for hand shakes.

The electronic imaging system of the present disclosure makes use of a zoom lens system with a bent optical path therein, which comprises, in order from its object side, a first lens group having negative refracting power, fixed during zooming and comprising a reflecting optical element for bending an optical path, a second lens group having positive refracting power and moving only toward the object side of the zoom lens upon zooming from a wide-angle end to a telephoto end of the zoom lens, a third lens group moving differently from the second lens group upon zooming, and a fourth lens group including an aspheric surface.

With the optical path bending reflecting optical element located nearest to the object side in the first lens group, it is thus possible to slim down the camera in its depth direction. When the lens group having a bending function remains fixed during zooming, some mechanical intricateness is avoidable.

In the present disclosure, the second and third lens groups move in such differing ways as to perform zooming and make correction for fluctuations of image point position with zooming. In particular, the second lens group, because of working as a main lens group having a zooming function, is designed to move only toward the object side of the zoom lens upon zooming from the wide-angle end to the telephoto end.

The role of the fourth lens group is to make correction for residual off-axis aberrations occurring at the 1st to 3rd lens groups, and so it is effective to introduce an aspheric surface therein.

In the case of the zoom lens system having such construction as described above, even when two lens groups given by the aforesaid second and third lens groups are constructed of a reduced number of lens components, e.g., at most three lens components including at least one cemented lens component, off-axis aberrations can be corrected in considerably satisfactory manners. The "lens component" used herein is understood to refer to a lens wherein a lens surface nearest to its object side and a lens surface nearest to its image side come into contact with an air space and there is no air space between them, provided that a single lens or a cemented lens is thought of as one unit.

It is then preferable to satisfy the following condition (41).

$$1.0 < -\beta_{Rt} < 2.6 \qquad \dots (41)$$

Here $\beta_{Rt}$ is the composite magnification of the second lens group and the subsequent lens group or groups at the telephoto end upon focused on an object point at infinity.

Any deviation from the upper limit of 2.6 or the lower limit 1.0 to condition (41) causes an increase in the amount of change in the relative spacing between the second lens group and the third lens group, often resulting in a wasteful space for moving the moving lens groups.

More preferably,

$$1.2 < -\beta_{Rt} < 2.3 \qquad \dots (41)'$$

Most preferably,

$$1.4 < -\beta_{Rt} < 2.0 \qquad \dots (41)''$$

Especially if the second lens group is made up of a cemented lens component consisting of a positive lens having an aspheric surface and a negative lens and a positive lens, it is then possible to satisfy condition (41) with a reduced number of lenses and considerably reduce changes of aberrations from the wide-angle end to the telephoto end. At the same time, this is favorable in view of changes in the F-number upon zooming; it is unlikely that the exit pupil position may come too close to the image plane, and fluctuations of the exit pupil position with zooming are reduced as well.

It is noted that although the degree (sensitivity to decentration) of aberration degradation per the unit amount of relative decentration between the two lens components in the second lens group tends to become large, yet that degradation can be slacked by satisfying the following condition (42).

$$0.7 < R_{21R}/R_{21F} < 1.6 \qquad \dots (42)$$

Here $R_{21R}$ is the axial radius of curvature of the surface located in the cemented lens component in the second lens group and positioned nearest to the image side, and $R_{21F}$ is the axial radius of curvature of the surface located in the cemented lens component in the second lens group and positioned nearest to the object side.

Exceeding the upper limit to condition (42) may be helpful for correction of spherical aberrations, coma and astigmatism throughout the zoom lens system, but the effect of cementation on slacking sensitivity to decentration becomes slender.

As the lower limit to condition (42) is not reached, correction of spherical aberrations, coma and astigmatism throughout the zoom lens system is likely to become difficult.

More preferably,

$$0.75 < R_{21R}/R_{21F} < 1.3 \qquad \dots (42)'$$

Most preferably,

$$0.8 < R_{21R}/R_{21F} < 1.3 \qquad \dots (42)''$$

For correction of chromatic aberrations, the following conditions (43) and (44) should preferably be satisfied in addition to the aforesaid condition (42).

$$0 < L/R_{21C} < 1.4 \qquad \dots (43)$$

$$15 < \nu_{21F} - \nu_{21R} \qquad \dots (44)$$

Here $R_{21C}$ is the axial radius of curvature of the cementing surface in the cemented lens component in the second lens group, L is the diagonal length in mm of the electronic image pickup device used on condition that the electronic image pickup device should be used at an angle of view of 55° or greater at the wide-angle end, and $\nu_{21F}$ and $\nu_{21R}$ are the Abbe numbers of the media of the object-side lens and the image-side lens, respectively, in the cemented lens component in the second lens group.

Falling short of the lower limit to condition (43) may be favorable for correction of longitudinal chromatic aberration and chromatic aberration of magnification, but that is not preferable because chromatic aberration of spherical aberration is likely to occur. In particular, although spherical aberrations at the reference wavelength may be well corrected, spherical aberrations at short wavelengths remain over-corrected, causing chromatic blurring of images.

As the upper limit to condition (43) is exceeded, on the other hand, it is likely that the longitudinal chromatic aberration and chromatic aberration of magnification as well as spherical aberrations at short wavelengths remain under-corrected.

As the lower limit to condition (44) is not reached, under-correction of longitudinal chromatic aberration is likely to occur.

On the other hand, combinations of media exceeding the upper limit to condition (44) do not occur in nature.

More preferably, at least one of the following conditions (43)' and (44)' should be satisfied.

$$0.2 < L/R_{21C} < 1.2 \qquad \text{... (43)''}$$

$$20 < \nu_{21F} - \nu_{21R} \qquad \text{... (44)''}$$

Most preferably, at least one of the following conditions (43)" and (44)" should be satisfied.

$$0.4 < L/R_{21C} < 1.0 \qquad \text{... (43)''}$$

$$25 < \nu_{21F} - \nu_{21R} \qquad \text{... (44)''}$$

With respect to the fourth lens group, it is preferable to satisfy the following condition (45).

$$-0.4 < L/fD < 0.6 \qquad \text{... (45)}$$

Here L is the diagonal length of the effective image pickup area of the electronic image pickup device, and fD is the focal length of the fourth lens group.

As the lower limit to condition (45) is not reached, the exit pupil position is likely to come close to the image plane, and as the upper limit to condition (45) is exceeded, the amount of fluctuation of the exit pupil position with zooming becomes too large. In either case, shading is likely to occur.

More preferably,

$$-0.2 < L/fD < 0.4 \qquad \text{... (45)'}$$

Most preferably,

$$0 < L/fD < 0.2 \qquad \text{... (45)''}$$

In view of correction of chromatic aberrations, it is preferable to construct the fourth lens group of two lenses, i.e., a positive lens and a negative lens, and satisfy the following condition (46).

$$15 < \nu_{4P} - \nu_{4N} \qquad \text{... (46)}$$

Here $\nu_{4P}$ is the d-line based Abbe number of the medium of the positive lens in the fourth lens group, and $\nu_{4N}$ is the d-line based Abbe number of the medium of the negative lens in the fourth lens group.

As the lower limit to condition (46) is not reached, chromatic aberration of magnification is prone to under-correction.

Combinations of media exceeding the upper limit to condition (46), on the other hand, do not occur in nature.

More preferably,

$$20 < \nu_{4P} - \nu_{4N} \qquad \text{... (46)'}$$

Most preferably,

$$25 < \nu_{4P} - \nu_{4N} \qquad \dots (46)''$$

The first lens group of the zoom lens according to the present disclosure is now set out at great length.
In the zoom lens of the present disclosure, the first lens group is made up of, in order from its object side, a front subgroup comprising a negative lens convex on its object side, a reflecting optical element for bending an optical path and a rear subgroup having negative refracting power. The optical path-bending optical element, because of taking a constant optical path length, causes an entrance pupil to be likely to become deep. To ensure magnification, on the other hand, it is required to make the focal length of the second and subsequent lens groups long and, hence, make the moving space likely to become large. Both requirements are thus contradictory. Accordingly, it is preferable to allocate the negative refracting power of the first lens group to two optical elements and locate both the elements before and after the optical path-bending optical element. It is then desired to satisfy the following conditions (47) and (48).

$$0.5 < (R_{11F} + R_{11R}) / (R_{11F} - R_{11R}) < 5.0 \qquad \dots (47)$$

$$0 < f_{11} / f_{12} < 1.2 \qquad \dots (48)$$

Here $R_{11F}$ is the axial radius of curvature of an object-side surface of the negative lens in the front subgroup in the first lens group, $R_{11R}$ is the axial radius of curvature of an image-side surface of the negative lens in the front subgroup in the first lens group, $f_{11}$ is the focal length of the front subgroup in the first lens group, and $f_{12}$ is the focal length of the rear subgroup in the first lens group.
Condition (47) is provided to define the shape factor of the negative lens in the front subgroup in the first lens group.
Exceeding the upper limit to condition (47) is not preferable because of the likelihood of interference with the optical path-bending optical element, and to avoid such interference, it is required to increase the depth dimension.
Falling short of the lower limit to condition (47), on the other hand, renders correction of distortion or the like difficult.
Condition (48) is provided to define the focal length ratio between the front and rear subgroups in the first lens group.
As the upper limit to condition (48) is exceeded, the entrance pupil is likely to become deep.
As the lower limit to condition (48) is not reached, on the other hand, the moving space is likely to become large because the focal lengths of the second and subsequent lens groups should be increased to ensure magnification.
More preferably,

$$0.8 < (R_{11F} + R_{11R}) / (R_{11F} - R_{11R}) < 4.0 \qquad \dots (47')$$

$$0 < f_{11} / f_{12} < 1.0 \qquad \dots (48')$$

Most preferably,

$$1.0 < (R_{11F} + R_{11R}) / (R_{11F} - R_{11R}) < 3.0 \qquad \dots (47'')$$

$$0 < f_{11} / f_{12} < 0.8 \qquad \dots (48'')$$

The front subgroup is composed of one negative lens to diminish the depth dimension. For the primary purpose of correction of off-axis aberrations, it is thus preferable to introduce an aspheric surface in the front subgroup. Preferably in this case, the rear subgroup should be made up of two lens components for the primary purpose of allocating correction of chromatic aberrations and spherical aberrations on the telephoto side to the rear subgroup.
Further, it is preferable to satisfy the following condition (49) with respect to an air lens portion defined by the two lens components.

$$0.4 < (R_{12R}/R_{13F})^P < 1.6 \qquad \ldots \ (49)$$

where $R_{12R}$ is the axial radius of curvature of an object-side surface of an air lens defined between the two lens components in the rear subgroup in the first lens group, $R_{13F}$ is the axial radius of curvature of an image-side surface of the air lens defined between the two lens components in the rear subgroup in the first lens group, and P is P=1 in the case where the negative lens component and the positive lens component are located in this order as viewed from an object side of the rear subgroup, and P=-1 in the case wherein the positive lens component and the negative lens component are located in this order as viewed from the object side of the rear subgroup.

As the lower limit to condition (49) is not reached, higher-order components of spherical aberrations on the telephoto side become large, resulting often in low-contrast images.

As the upper limit to condition (49) is exceeded, on the other hand, spherical aberrations on the telephoto side are likely to remain under-corrected.

More preferably,

$$0.5 < (R_{12R}/R_{13F})^P < 1.4 \qquad \ldots \ (49')$$

Most preferably,

$$0.6 < (R_{12R}/R_{13F})^P < 1.2 \qquad \ldots \ (49'')$$

It is also desired that at least one of the two lens components that form the rear subgroup in the first lens group be composed of a cemented lens component consisting of a positive lens and a negative lens, wherein a high-dispersion medium is used for the positive lens and a low-dispersion medium for the negative lens.

It is then preferably to satisfy the following conditions (50) and (51).

$$3 < \nu_{A2N} - \nu_{A2P} < 40 \qquad \ldots \ (50)$$

$$0.2 < Q \cdot L/R_{A2C} < 1.0 \qquad \ldots \ (51)$$

Here $\nu_{A2N}$ is the d-line based Abbe number of the negative lens medium of the cemented lens component in the rear subgroup in the first lens group, $\nu_{A2P}$ is the d-line based Abbe number of the positive lens medium of the cemented lens component in the rear subgroup in the first lens group, L is the diagonal length of an effective image pickup area of the electronic image pickup device, $R_{A2C}$ is the axial radius of curvature of the cementing surface in the cemented lens component in the rear subgroup in the first lens group, Q is Q=1 in the case where the cemented lens component in the rear subgroup in the first lens group is composed of the negative lens and the positive lens in order from the object side of the rear subgroup, and Q is Q=-1 in the case where that cemented lens component is composed of the positive lens and the negative lens in order from the object side of the rear subgroup.

Any deviation from the lower and upper limits to condition (50) renders simultaneous correction of longitudinal chromatic aberration and chromatic aberration of magnification difficult.

Falling short of the lower limit to condition (51) is not preferable, not only because chromatic aberrations of spherical aberrations are likely to occur but also because even when satisfactory correction of spherical aberrations at the reference wavelength in particular is achievable, spherical aberrations at short wavelengths remain under-corrected, causing a chromatic blurring of images.

Exceeding the upper limit to condition (51), on the other hand, is again not preferable because of an increase in the sensitivity of cementation to decentration.

More preferably,

$$6 < \nu_{A2N} - \nu_{A2P} < 35 \qquad \ldots \ (50')$$

$$0.3 < Q \cdot L/R_{A2C} < 0.8 \qquad \dots (51')$$

Most preferably,

$$9 < \nu_{A2N} - \nu_{A2P} < 30 \qquad \dots (50'')$$

$$0.4 < Q \cdot L/R_{A2C} < 0.65 \qquad \dots (51'')$$

For the zoom lens of the present disclosure, focusing should preferably be performed by back-and-forth movement of the third lens group on the optical axis of the zoom lens. It is then preferable to fix the fourth lens group constantly in place, not only because the mechanism involved can be simplified but also because fluctuations of aberrations with zooming or focusing can be reduced.

Referring here to an optical path-bending type zoom lens such as one intended herein, size reductions of the optical system relative to size reductions of the image pickup device are more significant as compared with a collapsible lens mount type zoom lens.

For the purpose of further slimming down the camera, it is thus effective to use with the zoom lens of the present invention an electronic image pickup device as small as satisfying the following condition (52):

$$F \geqq a \qquad \dots (52)$$

where F is the full-aperture F-number of the zoom lens at the wide-angle end, and a is the horizontal pixel pitch in $\mu$m of the electronic image pickup device. It is then more preferable to provide such contrivances as described below.

As the image pickup device becomes small, the pixel pitch becomes small in proportion; image degradations due to the influence of diffraction become unacceptably large. Especially when the relation of the full-aperture F-number at the wide-angle end to the horizontal pixel pitch $\underline{a}$ ($\mu$m) of the electronic image pickup device used becomes so small as satisfying the above condition (52), the image pickup device cannot be used in states other than the full-aperture state.

Accordingly, the aperture stop that determines the F-number should have a fixed inside diameter, and be kept against insertion and deinsertion or replacement. In this condition, at least one of the refracting surfaces adjacent to the aperture stop (the refracting surface adjacent to the image side in the present invention) should be set with its convex surface directed toward the aperture stop, so that the point of intersection of the optical axis with the perpendicular from the aperture stop down to the optical axis is positioned within 0.5 mm from the apex of the convex surface or, alternatively, the convex surface intersects or contacts the inside diameter portion of the aperture stop member inclusive of the back surface of the aperture stop site. This makes some considerable space needed so far for an aperture stop unnecessary or saves space considerably, contributing substantially to size reductions.

For control of light quantity, it is preferable to use variable-transmittance means instead of the aperture stop. Wherever on the optical path the variable-transmittance is located, no problem arises; it should preferably be inserted in a large enough space. Especially in the present disclosure, that means should be inserted between the zooming lens group and the image pickup device. For the variable-transmittance means, use may be made of a member with a transmittance variable with voltage, etc., or a combination of insertable or replaceable filters with varying transmittances. It is then desired that a shutter for controlling the reception time of a light beam guided to the electronic image pickup device be located in a space different from that for the aperture stop.

When the relation of the full-aperture F-number at the wide-angle end to the horizontal pixel pitch a ($\mu$m) of the electronic image pickup device satisfies the above condition (F $\geqq$ a), it is acceptable to dispense with an optical low-pass filter. In other words, it is acceptable that all media on the optical axis between the zoom lens system and the image pickup device are defined by air or a non-crystalline medium alone. This is because there is little frequency component capable of producing bending distortion for the reason of deterioration in the image-formation capability due to diffraction and geometric aberrations. Alternatively, the optical elements located between the zoom lens system and the electronic image pickup device may be composed of those wherein all interfaces of media are substantially defined by planes and which are free from spatial frequency characteristic conversion actions, e.g., optical low-pass filters.

For the zoom lens used in the present disclosure, it is desired to satisfy the following condition (53):

$$1.8 < f_T/F_W \qquad \dots (53)$$

where $f_T$ is the focal length of the zoom lens system at the telephoto end, and $f_W$ is the focal length of the zoom lens system at the wide-angle end.

As the lower limit to condition (53) is not reached, the zoom ratio of the zoom lens system becomes lower than 1.8.

In this regard, the upper limit to $f_T/f_W$ should preferably be set at 5.5.

At greater than 5.5, the zoom ratio becomes too high, and the amount of zooming movement of the lens group becomes too large. This in turn causes size to increases in the optical path-bending direction and, hence, makes it impossible to achieve any compact imaging system.

The presumption for the electronic image pickup device used herein is that it has a whole angle of view of 55° or greater at the wide-angle end. The 55 degrees are the wide-angle-end whole angle of view needed commonly for an electronic image pickup device.

For the electronic image pickup device, the wide-angle-end view of angle should preferably be 80° or smaller.

At greater than 80°, distortions are likely to occur, and it is difficult to make the first lens group compact. It is thus difficult to slim down the electronic imaging system.

Thus, the present disclosure provides means for reducing the thickness of the zoom lens portion upon received in a collapsible lens mount while satisfactory image-formation capability is maintained.

Next, how and why the thickness of filters is reduced is now explained. In an electronic imaging system, an infrared absorption filter having a certain thickness is usually inserted between an image pickup device and the object side of a zoom lens, so that the incidence of infrared light on the image pickup plane is prevented. Here consider the case where this filter is replaced by a coating devoid of thickness. In addition to the fact that the system becomes thin as a matter of course, there are spillover effects. When a near-infrared sharp cut coat having a transmittance ($\tau_{600}$) of at least 80% at 600 nm and a transmittance ($\tau_{700}$) of up to 8% at 700 nm is introduced between the image pickup device in the rear of the zoom lens system and the object side of the system, the transmittance at a near-infrared area of 700 nm or longer is relatively lower and the transmittance on the red side is relatively higher as compared with those of the absorption type, so that the tendency of bluish purple to turn into magenta - a defect of a CCD or other solid-state image pickup device having a complementary colors filter - is diminished by gain control and there can be obtained color reproduction comparable to that by a CCD or other solid-state image pickup device having a primary colors filter. In addition, it is possible to improve on color reproduction of, to say nothing of primary colors and complementary colors, objects having strong reflectivity in the near-infrared range, like plants or the human skin.

Thus, it is preferable to satisfy the following conditions (28) and (29):

$$\tau_{600}/\tau_{550} \geqq 0.8 \qquad \cdot \cdot \cdot (28)$$

$$\tau_{700}/\tau_{550} \leqq 0.08 \qquad \cdot \cdot \cdot (29)$$

where $\tau_{550}$ is the transmittance at 550 nm wavelength.

More preferably, the following conditions (28)' and/or (29)' should be satisfied:

$$\tau_{600}/\tau_{550} \geqq 0.85 \qquad \cdot \cdot \cdot (28)'$$

$$\tau_{700}/\tau_{550} \leqq 0.05 \qquad \cdot \cdot \cdot (29)'$$

Even more preferably, the following conditions (28) " or (29)" should be satisfied:

$$\tau_{600}/\tau_{550} \geqq 0.9 \qquad \cdot \cdot \cdot (28)''$$

$$\tau_{700}/\tau_{550} \leqq 0.03 \qquad \cdot \cdot \cdot (29)''$$

Most preferably, both conditions (28) " and (29) " should be satisfied.

Another defect of the CCD or other solid-state image pickup device is that the sensitivity to the wavelength of 550 nm in the near ultraviolet range is by far higher than that of the human eye. This, too, makes noticeable chromatic blurring at the edges of an image due to chromatic aberrations in the near-ultraviolet range. Such chromatic blurring is fatal to a compact optical system. Accordingly, if an absorber or reflector is inserted on the optical path, which is designed such that the ratio of the transmittance ($\tau_{400}$) at 400 nm wavelength to that ($\tau_{550}$) at 550 nm wavelength is less than 0.08 and the ratio of the transmittance ($\tau_{440}$) at 440 nm wavelength to that ($\tau_{550}$) at 550 nm wavelength is greater than 0.4, it is then possible to considerably reduce noises such as chromatic blurring while the wavelength range necessary for color reproduction (satisfactory color reproduction) is kept intact.

It is thus preferable to satisfy the following conditions (30) and (31):

$$\tau_{400}/\tau_{550} \leqq 0.08 \qquad \cdots (30)$$

$$\tau_{440}/\tau_{550} \geqq 0.4 \qquad \cdots (31)$$

More preferably, the following conditions (30)' and/or (31)' should be satisfied.

$$\tau_{400}/\tau_{550} \leqq 0.06 \qquad \cdots (30)'$$

$$\tau_{440}/\tau_{550} \geqq 0.5 \qquad \cdots (31)'$$

Even more preferably, the following condition (30)" or (31)" should be satisfied.

$$\tau_{400}/\tau_{550} \leqq 0.04 \qquad \cdots (30)''$$

$$\tau_{440}/\tau_{550} \geqq 0.6 \qquad \cdots (31)''$$

Most preferably, both condition (30)" and (31)" should be satisfied.

It is noted that these filters should preferably be located between the image-formation optical system and the image pickup device.

On the other hand, a complementary colors filter is higher in substantial sensitivity and more favorable in resolution than a primary colors filter-inserted CCD due to its high transmitted light energy, and provides a great merit when used in combination with a small-size CCD.

To shorten and slim down the optical system, the optical low-pass filter that is another filter, too, should preferably be thinned as much as possible. In general, an optical low-pass filter harnesses a double-refraction action that a uniaxial crystal like berg crystal has. However, when the optical low-pass filter includes a quartz optical low-pass filter or filters in which the angles of the crystal axes with respect to the optical axis of the zoom lens are in the range of 35° to 55° and the crystal axes are in varying directions upon projected onto the image plane, the filter having the largest thickness along the optical axis of the zoom lens among them should preferably satisfy the following condition (32) with respect to its thickness $t_{LPF}$ (mm).

$$0.08 < t_{LPF}/a < 0.16 \quad (at\ a<4\ \mu m)$$

$$0.075 < t_{LPF}/a < 0.15 \quad (at\ a<3\ \mu m) \qquad \cdots (32)$$

Here $t_{LPF}$ (mm) is the thickness of the optical low-pass filter that becomes thickest along the optical axis of the zoom lens with the angle of one crystal axis with respect to the optical axis being in the range of 35° to 55°, and $\underline{a}$ is the horizontal pixel pitch (in $\mu m$) of the image pickup device.

Referring to a certain optical low-pass filter or an optical low-pass filter having the largest thickness among optical low-pass filters, its thickness is set in such a way that contrast becomes theoretically zero at the Nyquist threshold wavelength, i.e., at approximately a/5.88 (mm). A thicker optical low-pass filter may be effective for prevention of swindle signals such as moiré fringes, but makes it impossible to take full advantages of the resolving power that the electronic image pickup device has, while a thinner filter renders full removal of swindle signals like moiré fringes impossible. However, swindle signals like moiré fringes have close correlations with the image-formation capability of a taking lens

EP 2 450 731 B1

like a zoom lens; high image-formation capability renders swindle signals like moiré fringes likely to occur. Accordingly, when the image-formation capability is high, the optical low-pass filter should preferably be somewhat thicker whereas when it is low, the optical low-pass filter should preferably be somewhat thinner.

As the pixel pitch becomes small, on the other hand, the contrast of frequency components greater than the Nyquist threshold decreases due to the influence of diffraction by the image-formation lens system and, hence, swindle signals like moiré fringes are reduced. Thus, it is preferable to reduce the thickness of the optical low-pass filter by a few % or a few tens % from a/5.88 (mm) because a rather improved contrast is obtainable at a spatial frequency lower than the frequency corresponding to the Nyquist threshold.

More preferably,

$$0.075 < t_{LPF}/a < 0.15 \quad (\text{at } a < 4 \ \mu\text{m})$$

$$0.07 < t_{LPF}/a < 0.14 \quad (\text{at } a < 3 \ \mu\text{m}) \qquad \ldots (32)'$$

Most preferably,

$$0.07 < t_{LPF}/a < 0.14 \quad (\text{at } a < 4 \ \mu\text{m})$$

$$0.065 < t_{LPF}/a < 0.13 \quad (\text{at } a < 3 \ \mu\text{m}) \qquad \ldots (32)''$$

If an optical low-pass filter is too thin at a<4 $\mu$m, it is then difficult to process. Thus, it is permissible to impart some thickness to the optical low-pass filter or make high the spatial frequency (cutoff frequency) where contrast reduces to zero even when the upper limit to conditions (32), (32)' and (32)'' is exceeded. In other words, it is permissible to regulate the angle of the crystal axis of the optical low-pass filter with respect to the optical axis of the zoom lens to within the range of 15° to 35° or 55° to 75°. In some cases, it is also permissible to dispense with the optical low-pass filter. In that angle range, the quantity of separation of incident light to an ordinary ray and an extraordinary ray is smaller than that around 45°, and that separation does not occur at 0° or 90° (at 90°, however, there is a phase difference because of a velocity difference between both rays - the quarter-wave principle).

As already described, when the pixel pitch becomes small, it is difficult to increase the F-number because the image-formation capability deteriorates under the influence of diffraction at a high spatial frequency that compensates for such a small pixel pitch. It is thus acceptable to use two types of aperture stops for a camera, i.e., a full-aperture stop where there is a considerable deterioration due to geometric aberrations and an aperture stop having an F-number in the vicinity of diffraction limited. It is then acceptable to dispense with such an optical low-pass filter as described before.

Especially when the pixel pitch is small and the highest image-formation capability is obtained at a full-aperture stop, etc., it is acceptable to use an aperture stop having a constantly fixed inside diameter as means for controlling the size of an incident light beam on the image pickup plane instead of using an aperture stop having a variable inside diameter or a replaceable aperture stop. Preferably in that case, at least one of lens surfaces adjacent to the aperture stop should be set such that its convex surface is directed to the aperture stop and it extends through the inside diameter portion of the aperture stop, because there is no need of providing any additional space for the stop, contributing to length reductions of the zoom optical system. It is also desirable to locate an optical element having a transmittance of up to 90% (where possible, the entrance and exit surfaces of the optical element should be defined by planar surfaces) in a space including the optical axis at least one lens away from the aperture stop or use means for replacing that optical element by another element having a different transmittance.

Alternatively, the electronic imaging system is designed in such a way as to have a plurality of apertures each of fixed aperture size, one of which can be inserted into any one of optical paths between the lens surface located nearest to the image side of the first lens group and the lens surface located nearest to the object side of the third lens group and can be replaced with another as well, so that illuminance on the image plane can be adjusted. Then, media whose transmittances with respect to 550 nm are different but less than 80% are filled in some of the plurality of apertures for light quantity control. Alternatively, when control is carried out in such a way as to provide a light quantity corresponding to such an F-number as given by a ($\mu$m) /F-number < 0.4, it is preferable to fill the apertures with medium whose transmittance with respect to 550 nm are different but less than 80%. In the range of the full-aperture value to values deviating from the aforesaid condition as an example, any medium is not used or dummy media having a transmittance of at least 91% with respect to 550 nm are used. In the range of the aforesaid condition, it is preferable to control the quantity of light with an ND filter or the like, rather than to decrease the diameter of the aperture stop to such an extent that the influence of diffraction appears.

Alternatively, it is acceptable to uniformly reduce the diameters of a plurality of apertures inversely with the F-numbers, so that optical low-pass filters having different frequency characteristics can be inserted in place of ND filters. As degradation by diffraction becomes worse with stop-down, it is desirable that the smaller the aperture diameter, the higher the frequency characteristics the optical low-pass filters have.

It is understood that when the relation of the full-aperture F-number at the wide-angle end to the pixel pitch a (μm) used satisfies F>a, it is acceptable to dispense with the optical low-pass filter. In other words, it is permissible that the all the medium on the optical axis between the zoom lens system and the electronic image pickup device is composed of air or a non-crystalline medium alone. This is because there are little frequency components capable of producing distortions upon bending due to a deterioration in the image-formation capability by reason of diffraction and geometric aberrations.

It is understood that only the upper limit or only the lower limit may be applied to each of the above conditions, and that the values of these conditions in each of the following examples may be extended as far as the upper or lower limits thereof.

BRIEF DESCRIPTION OF THE DRAWINGS

Figs. 1(a), 1(b) and 1(c) are illustrative in section of Example 1 of the zoom lens at the wide-angle end (a), in an intermediate state (b) and at the telephoto end (c), respectively, upon focused on an object point at infinity.

Figs. 2(a), 2(b) and 2(c) are illustrative in section of the zoom lens of Example 2, similar to Figs. 1(a) to 1(c).

Figs. 3(a), 3(b) and 3(c) are sections in schematic illustrative of the zoom lens of Example 3, similar to Figs. 1(a) to 1(c).

Figs. 4(a), 4(b) and 4(c) are illustrative in section of the zoom lens of Example 4, similar to Figs. 1(a) to 1(c).

Figs. 5(a), 5(b) and 5(c) are illustrative in section of the zoom lens of Example 5, similar to Figs. 1(a) to 1(c).

Figs. 6(a), 6(b) and 6(c) are illustrative in section of the zoom lens of Example 6, similar to Figs. 1(a) to 1(c).

Figs. 7(a), 7(b) and 7(c) are illustrative in section of the zoom lens of Example 7, similar to Figs. 1(a) to 1(c).

Figs. 8(a), 8(b) and 8(c) are illustrative in section of the zoom lens of Example 8 s, similar to Figs. 1(a) to 1(c).

Figs. 9(a), 9(b) and 9(c) are illustrative in section of the zoom lens of Example 9, similar to Figs. 1(a) to 1(c).

Figs. 10(a), 10(b) and 10(c) are illustrative in section of the zoom lens of Example 10, similar to Figs. 1(a) to 1(c).

Figs. 11(a), 11(b) and 11(c) are illustrative in section of the zoom lens of Example 11, similar to Figs. 1(a) to 1(c).

Figs. 12(a), 12(b) and 12(c) are illustrative in section of the zoom lens of Example 12, similar to Figs. 1(a) to 1(c).

Figs. 13(a), 13(b) and 13(c) are illustrative in section of the zoom lens of Example 13, similar to Figs. 1(a) to 1(c).

Fig. 14 is an optical path diagram for Example 1 of the zoom lens when the optical path is bent upon focused on an infinite object point at the wide-angle end.

Figs. 15(a), 15(b) and 15(c) are illustrative in section of Example 14 of the optical path-bending zoom optical system used with the electronic imaging system of the invention at the wide-angle end (a), in an intermediate state (b) and at the telephoto end (c), respectively, upon focused on an object point at infinity.

Figs. 16(a), 16(b) and 16(c) are illustrative in section of the optical path-bending optical system of Example 15, similar to Figs. 15(a) to 15(c).

Figs. 17(a), 17(b) and 17(c) are illustrative in section of the optical path-bending optical system of Example 16, similar to Figs. 15(a) to 15(c).

Figs. 18(a), 18(b) and 18(c) are illustrative in section of the optical path-bending optical system of Example 17, similar to Figs. 15(a) to 15(c).

Figs. 19(a), 19(b) and 19(c) are illustrative in section of the optical path-bending optical system of Example 18, similar to Figs. 15(a) to 15(c).

Figs. 20(a), 20(b) and 20(c) are illustrative in section of the optical path-bending optical system of Example 19, similar to Figs. 15(a) to 15(c).

Figs. 21(a), 21(b) and 21(c) are illustrative in section of the optical path-bending optical system of Example 20, similar to Figs. 15(a) to 15(c).

Figs. 22(a), 22(b) and 22(c) are illustrative in section of the optical path-bending optical system of Example 21, similar to Figs. 15(a) to 15(c).

Figs. 23(a), 23(b) and 23(c) are illustrative in section of the optical path-bending optical system of Example 22, similar to Figs. 15(a) to 15(c).

Figs. 24(a), 24(b) and 24(c) are illustrative in section of the optical path-bending optical system of Example 23, similar to Figs. 15(a) to 15(c).

Figs. 25(a), 25(b) and 25(c) are illustrative in section of the optical path-bending optical system of Example 24, similar to Figs. 15(a) to 15(c).

Figs. 26(a), 26(b) and 26(c) are illustrative in section of the optical path-bending optical system of Example 25, similar to Figs. 15(a) to 15(c).

Fig. 27 is a sectional view illustrative along the optical axis of the optical construction of Example 26 of the zoom lens used with the electronic imaging system according to the present disclosure.

Figs. 28(a), 28(b) and 18(c) are sectional views illustrative at the wide-angle end (a), in an intermediate state (b) and at the telephoto end (c) of the optical construction of the zoom lens of Example 26 upon focused on an infinite object point.

Fig. 29 is a sectional view illustrative along the optical axis of the optical construction of Example 27 of the zoom lens used with the electronic imaging system according to the present disclosure.

Figs. 30(a), 30(b) and 30(c) are sectional views illustrative at the wide-angle end (a), in an intermediate state (b) and at the telephoto end (c) of the optical construction of Example 27 of the zoom lens upon focused on an infinite object point.

Fig. 31 is a sectional view illustrative along the optical axis of the optical construction of Example 28 of the zoom lens used with the electronic imaging system according to the present disclosure.

Figs. 32(a), 32(b) and 32(c) are sectional views illustrative at the wide-angle end (a), in an intermediate state (b) and at the telephoto end (c) of the optical construction of Example 28 of the zoom lens upon focused on an infinite object point.

Figs. 33(a) and 33(b) are illustrative of one example of the collapsible lens mount mode for the optical path-bending zoom optical system according to the present disclosure.

Fig. 34 is illustrative in conception of one collapsible lens mount mode wherein the optical path bending reflecting optical element is made up of a mirror.

Fig. 35 is illustrative in conception of another collapsible lens mount mode wherein the optical path bending reflecting optical element is made up of a mirror.

Figs. 36(a) and 36(b) are illustrative in conception of yet another collapsible lens mount mode wherein the optical path bending reflecting optical element is made up of a liquid prism or a deformable prism.

Fig. 37 is illustrative in conception of one focusing mode wherein the optical path bending reflecting optical element is made up of a variable shape mirror.

Fig. 38 is illustrative in conception of the surface mirror of the variable shape mirror.

Fig. 39 is illustrative in conception of how to prevent hand shakes when the optical path bending reflecting optical element is made up of a variable shape mirror.

Fig. 40 is illustrative in conception of how a finder optical path is divided from the optical path-bending zoom optical system.

Fig. 41 is illustrative of the diagonal length of the effective image pickup plane of an electronic image pickup device upon phototaking.

Fig. 42 is a diagram indicative of the transmittance characteristics of one example of the near-infrared sharp cut coat.

Fig. 43 is a diagram indicative of the transmittance characteristics of one example of the color filter located on the exit surface side of the low-pass filter.

Fig. 44 is a schematic illustrative of how the color filter elements are arranged in the complementary colors mosaic filter.

Fig. 45 is a diagram indicative of one example of the wavelength characteristics of the complementary colors mosaic filter.

Fig. 46 is a perspective view of details of one example of an aperture stop portion used in each example.

Fig. 47 is illustrative in detail of another example of the aperture stop portion used in each example.

Fig. 48 is a front perspective schematic illustrative of the appearance of a digital camera in which the optical path-bending zoom optical system of the present invention is built.

Fig. 49 is a rear perspective schematic of the digital camera of Fig. 28.

Fig. 50 is a sectional schematic of the digital camera of Fig. 48.

Fig. 51 is a front perspective view of an personal computer with a cover opened, in which the optical path-bending zoom optical system of the present disclosure is built in the form of an objective optical system.

Fig. 52 is a sectional view of a phototaking optical system for a personal computer.

Fig. 53 is a sectional view of the state shown in Fig. 51.

Figs. 54(a) and 54(b) are a front view and a side view of a cellular phone in which the optical path-bending zoom optical system is built in the form of an objective optical system, and Fig. 54(c) is a sectional view of a phototaking optical system for the same.

## BEST MODE FOR CARRYING OUT THE INVENTION

Examples 1 to 25 of the zoom lenses are now explained. Examples 2 and 4-12 are embodiments of the present invention.

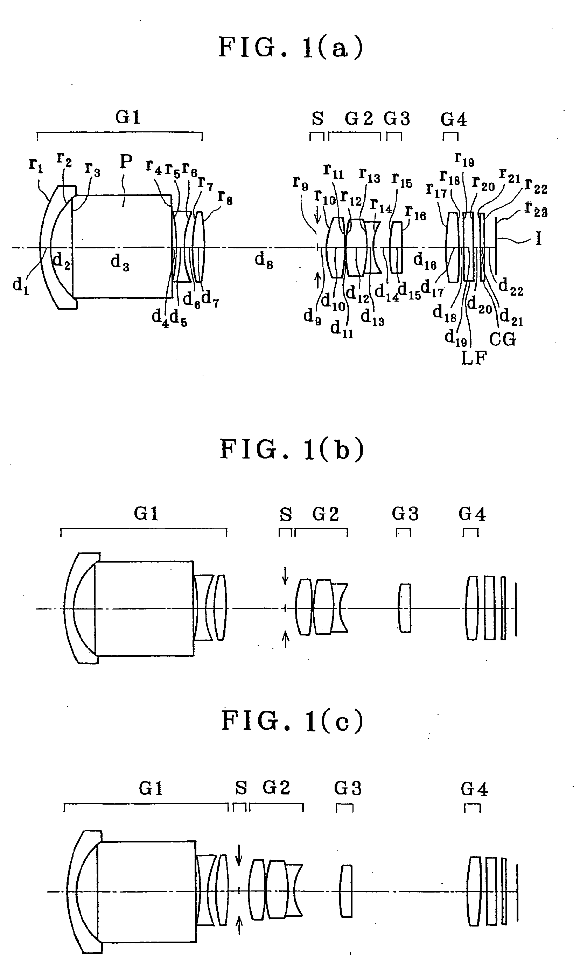

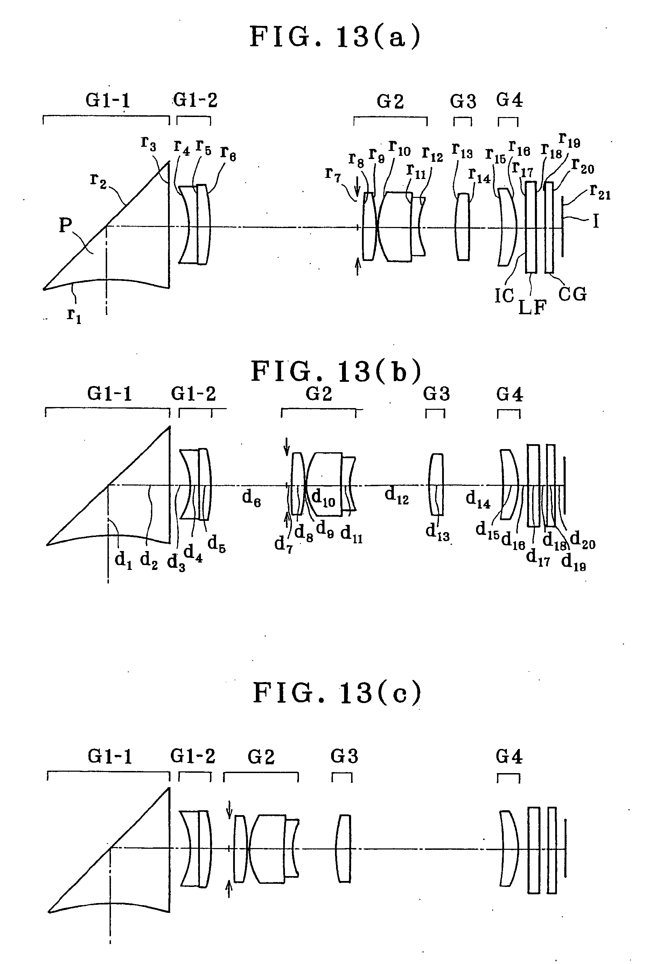

Sectional lens configurations of Examples 1 to 13 at the wide-angle end (a), in the intermediate state (b) and at the telephoto end (c) upon focused on an object point at infinity are shown in Figs. 1 to 13. Throughout Figs. 1 to 12, the first lens group is indicated by G1, a stop by S, the second lens group by G2, the third lens group by G3, the fourth lens group by G4, an optical low-pass filter by LF, a cover glass for an electronic image pickup device CCD by CG, and the image plane of CCD by I. A plane-parallel plate or the taken-apart optical path-bending prism in the first lens group is indicated by P. In Figs. 13(a), 13(b) and 13(c), the 1-1st lens group is given by G1-1, the 1-2nd lens group by G1-2, an optical path-bending prism by P, the second lens group by G2, the third lens group by G3, the fourth lens group by G4, a near-infrared cut coat surface by IC, an optical low-pass filter by LF, a cover glass for an electronic image pickup device CCD by CG, and the image plane of CCD by I. The near-infrared cut coat surface IC, optical low-pass filter LF and cover glass CG located in this order from the object side are fixedly located between the final lens group G4 and the image plane I. The maximum thickness of the optical low-pass filter LF used in these examples will be explained later. It is noted that instead of the near-infrared sharp cut coat, it is acceptable to use an optical low-pass filter LF coated directly with a near-infrared sharp cut coat, an infrared cut absorption filter or a transparent plane plate with a near-infrared sharp cut coat applied on its entrance surface.

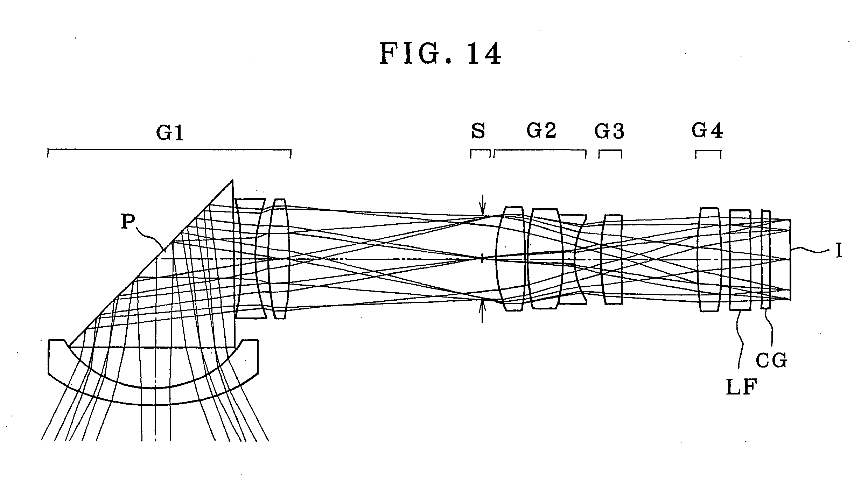

As shown typically in Fig. 14 that is an optical path diagram for Example 1 of the zoom lens upon focused on an infinite object point at the wide-angle end, the optical path-bending prism P is configured as a reflecting prism for bending the optical path through 90°. In Examples 1 to 13, the aspect ratio of the effective image pickup area is 3:4 and the optical path is bent in the lateral direction.

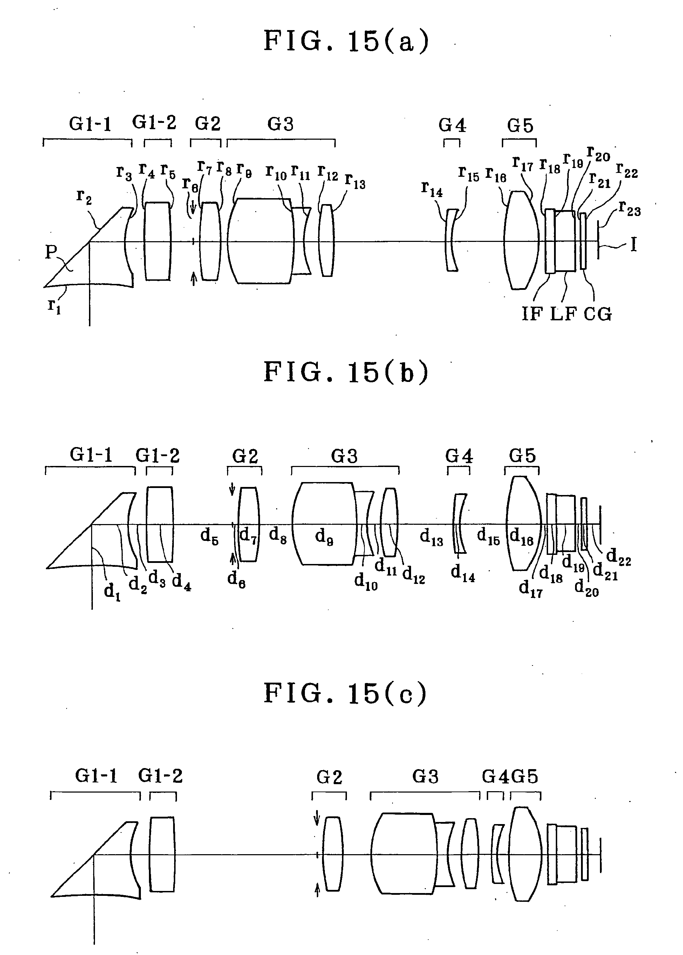

Sectional lens configurations of Examples 14 to 25 at the wide-angle end (a), in the intermediate state (b) and at the telephoto end (c) upon focused on an object point at infinity are shown in Figs. 15 to 26. Throughout those drawings, the first lens group is indicated by G1, the 1-1st lens group by G1-1, the 1-2nd lens group by G1-2, the second lens group by G2, the third lens group by G3, the fourth lens group by G4, an optical path-bending prism by P, an aperture stop by S (independent), a near-infrared cut filter by IF, a near-infrared cut coat surface by IC, a low-pass filter by LF, a cover glass for an electronic image pickup device CCD by CG, and the image plane of CCD by I. A plane-parallel plate or the taken-apart optical path-bending prism in the first lens group is indicated by P. The near-infrared cut filter IF, low-pass filter LF and cover glass CG or the near-infrared cut coat surface IC, low-pass filter LF and cover glass CG located in this order from the object side are fixedly located between the final lens group and the image plane I.


Example 1

As shown in Fig. 1(a), 1(b) and 1(c), Example 1 is directed to a zoom lens made up of a first lens group G1 consisting of a negative meniscus lens convex on its object side, an optical path-bending prism P, a double-concave lens and a double-convex positive lens, an aperture stop S, a second lens group G2 composed of a double-convex positive lens and a cemented lens consisting of a double-convex positive lens and a double-concave negative lens, a third lens group G3 consisting of one double-convex positive lens and a fourth lens group G4 consisting of one double-convex positive lens. Upon zooming the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the object side while the spacing between the second lens group G2 and the third lens group G3 becomes wide and then narrow. For focusing on a near distance subject, the third lens group G3 moves toward the object side.

Three aspheric surfaces are used; one at the image-side surface of the double-concave negative lens in the first lens group G1, one at the surface nearest to the object side in the second lens group G2 and one at the image-side surface of the positive lens in the fourth lens group G4.


Example 2

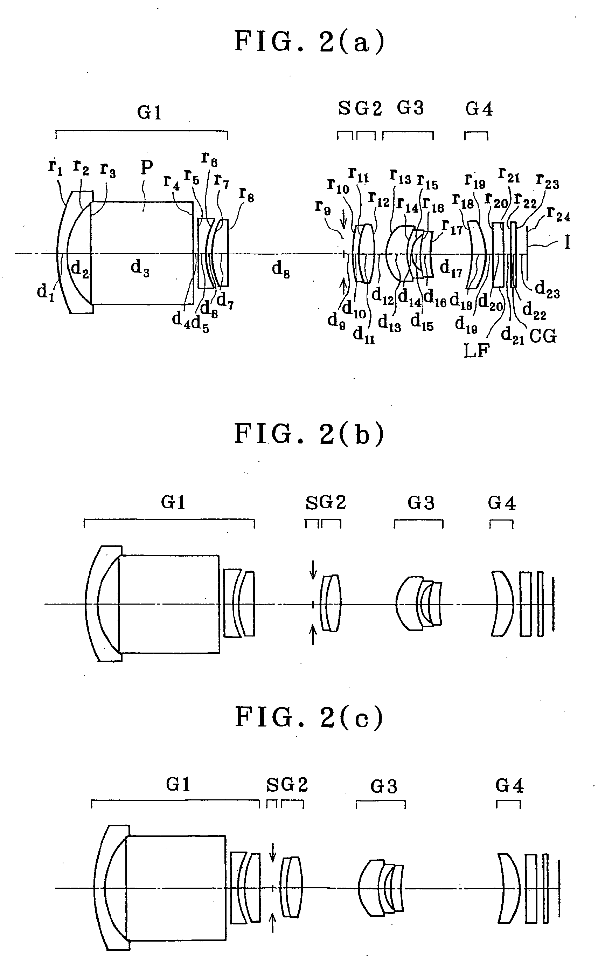

As shown in Figs. 2(a), 2(b) and 2(c), Example 2 is directed to a zoom lens made up of a first lens group G1 consisting of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a negative meniscus lens convex on its object side and a double-convex positive lens, a third lens group G3 composed of a cemented lens consisting of a positive meniscus lens convex on its object side and a negative meniscus lens convex on its object side and a positive meniscus lens convex on its object side, and a fourth lens group G4 composed of one positive meniscus lens convex on its image side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the object side while the spacing between the third and second lens groups G3 and G2 becomes wide. For focusing on a nearby subject, the third lens group G3 moves out toward the object side.

Three aspheric surfaces are used; one at the image-side surface of the negative meniscus lens located just after the optical path-bending prism P in the first lens group G1, one at the surface nearest to the object side in the third lens group G3, and one at the image-side surface of the positive meniscus lens in the fourth lens group G4.

Example 3

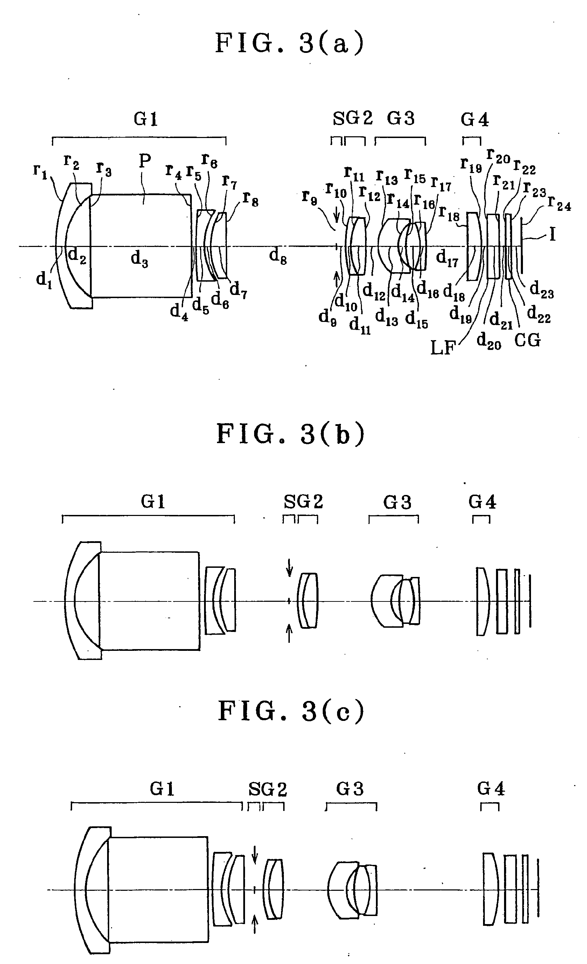

As shown in Figs. 3(a), 3(b) and 3(c), Example 3 is directed to a zoom lens made up of a first lens group G1 composed of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a negative meniscus lens convex on its object side and a double-convex positive lens, a third lens group G3 composed of a meniscus lens convex on its object side and a cemented lens consisting of a double-convex positive lens and a negative meniscus lens convex on its object side, and a fourth lens group G4 composed of one double-convex positive lens. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the object side while the spacing between the third and second lens groups G3 and G2 becomes wide and then narrow. For focusing on a nearby subject, the third lens group G3 moves toward the object side.
Three aspheric surfaces are used; one at the image-side surface of the negative meniscus lens located just after the optical path-bending prism P in the first lens group G1, one at the surface nearest to the object side in the third lens group G3 and one at the image-side surface of the double-convex positive lens in the fourth lens group G4.

Example 4

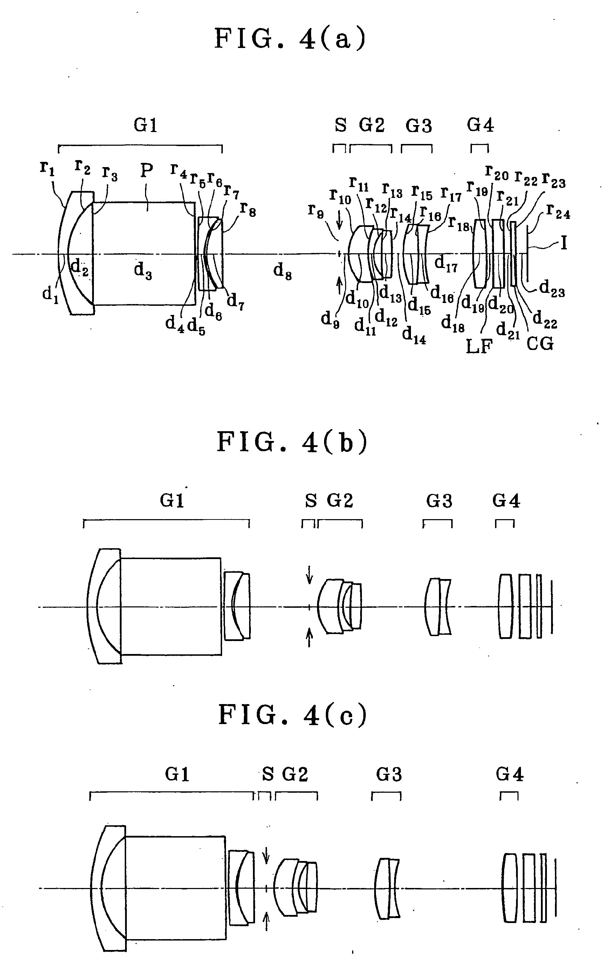

As shown in Figs. 4(a), 4(b) and 4(c), Example 4 is directed to a zoom lens made up of a first lens group G1 composed of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of a cemented lens consisting of a double-convex positive lens and a double-concave negative lens and a fourth lens group G4 composed of one double-convex positive lens. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the object side while the spacing between the third and second lens groups G3 and G2 becomes wide and then narrow. For focusing on a nearby subject, the third lens group G3 moves toward the object side.
Three aspheric surfaces are used; one at the image-side surface of the negative meniscus lens located just after the optical path-bending prism P in the first lens group G1, one at the surface nearest to the object side in the second lens group G2 and one at the object-side surface of the double-convex positive lens in the fourth lens group G4.

Example 5

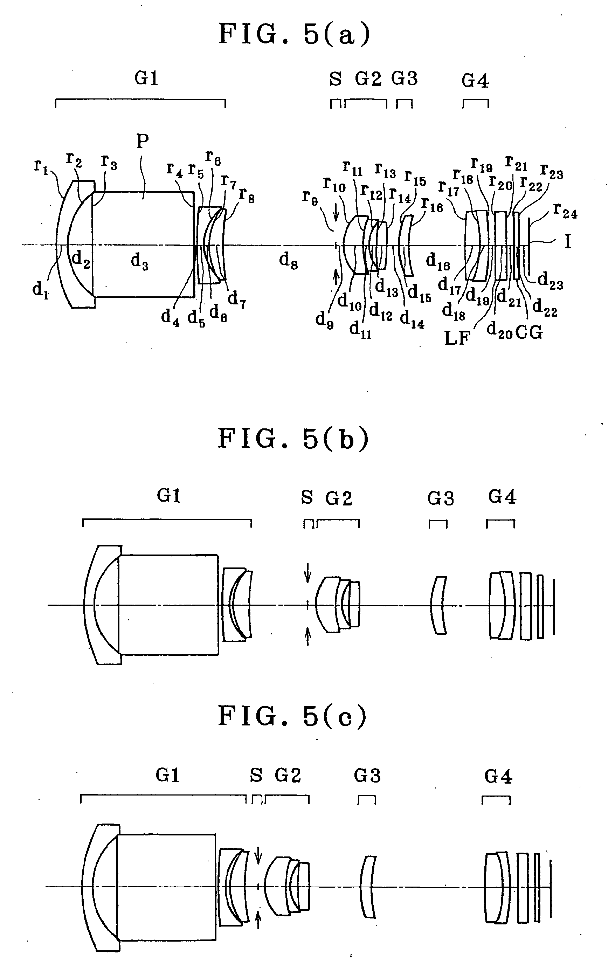

As shown in Figs. 5(a), 5(b) and 5(c), Example 5 is directed to a zoom lens made up of a first lens group G1 composed of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side, and a fourth lens group G4 composed of a cemented lens consisting of a double-convex positive lens and a negative meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.
Four aspheric surfaces are used; one at the image plane side-surface of the negative meniscus lens located just after the optical path-bending prism P in the first lens group G1, one at the surface nearest to the object side in the second lens group G2, one at the object-side surface of the positive meniscus lens in the third lens group G3 and one at the surface nearest to the object side in the fourth lens group G4.

Example 6

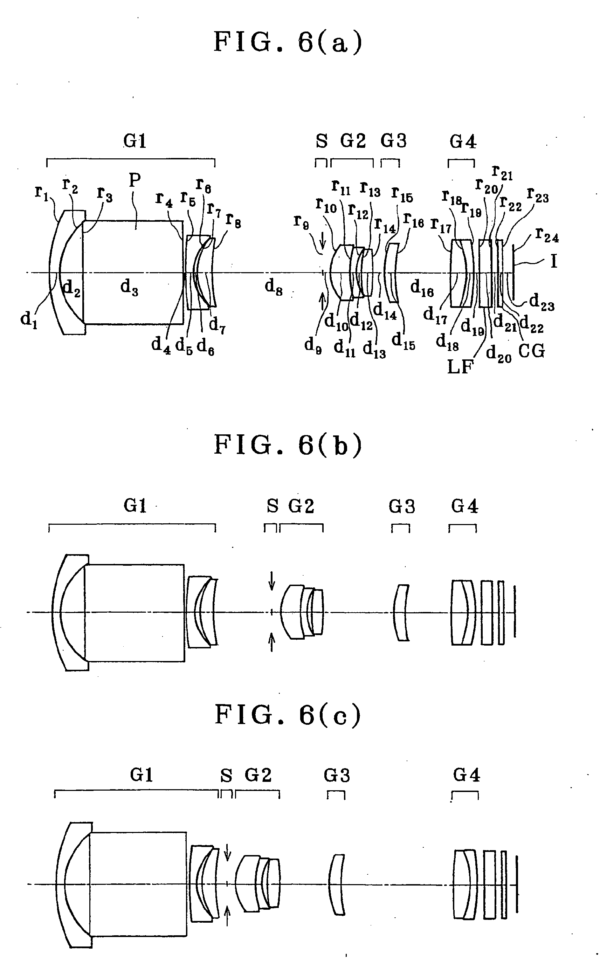

As shown in Figs. 6(a), 6(b) and 6(c), Example 6 is directed to a zoom lens made up of a first lens group G1 composed of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side, and a fourth lens group G4 composed of a cemented lens consisting of a double-convex positive lens and a negative meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Three-aspheric surfaces are used; one at the image plane side-surface of the negative meniscus lens located just after the optical path-bending prism P in the first lens group G1, one at the surface nearest to the object side in the second lens group G2, and one at the surface nearest to the object side in the fourth lens group G4.

Example 7

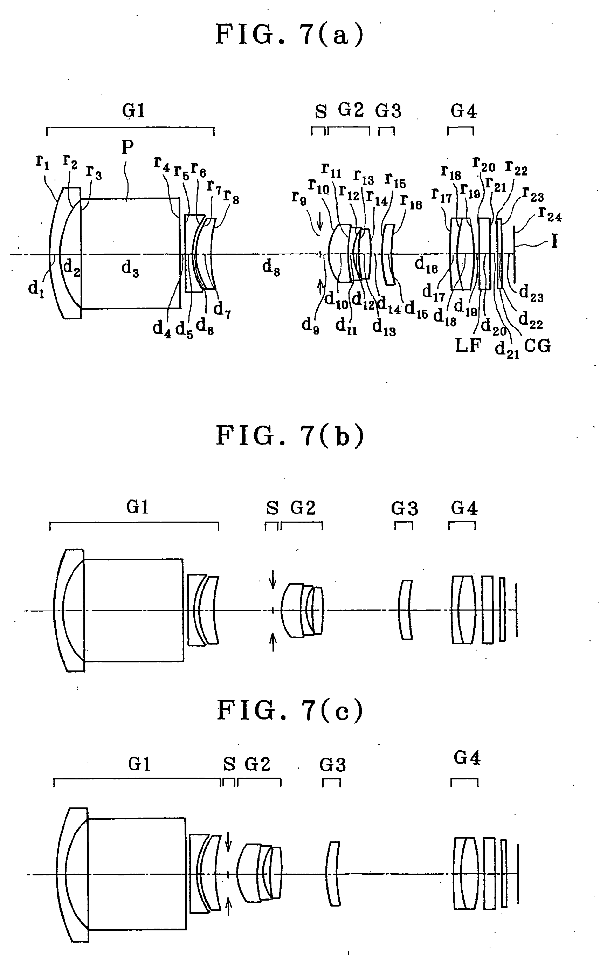

As shown in Figs. 7(a), 7(b) and 7(c), this example is directed to a zoom lens made up of a first lens group G1 composed of a negative meniscus lens convex on its object side, an optical path-bending prism P, a negative meniscus lens convex on its object side and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side and a fourth lens group G4 composed of a cemented lens consisting of a negative meniscus lens convex on its object side and a double-convex positive lens. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Three aspheric surfaces are used; one at the image plane side-surface of the negative meniscus lens nearest to the object side in the first lens group G1, one at the surface nearest to the object side in the second lens group G2, and one at the surface nearest to the image plane side surface in the fourth lens group G4.

Example 8

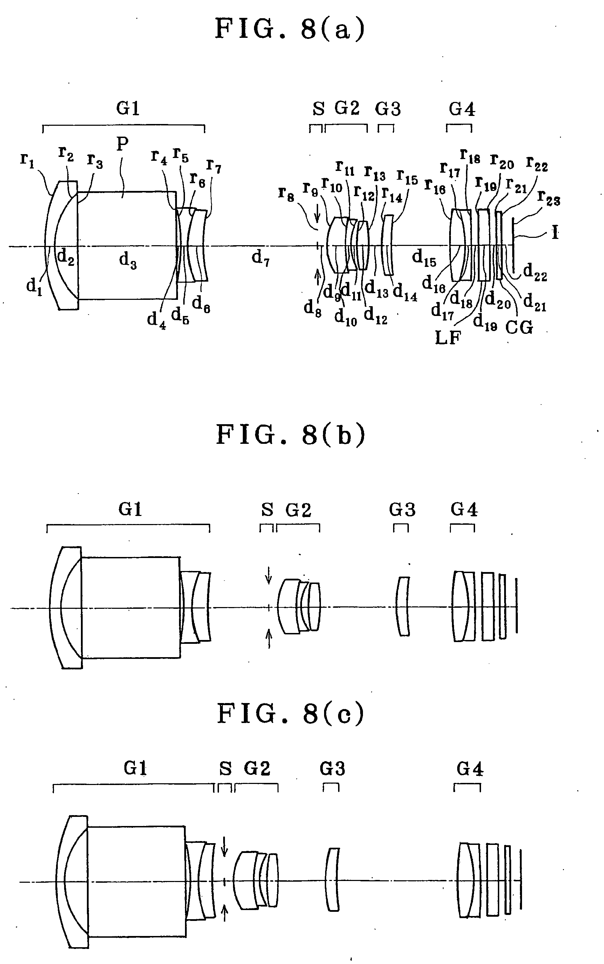

As shown in Figs. 8(a), 8(b) and 8(c), this example is directed to a zoom lens made up of a first lens group G1 composed of a negative meniscus lens convex on its object side, an optical path-bending prism P and a cemented lens consisting of a double-concave negative lens and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side and a fourth lens group G4 composed of a cemented lens consisting of a double-convex positive lens and a negative meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Three aspheric surfaces are used; one at the image plane side-surface of the negative meniscus lens in the first lens group G1, one at the surface nearest to the object side in the second lens group G2, and one at the surface nearest to the object side in the fourth lens group G4.

Example 9

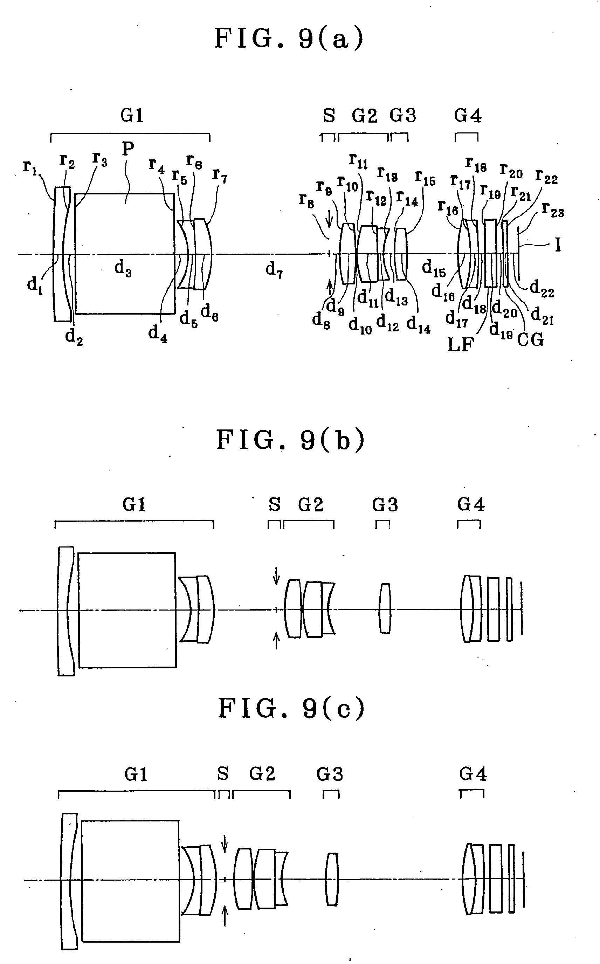

As shown in Figs. 9(a), 9(b) and 9(c), this example is directed to a zoom lens made up of a first lens group G1 composed of a negative meniscus lens convex on its object side, an optical path-bending prism P and a cemented lens consisting of a negative meniscus lens convex on its image plane side and a positive meniscus lens convex on its image plane side, an aperture stop S, a second lens group G2 composed of a double-convex positive lens and a cemented lens consisting of a planoconvex positive lens and a planoconcave negative lens, a third lens group G3 composed of one double-convex positive lens and a fourth lens group G4 composed of a cemented lens consisting of a double-convex positive lens and a negative meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the object side of the zoom lens while the spacing between the third and second lens groups G3 and G2 becomes wide and then narrow. For focusing on a nearby subject, the third lens group G3 moves toward the object side.

Three aspheric surfaces are used; one at the image plane side-surface of the negative meniscus lens nearest to the object side in the first lens group G1, one at the surface nearest to the object side in the second lens group G2, and one at the surface nearest to the object side in the fourth lens group G4.

Example 10

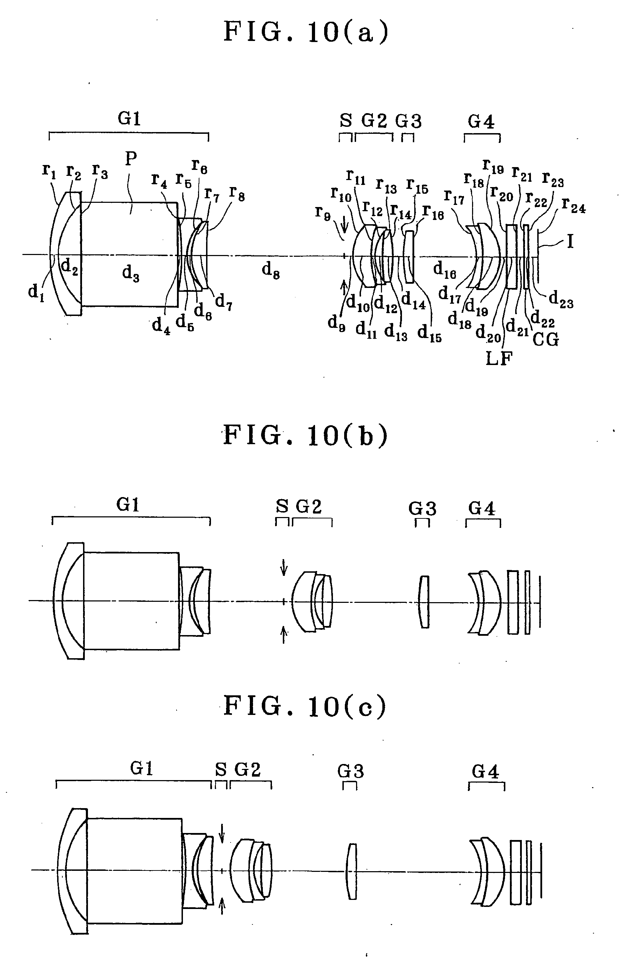

As shown in Figs. 10(a), 10(b) and 10(c), the instant example is directed to a zoom lens made up of a first lens group G1 composed of a negative meniscus lens convex on its object side, an optical path-bending prism P, a double-concave lens and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side and a fourth lens group G4 composed of a cemented lens consisting of a negative meniscus lens convex on its image plane side and a positive meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Four aspheric surfaces are used; one at the image plane side-surface of the double-concave negative lens located just after the optical path-bending prism P in the first lens group G1, one at the surface nearest to the object side in the second lens group G2, one at the object-side surface of the cemented lens in the third lens group G3 and one at the surface nearest to the image plane side in the fourth lens group G4.

Example 11

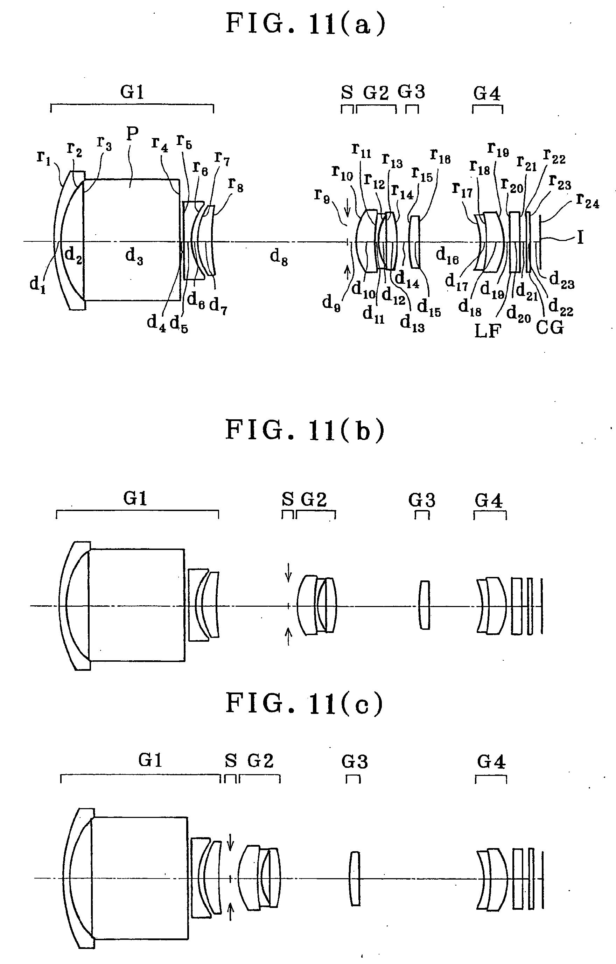

As shown in Figs. 11(a), 11(b) and 11(c), the instant example is directed to a zoom lens made up of a first lens group G1 composed of a negative meniscus lens convex on its object side, an optical path-bending prism P, a double-concave negative lens and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side and a fourth lens group G4 composed of a cemented lens consisting of a negative meniscus lens convex on its image plane side and a positive meniscus lens convex on its image plane side. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Four aspheric surfaces are used; two at both surfaces of the double-concave negative lens located just after the optical path-bending prism P in the first lens group G1, one at the surface nearest to the object side in the second lens group G2 and one at the surface nearest to the image plane side in the fourth lens group G4.

Example 12

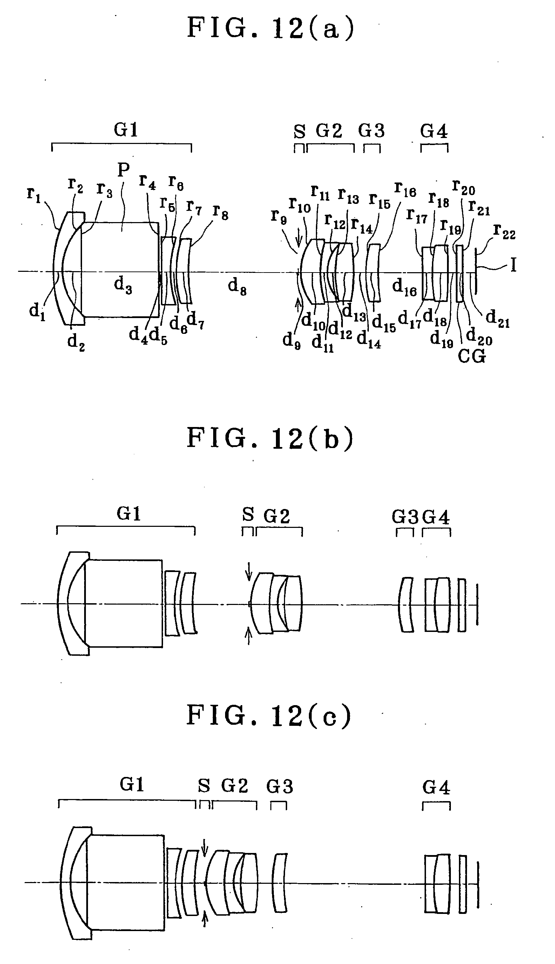

As shown in Figs. 12(a), 12(b) and 12(c), the instant example is directed to a zoom lens made up of a first lens group G1 composed of a negative meniscus lens convex on its object side, an optical path-bending prism P, a double-concave negative lens and a positive meniscus lens convex on its object side, an aperture stop S, a second lens group G2 composed of a cemented lens consisting of a positive meniscus lens convex on its object side and a negative meniscus lens convex on its object side and a double-convex positive lens, a third lens group G3 composed of one positive meniscus lens convex on its object side and a fourth lens group G4 composed of a cemented lens consisting of a negative meniscus lens convex on its object side and a double-convex positive lens. Upon zooming from the wide-angle end to the telephoto end of the zoom lens, the first lens group G1 and the fourth lens group G4 remain fixed, the second lens group G2 moves together with the aperture stop S toward the object side of the zoom lens, and the third lens group G3 moves toward the image plane side of the zoom lens while the spacing between the third and second lens groups G3 and G2 becomes wide, whereupon it moves toward the object side while that spacing becomes narrow. For focusing on a nearby subject, the third lens group G3 moves toward the object side.

Three aspheric surfaces are used; one at the image plane side-surface of the negative meniscus lens in the first lens group G1, one at the surface nearest to the object side in the second lens group G2 and one at the surface nearest to the image plane side in the fourth lens group G4.

In Examples 1 to 12, the first lens group G1 corresponds to the lens group A in the present invention and the second lens group G2 to the lens group B in the present invention.

Example 13

As shown in Figs. 13(a), 13(b) and 13(c), the instant example is directed to a zoom lens made up of a 1-1st lens group G1-1 composed of an optical path-bending prism P equivalent to a planoconcave lens, a 1-2nd lens group G1-2 composed of a cemented lens consisting of a negative meniscus lens concave on its object side and a positive meniscus lens concave on its object side, a second lens group G2 composed of an aperture stop, a double-convex positive lens and a cemented lens consisting of a positive meniscus lens convex on its object side and a negative meniscus lens convex on its object side, a third lens group G3 composed of a double-convex positive lens and a fourth lens group G4 composed of a positive meniscus lens convex on its image plane side. Upon zooming from the wide-angle end to the telephoto end of the zoom lens, the second lens group G2 and the third lens group G3 move toward the object side of the zoom lens while the spacing between them becomes wide and then narrow.

Three aspheric surfaces are used; one at the object-side surface of the optical path-bending prism P in the 1-1st lens group G1-1, one at the surface nearest to the object side in the second lens group G2 and one at the image plane side-surface of the positive meniscus lens in the fourth lens group G4.

In Example 13, the 1-1st and 1-2nd lens groups G1-1 and G1-2 correspond to the lens group A in the present invention and the second lens group G2 to the lens group B in the present invention.

Example 13 is also directed to the 6th zoom lens according to the present invention, wherein $\beta_{Rt}$=-1.36309. The 6th zoom lens of the present invention also includes an arrangement wherein the first lens group consists of an optical path-bending prism A1 having a concave transmitting surface directed toward the object side of the zoom lens and a subgroup A2 comprising at least a positive lens.

Example 14

As shown in Fig. 15, Example 14 is directed to an optical path bending zoom optical system made up of a 1-1st lens group G1-1 consisting of an optical path bending prism P equivalent to a double-concave negative lens, a 1-2nd lens group G1-2 consisting of a double-convex positive lens, a second lens group G1 consisting of an aperture stop and a double-convex positive lens, a third lens group G3 consisting of a cemented lens composed of a double-convex positive lens and a double-concave negative lens and a double-convex positive lens, a fourth lens group G4 consisting of a negative meniscus lens convex on its object side, and a fifth lens group G5 consisting of a double-convex positive lens. For zooming from the wide-angle end to the telephoto end of the zoom optical system, the second lens group G2 and the third lens group G3 move toward the object side while the spacing between them becomes wide and then narrow, and the fourth lens group G4 moves toward the object side while the spacing between it and the third lens group G3 becomes wide.

Four aspheric surfaces are used, one at the object-side surface of the double-convex positive lens in the 1-2nd lens group G1-2, one at the object-side surface of the double-convex positive lens in the second lens group G2, one at the image-side surface of the negative meniscus lens in the fourth lens group G4, and one at the image-side surface of the double-convex positive lens in the fifth lens group G5.

Example 15

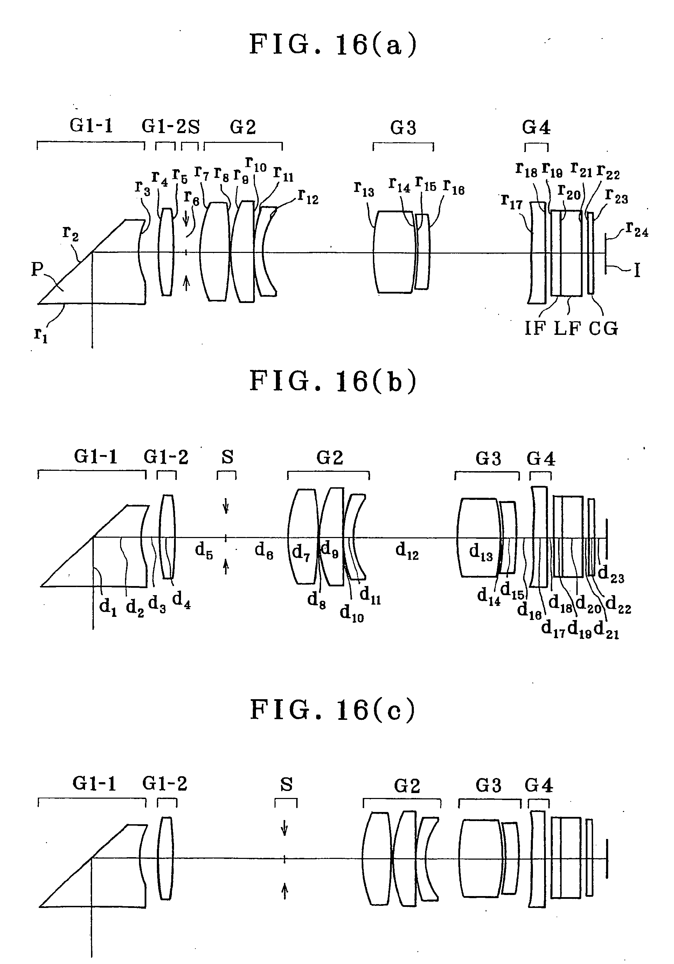

As shown in Fig. 16, Example 15 is directed to an optical path bending zoom optical system made up of a 1-1st lens group G1-1 consisting of an optical path bending prism P equivalent to a double-concave negative lens, a 1-2nd lens group G1-2 consisting of a double-convex positive lens, an independently moving aperture stop S, a second lens group G2 consisting of a double-convex positive lens, a positive meniscus lens convex on its object side and a negative meniscus lens convex on its object side, a third lens group G3 consisting of a double-convex positive lens and a negative meniscus lens convex on its image side, and a fourth lens group G4 consisting of a positive meniscus lens convex on its object side. For zooming from the wide-angle end to the telephoto end of the zoom optical system, the second lens group G2 and the third lens group G3 move toward the object side while the spacing between them becomes wide. The aperture stop S interposed between the 1-2nd lens group G1-2 and the second lens group G2, too, moves toward the object side while the spacing between the 1-2nd lens group G1-2 and the fourth lens group G4 becomes narrow.

Three aspheric surfaces are used, one at the object-side surface of the double-convex positive lens in the 1-2nd lens group G1-2, one at the surface nearest to the object side in the second lens group G2, and one at the object-side surface of the positive meniscus lens in the fourth lens group G4.

Example 16

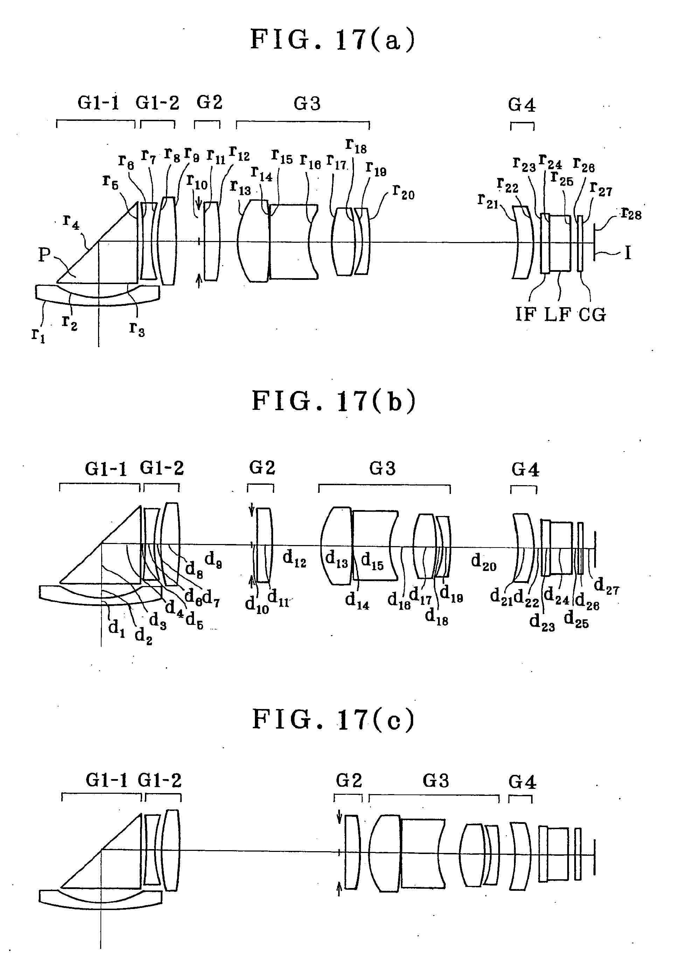

As shown in Fig. 17, Example 16 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a double-concave negative lens and a double-convex positive lens, a second lens group G2 consisting of an aperture stop and a double-convex positive lens, a third lens group G3 consisting of a double-convex positive lens, a negative meniscus lens convex on its object side, a double-convex positive lens and a negative meniscus lens convex on its image side, and a fourth lens group G4 consisting of a positive meniscus lens convex on its image side. For zooming from the wide-angle end to the telephoto end of the zoom optical system, the second lens group G2 and the third lens group G3 move toward the object side of the zoom optical system while the spacing between them becomes wide and then narrow.

Three aspheric surfaces are used, one at the object-side surface of the double-convex positive lens in the 1-2nd group G1-2, one at the surface nearest to the object side in the third lens group G3, and one at the object-side surface of the positive meniscus lens in the fourth lens group G4.

Example 17

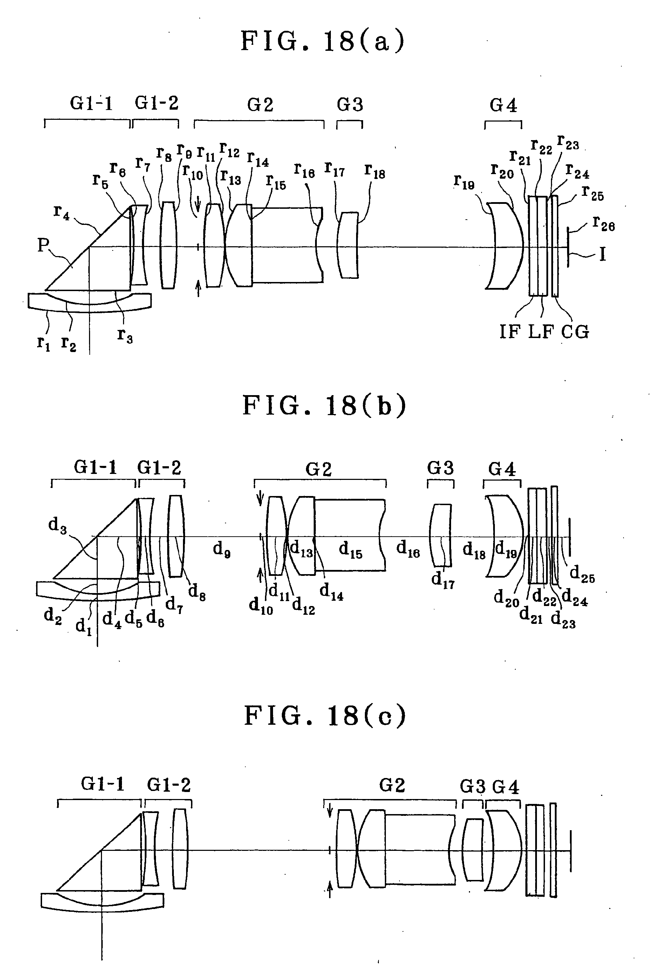

As shown in Fig. 18, Example 17 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a double-concave negative lens and a double-convex positive lens, a second lens group G2 consisting of an aperture stop, a double-convex positive lens, a double-convex positive lens and a negative meniscus lens convex on its object side, a third lens group G3 consisting of a positive meniscus lens convex on its object side, and a fourth lens group G4 consisting of a positive meniscus lens convex on its image side. For zooming from the wide-angle end to the telephoto end of the zoom optical system, the second lens group G2 and the third lens group G3 move toward the object side of the zoom optical system while the spacing between them becomes wide and then narrow.

Three aspheric surfaces are used, one at the object-side surface of the double-convex positive lens in the 1-2nd lens group G1-2, one at the object-side surface of the double-convex positive lens located after the stop in the second lens group G2, and one at the object-side surface of the positive meniscus lens in the second lens group G4.

Example 18

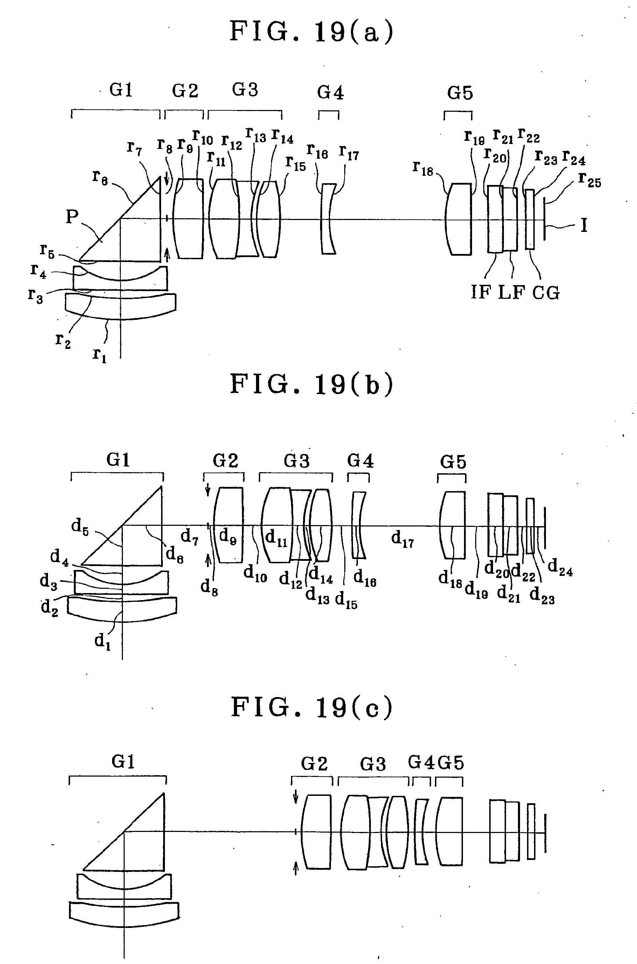

As shown in Fig. 19, Example 18 is directed to an optical path bending zoom optical system made up of a first lens group G1 consisting of a positive meniscus lens convex on its object side, a negative meniscus lens convex on its object side and an optical path bending prism P equivalent to a plane-parallel plate, a second lens group G2 consisting of an aperture stop and a double-convex positive lens, a third lens group G3 consisting of a cemented lens consisting of a double-convex positive lens and a double-concave negative lens and a double-convex positive lens, a fourth lens group G4 consisting of a negative meniscus lens convex on its object side, and a fifth lens group G5 consisting of a positive meniscus lens convex on its object side. For zooming from the wide-angle end to the telephoto end of the zoom optical system, the second lens group G2 and the third lens group G3 move toward the object side of the zoom optical system while the spacing between them becomes wide and then narrow, the third lens group G3 and the fourth lens group G4 move toward the object side while the spacing between them becomes wide, and the fifth lens group moves slightly toward the image side of the zoom optical system.

Four aspheric surfaces are used, one at the image-side surface of the double-convex positive lens in the first lens group G1, one at the object-side surface of the double-convex positive lens in the second lens group G2, one at the image-side surface of the negative meniscus lens in the fourth lens group G4 and one at the image-side surface of the positive meniscus lens in the fifth lens group G5.

Example 19

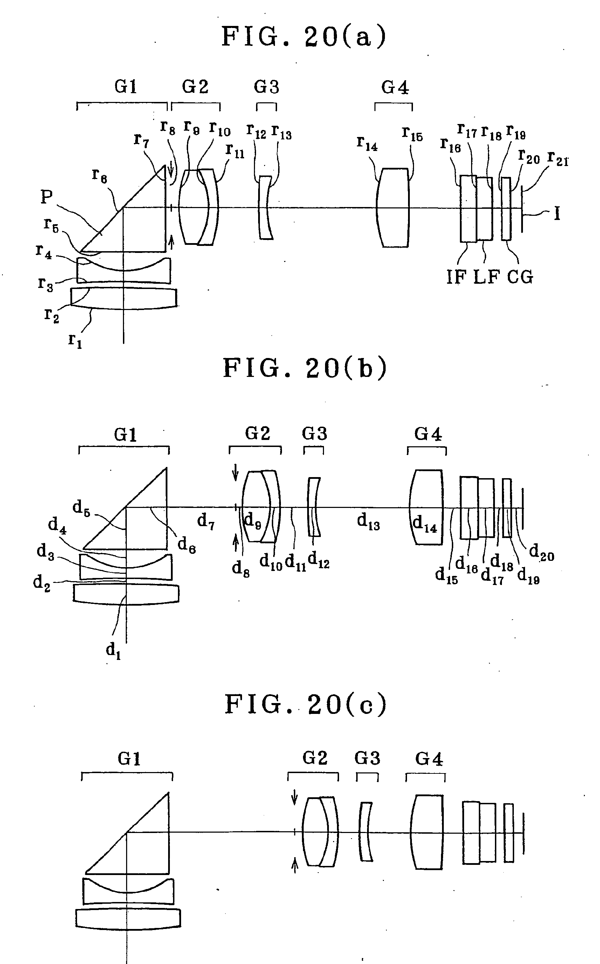

As shown in Fig. 20, Example 19 is directed to an optical path bending zoom optical system made up of a first lens group G1 consisting of a double-convex positive lens, a double-concave negative lens and an optical path bending prism P equivalent to a plane-parallel plate, a second lens group G2 consisting of an aperture stop and a cemented lens consisting of a double-convex positive lens and a negative meniscus lens convex on its image side, a third lens group G3 consisting of a negative meniscus lens convex on its object side, and a fourth lens group G4 consisting of a double-convex positive lens. For zooming from the wide-angle end to the telephoto end of the zoom optical system, the second lens group G2 and the third lens group G3 move toward the object side of the zoom optical system while the spacing between them becomes wide, and the fourth lens group G4 moves slightly toward the object side on the telephoto side while it moves in a convex locus toward the image side of the zoom lens optical system.
Three aspheric surfaces are used, one at the object-side surface of the double-concave negative lens in the first lens group G1, one at the surface nearest to the object side in the second lens group G2 and one at the image-side surface of the negative meniscus lens in the third lens group G3.

Example 20

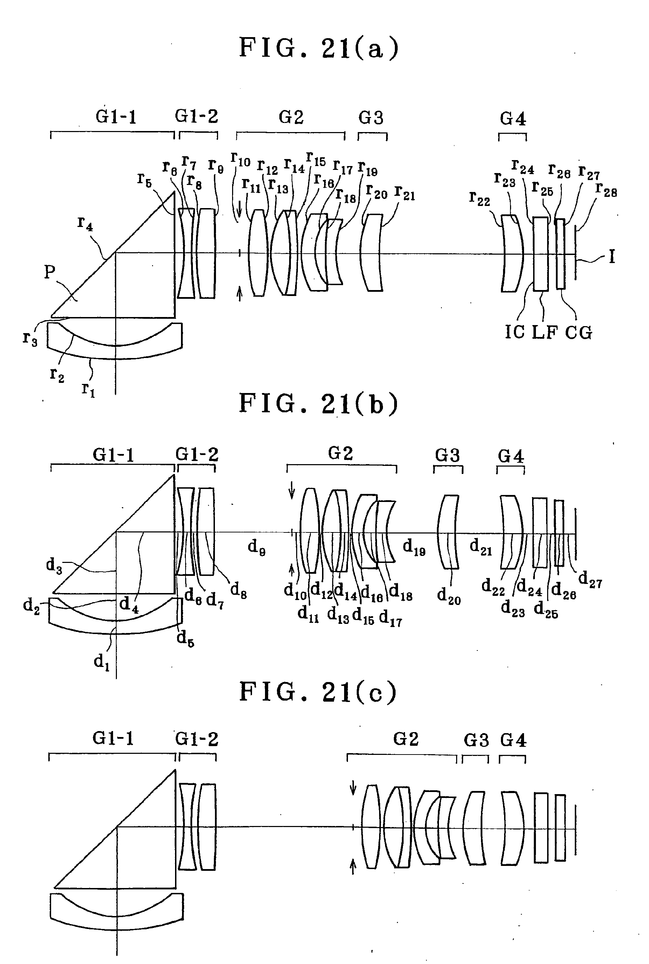

As shown in Fig. 21, Example 20 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a double-concave positive lens and a double-convex positive lens, a second lens group G2 consisting of an aperture stop, a double-convex positive lens, a cemented lens composed of a double-convex positive lens and a negative meniscus lens convex on its image side, a third lens group G3 consisting of a positive meniscus lens convex on its image side, and a fourth lens group G4 consisting of a positive meniscus lens convex on its image side. For zooming from the wide-angle end to the telephoto end of the zoom optical system, the second lens group G2 and the third lens group G3 move toward the object side of the zoom optical system while the spacing between them becomes wide and then narrow.
Three aspheric surfaces are used, one at the image-side surface of the negative meniscus lens in the 1-1st lens group G1-1, one at the surface nearest to the object side in the second lens group G2 and one at the object-side surface of the positive meniscus lens in the fourth lens group G4.

Example 21

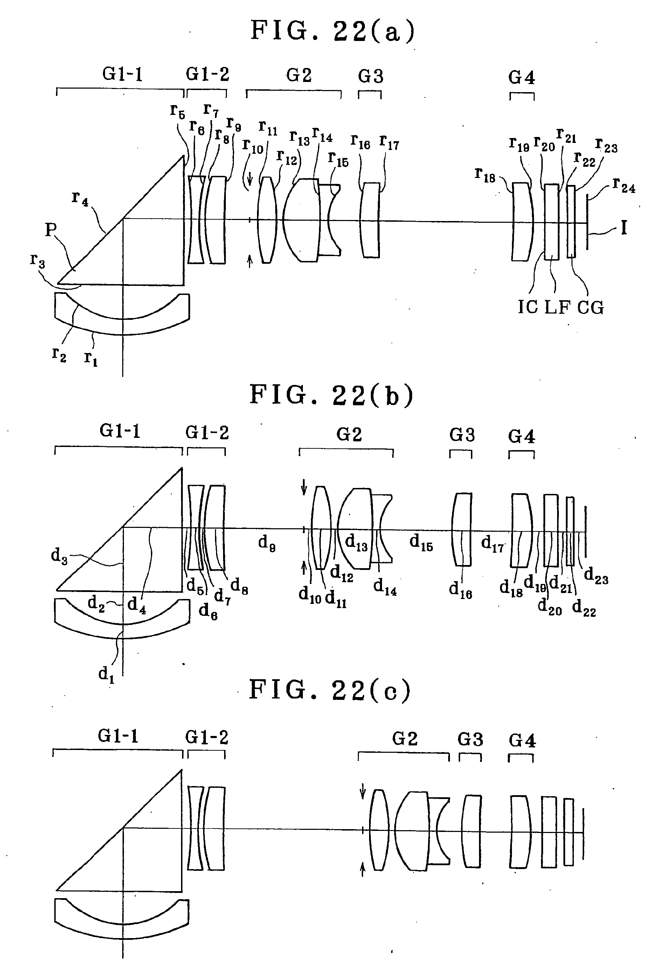

As shown in Fig. 22, Example 21 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a double-concave negative lens and a positive meniscus lens convex on its object side, a second lens group G2 consisting of an aperture stop, a double-convex positive lens and a cemented lens composed of a double-convex positive lens and a double-concave negative lens, a third lens group G3 consisting of a positive meniscus lens convex on its image side, and a fourth lens group G4 consisting of a positive meniscus lens convex on its image side. For zooming from the wide-angle end to the telephoto end of the zoom optical system, the second lens group G2 and the third lens group G3 move toward the object side of the zoom optical system while the spacing between them becomes wide and then narrow.
Three aspheric surfaces are used, one at the object-side surface of the negative meniscus lens in the 1-1st lens group G1-1, the surface nearest to the object side in the second lens group G2 and one at the image-side surface of the positive meniscus lens in the fourth lens group G4.

Example 22

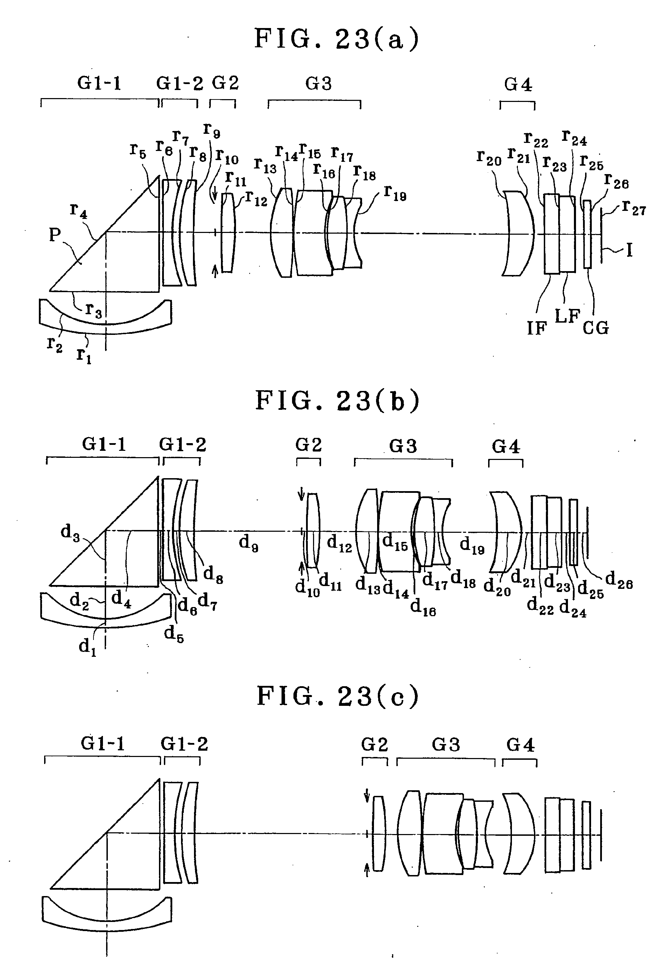

As shown in Fig. 23, Example 22 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a negative meniscus lens convex on its object side and a positive meniscus lens convex on its object side, a second lens group G2 consisting of an aperture stop and a double-convex positive lens, a third lens group G3 consisting of a double-convex positive lens, a negative meniscus lens convex on its object side and a cemented composed of a double-convex positive lens and a double-concave negative lens, and a fourth lens group G4 consisting of a positive meniscus lens convex on its image side. For zooming from the wide-angle end to the telephoto end of the zoom optical system, the second lens group G2 and the third lens group G3 move toward the object side while the spacing between them becomes wide and then narrow.
Three aspheric surfaces are used, one at the image-side surface of the negative meniscus lens in the 1-2nd lens group G1-2, one at the surface nearest to the object side in the third lens group G3 and one at the object-side surface of the positive meniscus lens in the fourth lens group G4.

Example 23

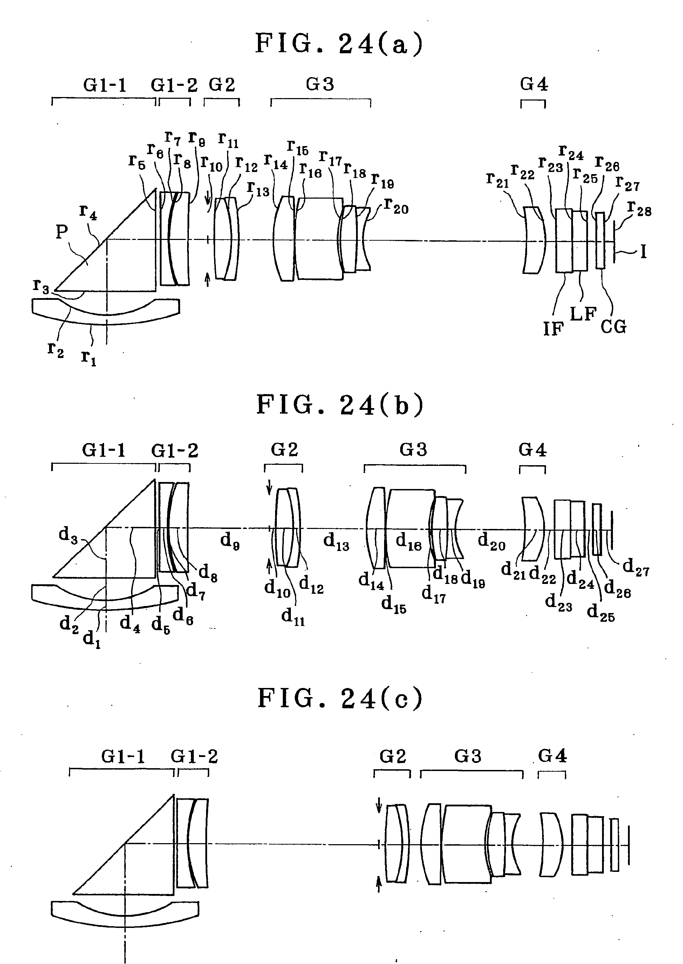

As shown in Fig. 24, Example 23 is directed to an optical path bending zoom optical system made up of a 1-1st lens group G1-1 consisting of a negative meniscus lens convex on its object side and an optical path bending prism P equivalent to a plane-parallel plate, a 1-2nd lens group G1-2 consisting of a negative meniscus lens convex on its object side and a positive meniscus lens convex on its object side, a second lens group G2 consisting of an aperture stop and a cemented lens composed of a double-convex positive lens and a negative meniscus lens convex on its image plane side, a third lens group G3 consisting of a positive meniscus lens convex on its object side, a negative meniscus lens convex on its object side and a doublet composed of a double-convex positive lens and a double-concave negative lens, and a fourth lens group G4 consisting of a positive meniscus lens convex on its image plane side. For zooming from the wide-angle end to the telephoto end of the zoom optical system, the second lens group G2 and the third lens group G3 move toward the object side of the zoom lens system while the spacing between them becomes wide and then narrow.

Three aspheric surfaces are used, one at the image plane side-surface of the negative meniscus lens in the 1-2nd lens group G1-2, one at the surface of the third lens group G3 located nearest to its object side and one at the object-side surface of the positive meniscus lens in the fourth lens group G4.

Example 24

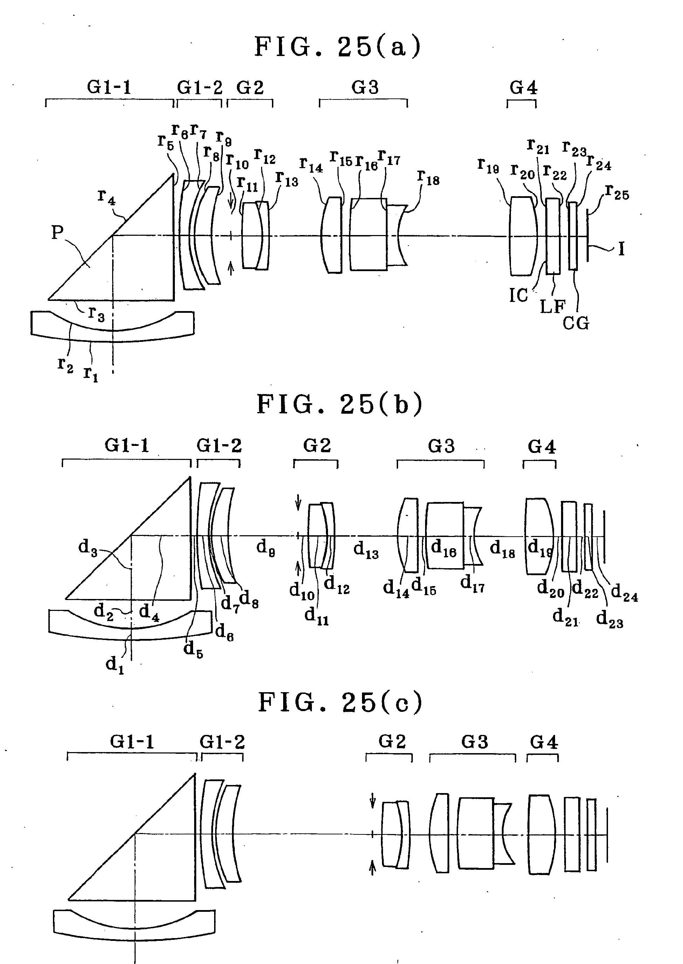

As shown in Fig. 25, Example 24 is directed to an optical path bending zoom optical system made up of a 1-1st lens group G1-1 consisting of a negative meniscus lens convex on its object side and an optical path bending prism P equivalent to a plane-parallel plate, a 1-2nd lens group consisting of a negative meniscus lens convex on its object side and a positive meniscus lens convex on its object side, a second lens group G2 consisting of an aperture stop and a cemented lens composed of a double-convex positive lens and a negative meniscus lens convex on its image plane side, a third lens group G3 consisting of a positive meniscus lens convex on its object side and a cemented lens composed of a planoconvex positive lens and a planoconcave negative lens, and a fourth lens group G4 consisting of a double-convex positive lens. For zooming from the wide-angle end to the telephoto end of the zoom optical system, the second lens group G2 and the third lens group G3 move toward the object side of the zoom optical system while the spacing between them becomes wide and then narrow.

Three aspheric surfaces are used, one at the image plane side-surface of the negative meniscus lens in the 1-2nd lens group G1-2, one at the object-side surface of the positive meniscus lens in the third lens group G3 and one at the image plane side-surface of the double-convex positive lens in the fourth lens group G4.

Example 25

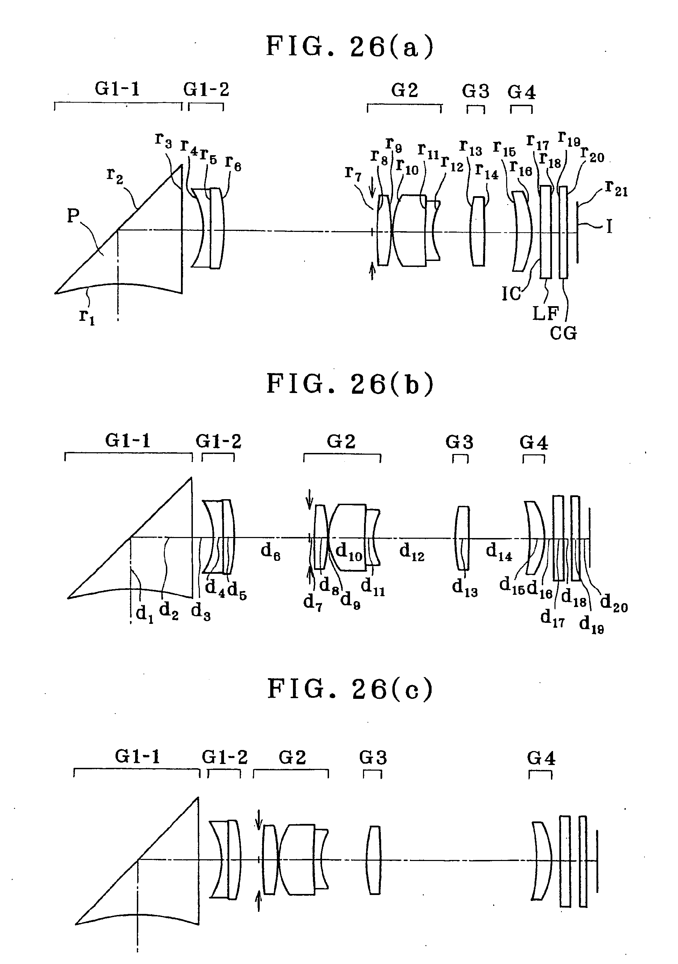

As shown in Fig. 26, Example 25 is directed to an optical path bending zoom optical system made up of a 1-1st lens group G1-1 consisting of an optical path bending prism P equivalent to a planoconcave negative lens, a 1-2nd lens group G1-2 consisting of a cemented lens composed of a negative meniscus lens concave on its object side and a positive meniscus lens concave on its object side, a second lens group G2 consisting of a positive meniscus lens convex on its object side and a negative meniscus lens convex on its object side, a third lens group G3 consisting of a double-convex positive lens, and a fourth lens group G4 consisting of a positive meniscus lens convex on its image plane side. For zooming from the wide-angle end to the telephoto end of the zoom optical system, the second lens group G2 and the third lens group G3 move toward the object side of the zoom optical system while the spacing between them becomes wide and then narrow.

Three aspheric surfaces are used, one at the object-side surface of the optical path bending prism P in the 1-1st lens group G1-1, one at the surface of the second lens group G2 located nearest to its object side and one at the image plane side-surface of the positive meniscus lens in the fourth lens group G4.

Set out below are the numerical data on each example. Symbols used hereinafter but not hereinbefore have the following meanings:

    f: focal length of the zoom optical system,
    $2\omega$: angle of view,
    $F_{NO}$: F-number,
    WE: wide-angle end,
    ST: standard or intermediate state,
    TE: telephoto end,
    $r_1$, $r_2$, $\cdots$: radius of curvature of each lens surface,

$d_1, d_2, \cdots$: spacing between adjacent lens surfaces,
$n_{d1}, n_{d2}, \cdots$: d-line refractive index of each lens, and
$v_{d1}, v_{d2}, \cdots$: Abbe number of each lens.

Here let x be an optical axis on condition that the direction of propagation of light is positive and y be a direction orthogonal to the optical axis. Then, aspheric configuration is given by

$$x = (y^2/r) / [1 + \{1 - (K+1)(y/r)^2\}^{1/2}] + A_4 y^4 + A_6 y^6 + A_8 y^8 + A_{10} y^{10}$$

where r is a paraxial radius of curvature, K is a conical coefficient, and $A_4$, $A_6$, $A_8$ and $A_{10}$ are the fourth, sixth, eighth and tenth aspheric coefficients, respectively.

Example 1

| | | | |
|---|---|---|---|
| $r_1$ = 14. 8444 | $d_1$ = 1.2000 | $n_{d1}$ =1.80610 | $v_{d1}$ =40.92 |
| $r_2$ = 7. 9462 | $d_2$ = 2. 9000 | | |
| $r_3$ = ∞ | $d_3$ = 12.5000 | $n_{d2}$ =1.78590 | $v_{d2}$ =44.20 |
| $r_4$ = ∞ | $d_4$ = 0.4100 | | |
| $r_5$ = -29.2456 | $d_5$ = 1.0000 | $n_{d3}$ =1.80610 | $v_{d3}$ =40.92 |
| $r_6$ = 9.2661(Aspheric) | $d_6$ = 1. 0000 | | |
| $r_7$ = 15.5357 | $d_7$ = 1.8200 | $n_{d4}$ =1.71736 | $v_{d4}$ =29.52 |
| $r_8$ = -23.5495 | $d_8$ =(Variable) | | |
| $r_9$ = ∞ (Stop) | $d_9$ = 1.0000 | | |
| $r_{10}$= 8.5761(Aspheric) | $d_{10}$= 2.3000 | $n_{d5}$ =1.80610 | $v_{d5}$ =40.92 |
| $r_{11}$= -36.3441 | $d_{11}$ = 0.1500 | | |
| $r_{12}$= 15. 2953 | $d_{12}$= 2.7000 | $n_{d6}$ =1.69350 | $v_{d6}$ =53.21 |
| $r_{13}$= -15.0000 | $d_{13}$= 0.8000 | $n_{d7}$ =1.80518 | $v_{d7}$ =25.42 |
| $r_{14}$= 5.3453 | $d_{14}$=(Variable) | | |
| $r_{15}$= 16.7201 | $d_{15}$= 1.6000 | $n_{d8}$ =1.48749 | $v_{d8}$ =70.23 |
| $r_{16}$= -486.1483 | $d_{16}$=(Variable) | | |
| $r_{17}$= 28.4526 | $d_{17}$= 1.7000 | $n_{d9}$ =1.58313 | $v_{d9}$ =59.38 |
| $r_{18}$= -34. 4702 (Aspheric) | $d_{18}$= 0.6600 | | |
| $r_{19}$= ∞ | $d_{19}$= 1. 4400 | $n_{d10}$=1.54771 | $vd_{10}$=62.84 |
| $r_{20}$= ∞ | $d_{20}$= 0.8000 | | |
| $r_{21}$= ∞ | $d_{21}$= 0.6000 | $n_{d11}$=1.51633 | $v_{d11}$=64.14 |
| $r_{22}$= ∞ | $d_{22}$= 1. 3598 | | |
| $r_{23}$= ∞ (Image Plane) | | | |

Aspherical Coefficients

6 th surface
K = 0
$A_4$ =-3. 5636 $\times 10^{-4}$
$A_6$ = 5.2749 $\times 10^{-6}$
$A_8$ =-2.9541 $\times 10^{-7}$
$A_{10}$= 5.5683 $\times 10^{-9}$
1 0 th surface
K = 0
$A_4$ =-2.3319 $\times 10^{-4}$
$A_6$ =-9.0916 $\times 10^{-7}$

$A_8 = -3.8758 \times 10^{-8}$
$A_{10} = 0.0000$
1 8 th surface
$K = 0$
$A_4 = 4.8568 \times 10^{-4}$
$A_6 = -3.3258 \times 10^{-5}$
$A_8 = 1.7328 \times 10^{-6}$
$A_{10} = -3.3044 \times 10^{-8}$

Zooming Data ($\infty$)

|  | WE | ST | TE |
|---|---|---|---|
| f (mm) | 6.00491 | 9.33131 | 14.49908 |
| $F_{NO}$ | 2. 8494 | 3. 6391 | 4.5331 |
| $2\omega$ (°) | 32.7 | 21.4 | 13.9 |
| $d_8$ | 14.59760 | 7.77126 | 1.49983 |
| $d_{14}$ | 1.99990 | 7.34104 | 5.91654 |
| $d_{16}$ | 5.46534 | 6.96338 | 14.64643 |

Example 2

| $r_1$ = 18.3518 | $d_1$ = 1. 2000 | $n_{d1}$ =1. 78590 | $\nu_{d1}$ =44.20 |
|---|---|---|---|
| $r_2$ = 8. 4466 | $d_2$ = 2. 9000 |  |  |
| $r_3$ = $\infty$ | $d_3$ = 12. 5000 | $n_{d2}$ =1. 78590 | $\nu_{d2}$ =44. 20 |
| $r_4$ = $\infty$ | $d_4$ = 0. 5000 |  |  |
| $r_5$ = 1113.2775 | $d_5$ = 1.0000 | $n_{d3}$ =1. 74320 | $\nu_{d3}$ =49. 34 |
| $r_6$ = 8. 4738 (Aspheric) | $d_6$ = 0. 8000 |  |  |
| $r_7$ = 10.8733 | $d_7$ = 2. 0000 | $n_{d4}$ =1.72825 | $\nu_{d4}$ =28. 46 |
| $r_8$ = 156.2997 | $d_8$ =(Variable) |  |  |
| $r_9$ = $\infty$ (Stop) | $d_9$ = 1. 0000 |  |  |
| $r_{10}$= 17.7870 | $d_{10}$ = 0. 7000 | $n_{d5}$ =1. 84666 | $\nu_{d5}$ =23. 78 |
| $r_{11}$= 9. 5000 | $d_{11}$= 2. 0000 | $n_{d6}$ = 1. 53172 | $\nu_{d6}$ =48. 84 |
| $r_{12}$= -16.0207 | $d_{12}$=(Variable) |  |  |
| $r_{13}$= 4. 2286 (Aspheric) | $d_{13}$= 2. 5000 | $n_{d7}$ =1.69350 | $\nu_{d7}$ =53. 21 |
| $r_{14}$= 5. 4000 | $d_{14}$= 0. 7000 | $n_{d8}$ =1.84666 | $\nu_{d8}$ =23. 78 |
| $r_{15}$= 3.0911 | $d_{15}$= 0.9300 |  |  |
| $r_{16}$= 7. 7824 | $d_{16}$= 1. 5000 | $n_{d9}$ =1. 51633 | $\nu_{d9}$ =64.14 |
| $r_{17}$= 15.1208 | $d_{17}$=(Variable) |  |  |
| $r_{18}$= -12.0255 | $d_{18}$= 1. 8000 | $n_{d10}$=1. 51633 | $\nu_{d10}$ =64.14 |
| $r_{19}$= -6.7836(Aspheric) | $d_{19}$= 0.6600 |  |  |
| $r_{20}$= $\infty$ | $d_{20}$= 1.4400 | $n_{d11}$=1. 54771 | $\nu_{d11}$ =62. 84 |
| $r_{21}$= $\infty$ | $d_{21}$= 0. 8000 |  |  |
| $r_{22}$= $\infty$ | $d_{22}$= 0.6000 | $n_{d12}$=1. 51633 | $\nu_{d12}$ =64. 14 |
| $r_{23}$= $\infty$ | $d_{23}$= 1.3603 |  |  |
| $r_{24}$= $\infty$ (Image Plane) |  |  |  |

Aspherical Coefficients

6 th surface
K = 0
$A_4 = -1.2289 \times 10^{-4}$
$A_6 = -5.3381 \times 10^{-6}$
$A_8 = 8.7422 \times 10^{-8}$
$A_{10} = -3.3652 \times 10^{-11}$
13th surface
K = 0
$A_4 = -1.9805 \times 10^{-4}$
$A_6 = -2.8934 \times 10^{-5}$
$A_8 = 1.9147 \times 10^{-6}$
$A_{10} = -1.9986 \times 10^{-7}$
1 9 th surface
K = 0
$A_4 = 8.1993 \times 10^{-4}$
$A_6 = -1.1656 \times 10^{-5}$
$A_8 = -3.0739 \times 10^{-7}$
$A_{10} = 0.0000$

Zooming Data (∞)

|  | WE | ST | TE |
|---|---|---|---|
| f (mm) | 6.00484 | 9.32900 | 14.49815 |
| $F_{NO}$ | 2.8586 | 3. 5391 | 4. 4656 |
| $2\omega$ (°) | 32.7 | 21.2 | 14.0 |
| $d_8$ | 14. 82338 | 7.17554 | 1. 49960 |
| $d_{12}$ | 1. 39943 | 6.88233 | 7. 06951 |
| $d_{17}$ | 4.89357 | 7.02815 | 12. 54751 |

Example 3

| | | | |
|---|---|---|---|
| $r_1$ = 18.4212 | $d_1$ = 1. 2000 | $n_{d1}$ =1.78590 | $\nu_{d1}$ =44. 20 |
| $r_2$ = 8. 6018 | $d_2$ = 2. 9000 | | |
| $r_3$ = ∞ | $d_3$ = 12.5000 | $n_{d2}$ =1. 78590 | $\nu_{d2}$ =44. 20 |
| $r_4$ = ∞ | $d_4$ = 0. 5000 | | |
| $r_5$ = 62.7612 | $d_5$ = 1. 0000 | $n_{d3}$ =1.74320 | $\nu_{d3}$ =49. 34 |
| $r_6$ = 6.4831(Aspheric) | $d_6$ = 0. 8000 | | |
| $r_7$ = 9. 0709 | $d_7$ = 2. 0000 | $n_{d4}$ =1.72825 | $\nu_{d4}$ =28. 46 |
| $r_8$ = 107.5707 | $d_8$ =(Variable) | | |
| $r_9$ = ∞ (Stop) | $d_9$ = 1. 0000 | | |
| $r_{10}$= 12. 3123 | $d_{10}$= 0. 7000 | $n_{d5}$ =1. 84666 | $\nu_{d5}$ =23. 78 |
| $r_{11}$= 7.0000 | $d_{11}$= 2. 0000 | $n_{d6}$ =1.58313 | $\nu_{d6}$ =59. 38 |
| $r_{12}$= -25.6683 | $d_{12}$=(Variable) | | |
| $r_{13}$= 4.7382(Aspheric) | $d_{13}$= 2. 5000 | $n_{d7}$ =1.80610 | $\nu_{d7}$ =40. 92 |
| $r_{14}$= 3.4603 | $d_{14}$= 0. 9300 | | |
| $r_{15}$= 7.8166 | $d_{15}$= 2.0000 | $n_{d8}$ =1.48749 | $\nu_{d8}$ =70.23 |
| $r_{16}$= -7.2953 | $d_{16}$= 0. 7000 | $n_{d9}$ =1. 83400 | $\nu_{d9}$ =37.16 |
| $r_{17}$= -69.1622 | $d_{17}$=(Variable) | | |
| $r_{18}$= 220. 1623 | $d_{18}$= 1. 8000 | $n_{d10}$ =1. 51633 | $\nu_{d10}$ =64. 14 |
| $r_{19}$= -14. 8379(Aspheric) | $d_{19}$= 0. 6600 | | |

(continued)

| | | | |
|---|---|---|---|
| $r_{20} = \infty$ | $d_{20} = 1.4400$ | $n_{d11} = 1.54771$ | $\nu_{d11} = 62.84$ |
| $r_{21} = \infty$ | $d_{21} = 0.8000$ | | |
| $r_{22} = \infty$ | $d_{22} = 0.6000$ | $n_{d12} = 1.51633$ | $\nu_{d12} = 64.14$ |
| $r_{23} = \infty$ | $d_{23} = 1.3610$ | | |
| $r_{24} = \infty$ (Image Plane) | | | |

Aspherical Coefficients

6 th surface
K = 0
$A_4 = -3.8689 \times 10^{-4}$
$A_6 = -4.0903 \times 10^{-7}$
$A_8 = -3.1388 \times 10^{-7}$
$A_{10} = 4.2432 \times 10^{-9}$
13th surface
K = 0
$A_4 = -1.1413 \times 10^{-5}$
$A_6 = 1.9818 \times 10^{-6}$
$A_8 = -3.1231 \times 10^{-7}$
$A_{10} = 0.0000$
19th surface
K = 0
$A_4 = 4.8219 \times 10^{-4}$
$A_6 = -1.8188 \times 10^{-5}$
$A_8 = 2.6094 \times 10^{-7}$
$A_{10} = 0.0000$

Zooming Data ($\infty$)

| | WE | ST | TE |
|---|---|---|---|
| f (mm) | 6.00765 | 9.33160 | 14.49720 |
| $F_{NO}$ | 2.8190 | 3.5028 | 4.4438 |
| $2\omega(°)$ | 32.7 | 21.2 | 13.9 |
| $d_8$ | 14.09558 | 6.85361 | 1.49984 |
| $d_{12}$ | 1.40013 | 6.67003 | 5.54950 |
| $d_{17}$ | 5.11617 | 7.07754 | 13.56271 |

Example 4

| | | | |
|---|---|---|---|
| $r_1 = 20.3735$ | $d_1 = 1.2000$ | $n_{d1} = 1.78590$ | $\nu_{d1} = 44.20$ |
| $r_2 = 8.8056$ | $d_2 = 2.9000$ | | |
| $r_3 = \infty$ | $d_3 = 12.5000$ | $n_{d2} = 1.78590$ | $\nu_{d2} = 44.20$ |
| $r_4 = \infty$ | $d_4 = 0.3000$ | | |
| $r_5 = 91.5080$ | $d_5 = 0.9000$ | $n_{d3} = 1.80610$ | $\nu_{d3} = 40.92$ |
| $r_6 = 6.4940$ (Aspheric) | $d_6 = 0.1400$ | | |
| $r_7 = 7.2843$ | $d_7 = 2.2000$ | $n_{d4} = 1.74000$ | $\nu_{d4} = 28.30$ |
| $r_8 = 146.5397$ | $d_8 =$ (Variable) | | |

(continued)

| | | | |
|---|---|---|---|
| $r_9 = \infty$ (Stop) | $d_9 = 1.0000$ | | |
| $r_{10}= 5.1758$ (Aspheric) | $d_{10}= 2.5000$ | $n_{d5} =1.74320$ | $\nu_{d5} =49.34$ |
| $r_{11}= 9.0000$ | $d_{11}= 0.7000$ | $n_{d6} =1.84666$ | $\nu_{d6} =23.78$ |
| $r_{12}= 4.6154$ | $d_{12}= 0.9300$ | | |
| $r_{13}= 17.8685$ | $d_{13}= 1.5000$ | $n_{d7} =1.72916$ | $\nu_{d7} =54.68$ |
| $r_{14} = -34.0913$ | $d_{14}=$(Variable) | | |
| $r_{15} = 10.1880$ | $d_{15}= 1.9600$ | $n_{d8} =1.77250$ | $\nu_{d8} =49.60$ |
| $r_{16}= -50.0000$ | $d_{16}= 0.7000$ | $n_{d9} =1.67270$ | $\nu_{d9} =32.10$ |
| $r_{17}= 10.2079$ | $d_{17}=$(Variable) | | |
| $r_{18}= 23.9392$ (Aspheric) | $d_{18}= 1.8000$ | $n_{d10}=1.58313$ | $\nu_{d10}=59.38$ |
| $r_{19}= -44.7453$ | $d_{19}= 0.6600$ | | |
| $r_{20}= \infty$ | $d_{20}= 1.4400$ | $nd_{11}=1.54771$ | $\nu_{d11}=62.84$ |
| $r_{21}= \infty$ | $d_{21} = 0.8000$ | | |
| $r_{22}= \infty$ | $d_{22}= 0.6000$ | $n_{d12}=1.51633$ | $\nu_{d12}=64.14$ |
| $r_{23}= \infty$ | $d_{23}= 1.3599$ | | |
| $r_{24}= \infty$ (Image Plane) | | | |

Aspherical Coefficients

6 th surface
K = 0
$A_4 =-2.8088 \times 10^{-4}$
$A_6 = 2.6396 \times 10^{-6}$
$A_8 =-4.8363 \times 10^{-7}$
$A_{10}= 9.0705 \times 10^{-9}$
1 0 th surface
K = 0
$A_4 =-3.1977 \times 10^{-4}$
$A_6 =-2.1006 \times 10^{-6}$
$A_8 =-7.1881 \times 10^{-7}$
$A_{10}= 0.0000$
1 8 th surface
K = 0
$A_4 =-2.6755 \times 10^{-4}$
$A_6 = 3.6472 \times 10^{-6}$
$A_8 =-2.1043 \times 10^{-7}$
$A_{10}= 0.0000$

Zooming Data $(\infty)$

| | WE | ST | TE |
|---|---|---|---|
| f (mm) | 6.01024 | 9.33049 | 14.49490 |
| $F_{NO}$ | 2.8184 | 3.5212 | 4.3375 |
| $2\omega(°)$ | 32.6 | 21.6 | 13.9 |
| $d_8$ | 14.61596 | 7.52861 | 1.49916 |
| $d_{14}$ | 1.39873 | 7.91160 | 7.03236 |
| $d_{17}$ | 5.91073 | 6.48903 | 13.39408 |

Example 5

| | | | |
|---|---|---|---|
| r₁ = 17.9860 | d₁ = 1.2000 | $n_{d1}$ =1.78590 | $\nu_{d1}$ =44.20 |
| r₂ = 8.3182 | d₂ = 2.9000 | | |
| r₃ = ∞ | d₃ = 12.5000 | $n_{d2}$ = 1.78590 | $\nu_{d2}$ =44.20 |
| r₄ = ∞ | d₄ = 0.3000 | | |
| r₅ = 72.7266 | d₅ = 0.9000 | $n_{d3}$ =1.58313 | $\nu_{d3}$ =59.38 |
| r₆ = 5.2266 (Aspheric) | d₆ = 0.4400 | | |
| r₇ = 7.1726 | d₇ = 1.9000 | $n_{d4}$ =1.83400 | $\nu_{d4}$ =37.16 |
| r₈ = 22.4388 | d₈ =(Variable) | | |
| r₉ = ∞ (Stop) | d₉ = 1.0000 | | |
| r₁₀= 5.2528(Aspheric) | d₁₀= 2.5000 | $n_{d5}$ =1.74320 | $\nu_{d5}$ =49.34 |
| r₁₁= 10.0000 | d₁₁= 0.7000 | $n_{d6}$ =1.84666 | $\nu_{d6}$ =23.78 |
| r₁₂= 4.6454 | d₁₂= 0.8000 | | |
| r₁₃= 13.3752 | d₁₃= 1.5000 | $n_{d7}$ =1.72916 | $\nu_{d7}$ =54.68 |
| r₁₄= -37.9999 | d₁₄=(Variable) | | |
| r₁₅= 10.5633 (Aspheric) | d₁₅= 1.4000 | $n_{d8}$ =1.48749 | $\nu_{d8}$ =70.23 |
| r₁₆= 15.0339 | d₁₆=(Variable) | | |
| r₁₇= 38.6419 (Aspheric) | d₁₇= 2.1000 | $n_{d9}$ =1.74320 | $\nu_{d9}$ =49.34 |
| r₁₈= -11.0000 | d₁₈= 0.8000 | $n_{d10}$=1.84666 | $\nu_{d10}$=23.78 |
| r₁₉= -30.5080 | d₁₉= 0.6600 | | |
| r₂₀ = ∞ | d₂₀= 1.4400 | $n_{d11}$=1.54771 | $\nu_{d11}$=62.84 |
| r₂₁= ∞ | d₂₁= 0.8000 | | |
| r₂₂= ∞ | d₂₂= 0.6000 | $n_{d12}$=1.51633 | $\nu_{d12}$=64.14 |
| r₂₃= ∞ | d₂₃= 1.3598 | | |
| r₂₄= ∞ (Image Plane) | | | |

Aspherical Coefficients

6 th surface
K = 0
$A_4$ =-6.0228 ×10⁻⁴
$A_6$ =-1.9006 ×10⁻⁵
$A_8$ = 4.0887 ×10⁻⁷
$A_{10}$=-4.9789 ×10⁻⁸
1 0 th surface
K = 0
$A_4$ =-2.8288 ×10⁻⁴
$A_6$ =-4.3087 ×10⁻⁶
$A_8$ =-4.8342 ×10⁻⁷
$A_{10}$= 0.0000
15th surface
K = 0
$A_4$ = 1.4603 ×10⁻⁵
$A_6$ =-9.3569 ×10⁻⁸
$A_8$ = = 2.0899 ×10⁻⁷
$A_{10}$= 0.0000
1 7 th surface
K = 0
$A_4$ =-1.8274 ×10⁻⁴
$A_6$ = 1.4781 ×10⁻⁶

$A_8 = -1.2650 \times 10^{-7}$
$A_{10} = 0.0000$

Zooming Data ($\infty$)

|  | WE | ST | TE |
|---|---|---|---|
| f (mm) | 6.00754 | 9.32975 | 14.49731 |
| $F_{NO}$ | 2. 8495 | 3. 5727 | 4.3700 |
| $2\omega(°)$ | 32.6 | 21. 6 | 13.9 |
| $d_8$ | 14.07403 | 7.43206 | 1.49953 |
| $d_{14}$ | 1.39969 | 9.03177 | 6. 40046 |
| $d_{16}$ | 6.73599 | 5.75394 | 14. 30980 |

Example 6

| | | | |
|---|---|---|---|
| $r_1$ = 17. 8001 | $d_1$ = 1. 2000 | $n_{d1}$ =1.78590 | $\nu_{d1}$ =44.20 |
| $r_2$ = 8. 2437 | $d_2$ = 2. 9000 | | |
| $r_3 = \infty$ | $d_3$ = 12.5000 | $n_{d2}$ =1.78590 | $\nu_{d2}$ =44.20 |
| $r_4 = \infty$ | $d_4$ = 0. 3000 | | |
| $r_5$ = 46.5308 | $d_5$ = 0. 9000 | $n_{d3}$ =1.58313 | $\nu_{d3}$ =59.38 |
| $r_6$ = 5.1472 (Aspheric) | $d_6$ = 0.4400 | | |
| $r_7$ = 7.0137 | $d_7$ = 1. 9000 | $n_{d4}$ =1.83400 | $\nu_{d4}$ =37.16 |
| $r_8$ = 19.5923 | $d_8$ =(Variable) | | |
| $r_9 = \infty$ (Stop) | $d_9$ = 1. 0000 | | |
| $r_{10}$= 5.4144 (Aspheric) | $d_{10}$ = 2.5000 | $n_{d5}$ =1.74320 | $\nu_{d5}$ =49.34 |
| $r_{11}$= 11.0000 | $d_{11}$ = 0. 7000 | $n_{d6}$ =1.84666 | $\nu_{d6}$ =23.78 |
| $r_{12}$= 4.9373 | $d_{12}$ = 0. 8000 | | |
| $r_{13}$= 16.3823 | $d_{13}$ = 1.5000 | $n_{d7}$ =1.72916 | $\nu_{d7}$ =54.68 |
| $r_{14}$= -27.0398 | $d_{14}$ = (Variable) | | |
| $r_{15}$= 9. 6711 | $d_{15}$ = < 1.4000 | $n_{d8}$ =1.48749 | $\nu_{d8}$ =70.23 |
| $r_{16}$ = 12.8264 | $d_{16}$ = (Variable) | | |
| $r_{17}$ = 40.2313 (Aspheric) | $d_{17}$ = 2.1000 | $n_{d9}$ =1.74320 | $\nu_{d9}$ =49.34 |
| $r_{18}$= -11.0000 | $d_{18}$ = 0.8000 | $n_{d10}$=1.84666 | $\nu_{d10}$= 23.78 |
| $r_{19}$= -29.7083 | $d_{19}$ = 0.6600 | | |
| $r_{20} = \infty$ | $d_{20}$ = 1.4400 | $n_{d11}$=1.54771 | $\nu_{d11}$=62.84 |
| $r_{21} = \infty$ | $d_{21}$ = 0.8000 | | |
| $r_{22} = \infty$ | $d_{22}$ = 0.6000 | $n_{d12}$= 1.51633 | $\nu_{d12}$=64.14 |
| $r_{23} = \infty$ | $d_{23}$ = 1.3602 | | |
| $r_{24} = \infty$ (Image Plane) | | | |

Aspherical Coefficients

6 th surface
K = 0
$A_4 = -6. 1045 \times 10^{-4}$
$A_6 = -2.1149 \times 10^{-5}$
$A_8 = 6.3248 \times 10^{-4}$
$A_{10} = -6.3667 \times 10^{-8}$

1 0 th surface
K = 0
$A_4 = -2.8497 \times 10^{-4}$
$A_6 = -3.9160 \times 10^{-6}$
$A_8 = -4.1489 \times 10^{-7}$
$A_{10} = 0.0000$
1 7 th surface
K = 0
$A_4 = -1.5883 \times 10^{-4}$
$A_6 = -2.4464 \times 10^{-6}$
$A_8 = 4.8112 \times 10^{-8}$
$A_{10} = 0.0000$

Zooming Data ($\infty$)

|  | WE | ST | TE |
|---|---|---|---|
| f (mm) | 6.01250 | 9.32862 | 14.49489 |
| $F_{NO}$ | 2.8398 | 3.5522 | 4.3431 |
| $2\omega$ (°) | 32.6 | 21.6 | 13.9 |
| $d_8$ | 13.97559 | 7.36589 | 1.49906 |
| $d_{14}$ | 1.39898 | 9.08823 | 6.32194 |
| $d_{16}$ | 6.84047 | 5.77938 | 14.39408 |

Example 7

| | | | |
|---|---|---|---|
| $r_1 = 21.2933$ | $d_1 = 1.2000$ | $n_{d1} = 1.78590$ | $\nu_{d1} = 44.20$ |
| $r_2 = 9.1188$(Aspheric) | $d_2 = 2.9000$ | | |
| $r_3 = \infty$ | $d_3 = 12.5000$ | $n_{d2} = 1.78590$ | $\nu_{d2} = 44.20$ |
| $r_4 = \infty$ | $d_4 = 0.3000$ | | |
| $r_5 = 580.7411$ | $d_5 = 0.9000$ | $n_{d3} = 1.58267$ | $\nu_{d3} = 46.42$ |
| $r_6 = 7.7517$ | $d_6 = 0.4400$ | | |
| $r_7 = 8.2515$ | $d_7 = 1.9000$ | $n_{d4} = 1.84666$ | $\nu_{d4} = 23.78$ |
| $r_8 = 15.6144$ | $d_8 = $(Variable) | | |
| $r_9 = \infty$ (Stop) | $d_9 = 1.0000$ | | |
| $r_{10} = 5.7808$ (Aspheric) | $d_{10} = 2.5000$ | $n_{d5} = 1.74320$ | $\nu_{d5} = 49.34$ |
| $r_{11} = 13.0000$ | $d_{11} = 0.7000$ | $n_{d6} = 1.84666$ | $\nu_{d6} = 23.78$ |
| $r_{12} = 5.2982$ | $d_{12} = 0.8000$ | | |
| $r_{13} = 14.1056$ | $d_{13} = 1.5000$ | $n_{d7} = 1.72916$ | $\nu_{d7} = 54.68$ |
| $r_{14} = -27.2119$ | $d_{14} = $(Variable) | | |
| $r_{15} = 13.7890$ | $d_{15} = 1.4000$ | $n_{d8} = 1.48749$ | $\nu_{d8} = 70.23$ |
| $r_{16} = 20.8162$ | $d_{16} = $(Variable) | | |
| $r_{17} = 100.9793$ | $d_{17} = 0.8000$ | $n_{d9} = 1.84666$ | $\nu_{d9} = 23.78$ |
| $r_{18} = 13.5000$ | $d_{18} = 2.1000$ | $n_{d10} = 1.80610$ | $\nu_{d10} = 40.92$ |
| $r_{19} = -25.2224$ (Aspheric) | $d_{19} = 0.6600$ | | |
| $r_{20} = \infty$ | $d_{20} = 1.4400$ | $n_{d11} = 1.54771$ | $\nu_{d11} = 62.84$ |
| $r_{21} = \infty$ | $d_{21} = 0.8000$ | | |
| $r_{22} = \infty$ | $d_{22} = 0.6000$ | $n_{d12} = 1.51633$ | $\nu_{d12} = 64.14$ |
| $r_{23} = \infty$ | $d_{23} = 1.3601$ | | |
| $r2_4 = \infty$ (Image Plane) | | | |

Aspherical Coefficients

2 nd surface
K = 0
$A_4 = -1.4911 \times 10^{-5}$
$A_6 = -1.1650 \times 10^{-6}$
$A_8 = 4.2491 \times 10^{-9}$
$A_{10} = 0.0000$
1 0 th surface
K = 0
$A_4 = -2.3339 \times 10^{-4}$
$A_6 = -2.6427 \times 10^{-6}$
$A_8 = -2.6924 \times 10^{-7}$
$A_{10} = 0.0000$
1 9 th surface
K = 0
$A_4 = 1.8090 \times 10^{-4}$
$A_6 = 4.1230 \times 10^{-6}$
$A_8 = -1.2807 \times 10^{-7}$
$A_{10} = 0.0000$

Zooming Data ($\infty$)

|           | WE       | ST      | TE       |
| --------- | -------- | ------- | -------- |
| f (mm)    | 6.00574  | 9.32712 | 14.49692 |
| $F_{NO}$  | 2.8248   | 3.5310  | 4.2987   |
| $2\omega(°)$ | 32.7  | 21.5    | 13.9     |
| $d_8$     | 13.57761 | 7.20846 | 1.49942  |
| $d_{14}$  | 1.39965  | 9.63810 | 5.81790  |
| $d_{16}$  | 7.23336  | 5.38063 | 14.89331 |

Example 8

| | | | |
| --- | --- | --- | --- |
| $r_1 = 19.1761$ | $d_1 = 1.2000$ | $n_{d1} = 1.78590$ | $\nu_{d1} = 44.20$ |
| $r_2 = 8.5695$ (Aspheric) | $d_2 = 2.9000$ | | |
| $r_3 = \infty$ | $d_3 = 12.5000$ | $n_{d2} = 1.78590$ | $\nu_{d2} = 44.20$ |
| $r_4 = \infty$ | $d_4 = 0.3000$ | | |
| $r_5 = -46.5888$ | $d_5 = 0.9000$ | $n_{d3} = 1.58267$ | $\nu_{d3} = 46.42$ |
| $r_6 = 10.3343$ | $d_6 = 1.9000$ | $n_{d4} = 1.84666$ | $\nu_{d4} = 23.78$ |
| $r_7 = 26.0699$ | $d_7 =$ (Variable) | | |
| $r_8 = \infty$ (Stop) | $d_8 = 1.0000$ | | |
| $r_9 = 6.0465$ (Aspheric) | $d_9 = 2.5000$ | $n_{d5} = 1.74320$ | $\nu_{d5} = 49.34$ |
| $r_{10} = 13.0000$ | $d_{10} = 0.7000$ | $n_{d6} = 1.84666$ | $\nu_{d6} = 23.78$ |
| $r_{11} = 5.6300$ | $d_{11} = 0.8000$ | | |
| $r_{12} = 15.1088$ | $d_{12} = 1.5000$ | $n_{d7} = 1.72916$ | $\nu_{d7} = 54.68$ |
| $r_{13} = -28.7654$ | $d_3 =$ (Variable) | | |
| $r_{14} = 12.4863$ | $d_{14} = 1.4000$ | $n_{d8} = 1.48749$ | $\nu_{d8} = 70.23$ |
| $r_{15} = 17.7361$ | $d_{15} =$ (Variable) | | |
| $r_{16} = 24.3278$ (Aspheric) | $d_{16} = 2.1000$ | $n_{d9} = 1.74320$ | $\nu_{d9} = 49.34$ |

(continued)

| | | | |
|---|---|---|---|
| $r_{17}$ = -12.0000 | $d_{17}$ = 0.8000 | $n_{d10}$ =1.78472 | $\nu_{d10}$ =25.68 |
| $r_{18}$ = -75.9792 | $d_{18}$ = 0.6600 | | |
| $r_{19}$ = ∞ | $d_{19}$ = 1.4400 | $n_{d11}$ =1.54771 | $\nu_{d11}$ =62.84 |
| $r_{20}$ = ∞ | $d_{20}$ = 0.8000 | | |
| $r_{21}$ = ∞ | $d_{21}$ = 0.6000 | $n_{d12}$ =1.51633 | $\nu_{d12}$ = 64.14 |
| $r_{22}$ = ∞ | $d_{22}$ = 1.3600 | | |
| $r_{23}$ = ∞ (Image Plane) | | | |

Aspherical Coefficients

2 nd surface
K = 0
$A_4$ =-4.7160 $\times 10^{-5}$
$A_6$ = -7.1255 $\times 10^{-7}$
$A_8$ = -6.5873 $\times 10^{-9}$
$A_{10}$= 0.0000
9 th surface
K = 0
$A_4$ =-2.1357 $\times 10^{-4}$
$A_6$ =-2.1714 $\times 10^{-6}$
$A_8$ =-1.6484 $\times 10^{-7}$
$A_{10}$= 0.0000
1 6 th surface
K = 0
$A_4$ =-1.4451 $\times 10^{-4}$
$A_6$ = 1.3508 $\times 10^{-6}$
$A_8$ =-6.3819 $\times 10^{-8}$
$A_{10}$= 0.0000

Zooming Data (∞)

| | WE | ST | TE |
|---|---|---|---|
| f (mm) | 6.00723 | 9.32846 | 14.49784 |
| $F_{NO}$ | 2.8379 | 3.5413 | 4.3096 |
| 2 $\omega$ (°) | 32.7 | 21.5 | 13.9 |
| $d_7$ | 13.98735 | 7.36539 | 1.49963 |
| $d_{13}$ | 1.39974 | 9.60703 | 5.93291 |
| $d_{15}$ | 7.26137 | 5.69110 | 15.21593 |

Example 9

| | | | |
|---|---|---|---|
| $r_1$ = 246.0095 | $d_1$ = 1.2000 | $n_{d1}$ =1.80610 | $\nu_{d1}$ =40.92 |
| $r_2$ = 20.1760(Aspheric) | $d_2$ = 1.5000 | | |
| $r_3$ = ∞ | $d_3$ = 12.5000 | $n_{d2}$ =1.78590 | $\nu_{d2}$ =44.20 |
| $r_4$ = ∞ | $d_4$ = 1.5000 | | |
| $r_5$ = -7.3867 | $d_5$ = 1.0000 | $n_{d3}$ =1.80100 | $\nu_{d3}$ =34.97 |
| $r_6$ = -50.0000 | $d_6$ = 1.8200 | $n_{d4}$ =1.84666 | $\nu_{d4}$ =23.78 |

(continued)

| | |  |  |
|---|---|---|---|
| $r_7 = -12.2328$ | $d_7 =$(Variable) | | |
| $r_8 = \infty$ (Stop) | $d_8 = 1.0000$ | | |
| $r_9 = 10.6609$(Aspheric) | $d_9 = 2.3000$ | $n_{d5} = 1.80610$ | $\nu_{d5} = 40.92$ |
| $r_{10} = -67.8827$ | $d_{10}= 0.1500$ | | |
| $r_{11} = 13.1203$ | $d_{11} = 2.7000$ | $n_{d6} = 1.75700$ | $\nu_{d6} = 47.82$ |
| $r_{12} = \infty$ | $d_{12} = 0.8000$ | $n_{d7} = 1.84666$ | $\nu_{d7} = 23.78$ |
| $r_{13}= 6.4827$ | $d_{13}=$(Variable) | | |
| $r_{14} = 17.6756$ | $d_{14} = 1.6000$ | $n_{d8} = 1.48749$ | $\nu_{d8} = 70.23$ |
| $r_{15}= -50.5413$ | $d_{15} =$(Variable) | | |
| $r_{16}= 15.9493$(Aspheric) | $d_{16}= 1.7000$ | $n_{d9} = 1.58313$ | $\nu_{d9} = 59.38$ |
| $r_{17}= -15.0000$ | $d_{17} = 0.8000$ | $n_{d10} = 1.84666$ | $\nu_{d10} = 23.78$ |
| $r_{18}= -46.4329$ | $d_{18}= 0.6600$ | | |
| $r_{19}= \infty$ | $d_{19}= 1.4400$ | $n_{d11} = 1.54771$ | $\nu_{d11} = 62.84$ |
| $r_{20}= \infty$ | $d_{20}= 0.8000$ | | |
| $r_{21}= \infty$ | $d_{21}= 0.6000$ | $n_{d12} = 1.51633$ | $\nu_{d12} = 64.14$ |
| $r_{22}= \infty$ | $d_{22}= 1.3601$ | | |
| $r_{23}= \infty$ (Image Plane) | | | |

Aspherical Coefficients

2 nd surface
$K = 0$
$A_4 = -1.0773 \times 10^{-4}$
$A_6 = -3.3089 \times 10^{-7}$
$A_8 = -1.5283 \times 10^{-9}$
$A_{10}= 0.0000$
9 th surf ace
$K = 0$
$A_4 = -1.2210 \times 10^{-4}$
$A_6 = -1.3984 \times 10^{-8}$
$A_8 = -1.6300 \times 10^{-8}$
$A_{10}= 0.0000$
1 6 th surface
$K = 0$
$A_4 = -2.6736 \times 10^{-4}$
$A_6 = 1.3631 \times 10^{-5}$
$A_8 = -4.5357 \times 10^{-7}$
$A_{10}= 0.0000$

Zooming Data ($\infty$)

| | WE | ST | TE |
|---|---|---|---|
| f (mm) | 5.99832 | 9.32950 | 14.50084 |
| $F_{NO}$ | 2.6479 | 3.3092 | 4.0475 |
| $2\omega$ (°) | 32.6 | 21.4 | 13.9 |
| $d_7$ | 15.07816 | 7.55691 | 1.00023 |
| $d_{13}$ | 1.40041 | 6.49779 | 5.90725 |
| $d_{15}$ | 6.09306 | 8.53155 | 15.66403 |

Example 10

| | | | |
|---|---|---|---|
| $r_1$ = 16. 8630 | $d_1$ = 1.1000 | $n_{d1}$ =1.77250 | $v_{d1}$ =49.60 |
| $r_2$ = 8.7727 | $d_2$ = 3.0000 | | |
| $r_3$ = ∞ | $d_3$ = 12.5000 | $nd_2$ =1.83481 | $v_{d2}$ =42.72 |
| $r_4$ = ∞ | $d_4$ = 0.3000 | | |
| $r_5$ = -43.7867 | $d_5$ = 0.9000 | $nd_3$ =1.58313 | $v_{d3}$ =59.38 |
| $r_6$ = 5.4937(Aspheric) | $d_6$ = 0.5200 | | |
| $r_7$ = 7.8835 | $d_7$ = 1.9000 | $n_{d4}$ =1.80610 | $v_{d4}$ =40.92 |
| $r_8$ = 41. 6500 | $d_8$ =(Variable) | | |
| $r_9$ = ∞ (Stop) | $d_9$ = 1.0000 | | |
| $r_{10}$ = 5. 6352 (Aspheric) | $d_{10}$= 2.5000 | $n_{d5}$ =1.74320 | $v_{d5}$ =49.34 |
| $r_{11}$= 10.5000 | $d_{11}$ = 0.7000 | $n_{d6}$ =1.84666 | $v_{d6}$ =23.78 |
| $r_{12}$= 5.2717 | $d_{12}$= 0.8000 | | |
| $r_{13}$= 27. 0282 | $d_{13}$= 1.5000 | $n_{d7}$ =1.72916 | $v_{d7}$ =54.68 |
| $r_{14}$= -19.3196 | $d_{14}$=(Variable) | | |
| $r_{15}$= 17.7925(Aspheric) | $d_{15}$= 1.4000 | $n_{d8}$ =1.48749 | $v_{d8}$ =70.23 |
| $r_{16}$= 121.8190 | $d_{16}$= (Variable) | | |
| $r_{17}$= -6.1686 | $d_{17}$= 0.8000 | $n_{d9}$ =1.84666 | $v_{d9}$ =23.78 |
| $r_{18}$= -12.5000 | $d_{18}$= 2.1000 | $n_{d10}$=1.74320 | $v_{d10}$=49.34 |
| $r_{19}$= -5.4525(Aspheric) | $d_{19}$= 0.6600 | | |
| $r_{20}$= ∞ | $d_{20}$= 1.4400 | $n_{d11}$ =1.54771 | $v_{d11}$ =62.84 |
| $r_{21}$= ∞ | $d_{21}$= 0.8000 | | |
| $r_{22}$= ∞ | $d_{22}$= 0.6000 | $n_{d12}$ =1.51633 | $v_{d12}$ =64.14 |
| $r_{23}$ = ∞ | $d_{23}$= 1.3600 | | |
| $r_{24}$= ∞ (Image Plane) | | | |

Aspherical Coefficients

6 th surface
K = 0
$A_4$ =-6. 5162 × $10^{-4}$
$A_6$ =-9.3748 ×$10^{-6}$
$A_8$ = 2.0963 ×$10^{-7}$
$A_{10}$ = -3.4547 ×$10^{-8}$
1 0 th surface
K = 0
$A_4$ =-2.9965 ×$10^{-4}$
$A_6$ =-3.4364 ×$10^{-9}$
$A_8$ =-4. 7103 ×$10^{-7}$
$A_{10}$ = 0.0000
1 5 th surface
K = 0
$A_4$ =-9.8531 × $10^{-4}$
$A_6$ = 2.0729 ×$10^{-6}$
$A_8$ =-3.4211 ×$10^{-8}$
$A_{10}$ = 0.0000
1 9 th surface
K = 0
$A_4$ = 1. 0008 ×$10^{-3}$
$A_6$ =-1.7464 ×$10^{-5}$

$A_8 = 1.1785 \times 10^{-6}$
$A_{10} = 0.0000$

Zooming Data ($\infty$)

|  | WE | ST | TE |
|---|---|---|---|
| f (mm) | 6.01706 | 10.39915 | 17.99747 |
| $F_{NO}$ | 2.8430 | 3.7925 | 4.6965 |
| 2 $\omega$ (°) | 32.6 | 19.3 | 11.3 |
| $d_8$ | 18.39512 | 9.82836 | 1.49931 |
| $d_{14}$ | 1.39990 | 11.66800 | 9.86995 |
| $d_{16}$ | 8.11544 | 6.41342 | 16.54158 |

Example 11

| | | | |
|---|---|---|---|
| $r_1 = 18.1242$ | $d_1 = 1.1000$ | $n_{d1} = 1.77250$ | $\nu_{d1} = 49.60$ |
| $r_2 = 11.0917$ | $d_2 = 3.0000$ | | |
| $r_3 = \infty$ | $d_3 = 12.5000$ | $n_{d2} = 1.80610$ | $\nu_{d2} = 40.92$ |
| $r_4 = \infty$ | $d_4 = 0.3000$ | | |
| $r_5 = -189.0024$(Aspheric) | $d_5 = 0.9000$ | $n_{d3} = 1.80610$ | $\nu_{d3} = 40.92$ |
| $r_6 = 7.0839$(Aspheric) | $d_6 = 0.8000$ | | |
| $r_7 = 8.8339$ | $d_7 = 1.9000$ | $n_{d4} = 1.76182$ | $\nu_{d4} = 26.52$ |
| $r_8 = 33.9090$ | $d_8 =$(Variable) | | |
| $r_9 = \infty$ (Stop) | $d_9 = 1.0000$ | | |
| $r_{10} = 6.5543$ (Aspheric) | $d_{10} = 2.5000$ | $n_{d5} = 1.74320$ | $\nu_{d5} = 49.34$ |
| $r_{11} = 16.5000$ | $d_{11} = 0.7000$ | $n_{d6} = 1.84666$ | $\nu_{d6} = 23.78$ |
| $r_{12} = 6.8813$ | $d_{12} = 0.8000$ | | |
| $r_{13} = 110.5063$ | $d_{13} = 1.5000$ | $n_{d7} = 1.72916$ | $\nu_{d7} = 54.68$ |
| $r_{14} = -13.4784$ | $d_{14} =$(Variable) | | |
| $r_{15} = 17.0895$ | $d_{15} = 1.4000$ | $n_{d8} = 1.48749$ | $\nu_{d8} = 70.23$ |
| $r_{16} = 214.7721$ | $d_{16} =$ (Variable) | | |
| $r_{17} = -8.1890$ | $d_{17} = 0.8000$ | $n_{d9} = 1.84666$ | $\nu_{d9} = 23.78$ |
| $r_{18} = -20.0000$ | $d_{18} = 2.1000$ | $n_{d10} = 1.74320$ | $\nu_{d10} = 49.34$ |
| $r_{19} = -7.6979$(Aspheric) | $d_{19} = 0.6600$ | | |
| $r_{20} = \infty$ | $d_{20} = 1.4400$ | $n_{d11} = 1.54771$ | $\nu_{d11} = 62.84$ |
| $r_{21} = \infty$ | $d_{21} = 0.8000$ | | |
| $r_{22} = \infty$ | $d_{22} = 0.6000$ | $n_{d12} = 1.51633$ | $\nu_{d12} = 64.14$ |
| $r_{23} = \infty$ | $d_{23} = 1.3601$ | | |
| $r_{24} = \infty$ (Image Plane) | | | |

Aspherical Coefficients

5 th surface
K = 0
$A_4 = 3.1801 \times 10^{-4}$
$A_6 = -7.4933 \times 10^{-6}$
$A_8 = 1.3268 \times 10^{-7}$
$A_{10} = 0.0000$

6 th surface
K = 0
$A_4 = 1.0755 \times 10^{-4}$
$A_6 = -2.2069 \times 10^{-6}$
$A_8 = -4.2215 \times 10^{-8}$
$A_{10} = 1.2946 \times 10^{-9}$
10 th surface
K = 0
$A_4 = -2.8130 \times 10^{-4}$
$A_6 = -7.1076 \times 10^{-7}$
$A_8 = -1.7424 \times 10^{-7}$
$A_{10} = 0.0000$
1 9 th surface
K = 0
$A_4 = 5.5956 \times 10^{-9}$
$A_6 = -1.7107 \times 10^{-6}$
$A_8\ 5.6651 \times 10^{-7}$
$A_{10} = 0.0000$

Zooming Data ($\infty$)

|  | WE | ST | TE |
|---|---|---|---|
| f (mm) | 6.00227 | 10.39870 | 17.99964 |
| $F_{NO}$ | 2.8302 | 3.7274 | 4.5463 |
| $2\omega$ (°) | 32.7 | 19.3 | 11.3 |
| $d_8$ | 17.74229 | 9.38185 | 1.50012 |
| $d_{14}$ | 1.39992 | 10.71211 | 9.41560 |
| $d_{16}$ | 7.69801 | 6.74827 | 15.92451 |

Example 1 2

| | | | |
|---|---|---|---|
| $r_1 = 11.6487$ | $d_1 = 0.7000$ | $n_{d1} = 1.77250$ | $\nu_{d1} = 49.60$ |
| $r_2 = 4.8810$(Aspheric) | $d_2 = 1.5500$ | | |
| $r_3 = \infty$ | $d_3 = 6.8000$ | $n_{d2} = 1.77250$ | $\nu_{d2} = 49.60$ |
| $r_4 = \infty$ | $d_4 = 0.1500$ | | |
| $r_5 = -170.6138$ | $d_5 = 0.7000$ | $n_{d3} = 1.77250$ | $\nu_{d3} = 49.60$ |
| $r_6 = 6.6934$ | $d_6 = 0.5000$ | | |
| $r_7 = 6.6793$ | $d_7 = 1.2500$ | $n_{d4} = 1.84666$ | $\nu_{d4} = 23.78$ |
| $r_8 = 13.3262$ | $d_8 =$ (Variable) | | |
| $r_9 = \infty$ (Stop) | $d_9 = 0.0000$ | | |
| $r_{10} = 3.9559$(Aspheric) | $d_{10} = 1.8000$ | $n_{d5} = 1.74320$ | $\nu_{d5} = 49.34$ |
| $r_{11} = 9.5000$ | $d_{11} = 0.7000$ | $n_{d6} = 1.84666$ | $\nu_{d6} = 23.78$ |
| $r_{12} = 3.5668$ | $d_{12} = 0.5000$ | | |
| $r_{13} = 7.5793$ | $d_{13} = 1.6500$ | $n_{d7} = 1.72916$ | $\nu_{d7} = 54.68$ |
| $r_{14} = -14.4945$ | $d_{14} =$ (Variable) | | |
| $r_{15} = 9.1093$ | $d_{15} = 1.0000$ | $n_{d8} = 1.48749$ | $\nu_{d8} = 70.23$ |
| $r_{16} = 13.6404$ | $d_{16} =$ (Variable) | | |
| $r_{17} = 146.0359$ | $d_{17} = 0.7000$ | $n_{d9} = 1.84666$ | $\nu_{d9} = 23.78$ |
| $r_{18} = 9.0000$ | $d_{18} = 1.4500$ | $n_{d10} = 1.74320$ | $\nu d_{10} = 49.34$ |
| $r_{19} = -22.2698$(Aspheric) | $d_{19} = 0.7000$ | | |

(continued)

| | | | |
|---|---|---|---|
| $r_{20}= \infty$ | $d_{20}= 0.6000$ | $n_{d11}=1.51633$ | $\nu_{d11}=64.14$ |
| $r_{21}= \infty$ | $d_{21}= 1.0000$ | | |
| $r_{22}= \infty$ (Image Plane) | | | |

Aspherical Coefficients

2nd surface
K = 0
$A_4 =-7.6360 \times 10^{-5}$
$A_6 =-3.2706 \times 10^{-5}$
$A_8 = 4.2217 \times 10^{-7}$
$A_{10}= 0.0000$
1 0 th surface
K = 0
$A_4 =-9.5407 \times 10^{-4}$
$A_6 =-1.7864 \times 10^{-5}$
$A_8 =-3.9103 \times 10^{-6}$
$A_{10}= 0.0000$
1 9 th surface
K = 0
$A_4 = 2.5017 \times 10^{-5}$
$A_6 = 5.7463 \times 10^{-4}$
$A_8 =-6.4941 \times 10^{-5}$
$A_{10}= 0.0000$

Zooming Data ($\infty$)

| | WE | ST | TE |
|---|---|---|---|
| f (mm) | 3.25717 | 5.63806 | 9.74723 |
| $F_{NO}$ | 2.5244 | 3.3633 | 4.2965 |
| $2\omega$ (°) | 32.7 | 19.4 | 11.3 |
| $d_8$ | 9.37157 | 4.85881 | 0.89899 |
| $d_{14}$ | 1.10006 | 8.11201 | 1.30017 |
| $d_{16}$ | 3.67578 | 1.18818 | 11.94819 |

Example 1 3

| | | | |
|---|---|---|---|
| $r_1 = -14.2761$ (Aspheric) | $d_1 = 5.1000$ | $n_{d1} =1.50913$ | $\nu_{d1} =56.20$ |
| $r_2 = \infty$ (Reflecting surface) | $d_2 = 5.7941$ | $n_{d2} =1.50913$ | $\nu_{d2} =56.20$ |
| $r_3 = \infty$ | $d_3 = 2.1000$ | | |
| $r_4 = -6.4892$ | $d_4 = 0.8000$ | $n_{d3} =1.64000$ | $\nu_{d3} =60.07$ |
| $r_5 = -84.1654$ | $d_5 = 1.1935$ | $n_{d4} =1.84666$ | $\nu_{d4} =23.78$ |
| $r_6 = -16.8306$ | $d_6 =$(Variable) | | |
| $r_7 = \infty$ (Stop) | $d_7 = 0.4000$ | | |
| $r_8 = 34.9225$(Aspheric) | $d_8 = 1.4006$ | $n_{d5} =1.74330$ | $\nu_{d5} =49.33$ |
| $r_9 = -15.2934$ | $d_9 = 0.1500$ | | |
| $r_{10}= 6.1210$ | $d_{10}= 3.3481$ | $n_{d6} =1.61800$ | $\nu_{d6} =63.33$ |

(continued)

| | | | |
|---|---|---|---|
| $r_{11}$= 27. 4556 | $d_{11}$= 0.8000 | $n_{d7}$ =1.84666 | $\nu_{d7}$ =23.78 |
| $r_{12}$= 4. 9467 | $d_{12}$ =(Variable) | | |
| $r_{13}$= 13. 6380 | $d_{13}$= 1.4415 | $n_{d8}$ =1.51633 | $\nu_{d8}$ =64.14 |
| $r_{14}$= -143.7586 | $d_{14}$=(Variable) | | |
| $r_{15}$= -19. 5436 | $d_{15}$= 1.3641 | $n_{d9}$ =1.58913 | $\nu_{d9}$ =61.25 |
| $r_{16}$= -7.1346(Aspheric) | $d_{16}$= 0.8000 | | |
| $r_{17}$= ∞ | $d_{17}$= 1.0500 | $n_{d10}$=1.54771 | $\nu_{d10}$=62.84 |
| $r_{18}$= ∞ | $d_{18}$= 0.8000 | | |
| $r_{19}$= ∞ | $d_{19}$= 0.8000 | $n_{d11}$=1.51633 | $\nu_{d11}$ =64.14 |
| $r_{20}$= ∞ | $d_{20}$= 0.9669 | | |
| $r_{21}$= ∞ (Image Plane) | | | |

Aspherical Coefficients

1st surface
K = 0
$A_4$ = 3.2165 $\times 10^{-4}$
$A_6$ =-9.1756 $\times 10^{-7}$
$A_8$ = 4.1788 $\times 10^{-9}$
$A_{10}$= 0.0000
8 th surface
K = 0
$A_4$ =-1.2083 $\times 10^{-4}$
$A_6$ = 1.1516 $\times 10^{-7}$
$A_8$ =-2.9381 $\times 10^{-8}$
$A_{10}$= 0.0000
1 6 th surface
K = 0
$A_4$ = 1.3137 $\times 10^{-3}$
$A_6$ =-2. 0878 $\times 10^{-5}$
$A_8$ = 4. 9397 $\times 10^{-7}$
$A_{10}$= 0.0000

Zooming Data (∞)

| | WE | ST | TE |
|---|---|---|---|
| f (mm) | 5.02898 | 8.69474 | 14.52092 |
| $F_{NO}$ | 2.6544 | 3.5217 | 4.5079 |
| $2\omega$ (°) | 64.0 | 40.8 | 24.2 |
| $d_6$ | 14.61860 | 7.39251 | 1.80000 |
| $d_{12}$ | 3.75585 | 8.20107 | 4.39975 |
| $d_{14}$ | 3.16733 | 5.96897 | 15.38987 |

Example 1 4

| | | | |
|---|---|---|---|
| $r_1$ = -26. 8147 | $d_1$ = 3.8000 | $n_{d1}$ =1.73400 | $\nu_{d1}$ =51.47 |
| $r_2$ = ∞ (Reflecting surface) | $d_2$ = 3.2000 | $n_{d2}$ =1.73400 | $\nu_{d2}$ =51.47 |

(continued)

| | | | |
|---|---|---|---|
| $r_3$ = 6.2254 | $d_3$ = 1.7202 | | |
| $r_4$ = 424.9864(Aspheric) | $d_4$ = 2.4297 | $n_{d3}$ =1.84666 | $\nu_{d3}$ =23.78 |
| $r_5$ = -48.1247 | $d_5$ =(Variable) | | |
| $r_6$ = ∞ (Stop) | $d_6$ = 0.5000 | | |
| $r_7$ = 17.8731(Aspheric) | $d_7$ = 2.0000 | $n_{d4}$ =1.58913 | $\nu_{d4}$ =61.26 |
| $r_8$ = -16.6911 | $d_8$ =(Variable) | | |
| $r_9$ = 7.9903 | $d_9$ = 6.2379 | $n_{d5}$ =1.48749 | $\nu_{d5}$ =70.23 |
| $r_{10}$ = -14.7007 | $d_{10}$ = 0.8488 | $n_{d6}$ =1.84666 | $\nu_{d6}$ =23.78 |
| $r_{11}$ = 7.0178 | $d_{11}$ = 1.1903 | | |
| $r_{12}$ = 11.2307 | $d_{12}$ = 1.6307 | $n_{d7}$ =1.84666 | $\nu_{d7}$ =23.78 |
| $r_{13}$ = -24.5400 | $d_{13}$ =(Variable) | | |
| $r_{14}$ = 18.1763 | $d_{14}$ = 0.5000 | $n_{d8}$ =1.84666 | $\nu_{d6}$ =23.78 |
| $r_{15}$ = 5.9110(Aspheric) | $d_{15}$ =(Variable) | | |
| $r_{16}$ = 14.1876 | $d_{16}$ = 3.0000 | $n_{d9}$ 1.58913 | $\nu_{d9}$ =61.26 |
| $r_{17}$ = -7.1178(Aspheric) | $d_{17}$ = 0.5006 | | |
| $r_{18}$ = ∞ | $d_{18}$ = 0.8000 | $n_{d10}$ =1.51633 | $\nu_{d10}$ =64.14 |
| $r_{19}$ = ∞ | $d_{19}$ = 1.8000 | $n_{d11}$ =1.54771 | $\nu_{d11}$ =62.84 |
| $r_{20}$ = ∞ | $d_{20}$ = 0.5000 | | |
| $r_{21}$ = ∞ | $d_{21}$ = 0.5000 | $n_{d12}$ =1.51633 | $\nu_{d12}$ =64.14 |
| $r_{22}$ = ∞ | $d_{22}$ = 1.1914 | | |
| $r_{23}$ = ∞ (Image Plane) | | | |

Aspherical Coefficients

4 th surface
K = 0.0195
$A_4$ = 5.4111 $\times 10^{-4}$
$A_6$ = 2.1984 $\times 10^{-6}$
$A_8$ = 4.5957 $\times 10^{-7}$
$A_{10}$ = -1.0754 $\times 10^{-8}$
7th surface
K = 5.8821
$A_4$ = -2.7575 $\times 10^{-4}$
$A_6$ = 5.8194 $\times 10^{-6}$
$A_8$ = -7.9649 $\times 10^{-7}$
$A_{10}$ = 3.4848 $\times 10^{-8}$
15th surface
K = -3.6043
$A_4$ = 2.6150 $\times 10^{-4}$
$A_6$ = -8.5623 $\times 10^{-6}$
$A_8$ = -2.8972 $\times 10^{-6}$
$A_{10}$ = 1.5174 $\times 10^{-7}$
17th surface
K = 0.8882
$A_4$ = 1.1140 $\times 10^{-3}$
$A_6$ = -8.5962 $\times 10^{-6}$
$A_8$ = 3.9677 $\times 10^{-7}$
$A_{10}$ = 3.1086 $\times 10^{-8}$

**Zooming Data** (∞)

|  | WE | ST | TE |
|---|---|---|---|
| f (mm) | 4.59000 | 8.95000 | 13.23000 |
| $F_{NO}$ | 2.8316 | 3.8724 | 4.6438 |
| $2\overline{\omega}$ (°) | 65.5 | 34.0 | 23.0 |
| $d_5$ | 12.93741 | 5.34873 | 2.00000 |
| $d_8$ | 2.61607 | 2.85689 | 0.50000 |
| $d_{13}$ | 1.09671 | 5.22639 | 10.38165 |
| $d_{15}$ | 1.00016 | 4.21405 | 4.71724 |

Example 15

| | | | |
|---|---|---|---|
| $r_1$ = -129.7294 | $d_1$ = 4. 5500 | $n_{d1}$ =1.80400 | $\nu_{d1}$ =46.57 |
| $r_2$ = ∞ (Reflecting surface) | $d_2$ = 4.0019 | $n_{d2}$ =1.80400 | $\nu_{d2}$ =46.57 |
| $r_3$ = 5. 3898 | $d_3$ = 1.6465 | | |
| $r_4$ = 30. 0332 (Aspheric) | $d_4$ = 1.4609 | $n_{d3}$ =1.84666 | $\nu_{d3}$ =23.78 |
| $r_5$ = -35.8611 | $d_5$ =(Variable) | | |
| $r_6$ = ∞ (Stop) | $d_6$ =(Variable) | | |
| $r_7$ = 9.6063(Aspheric) | $d_7$ = 2.7296 | $n_{d4}$ =1.48749 | $\nu_{d4}$ =70.23 |
| $r_8$ = -30. 8421 | $d_8$ = 0.1469 | | |
| $r_9$ = 10.1172 | $d_9$ = 2.1277 | $n_{d5}$ =1.69680 | $\nu_{d5}$ =55.53 |
| $r_{10}$= 97. 1974 | $d_{10}$= 0.0500 | | |
| $r_{11}$ = 12. 1982 | $d_{11}$= 0.7949 | $n_{d6}$ =1.84666 | $\nu_{d6}$ =23.78 |
| $r_{12}$ = 5.7271 | $d_{12}$=(Variable) | | |
| $r_{13}$= 14. 2960 | $d_{13}$= 4.0342 | $n_{d7}$ =1.48749 | $\nu_{d7}$ =70.23 |
| $r_{14}$= -15.7323 | $d_{14}$= 0.1401 | | |
| $r_{15}$= -18.5671 | $d_{15}$= 1.1241 | $n_{d8}$ =1.84666 | $\nu_{d8}$ =23.78 |
| $r_{16}$= -29.8834 | $d_{16}$=(Variable) | | |
| $r_{17}$= 46.3841(Aspheric) | $d_{17}$= 1.1752 | $n_{d9}$ =1.58913 | $\nu_{d9}$ =61.26 |
| $r_{18}$= 541.6142 | $d_{18}$= 0.4453 | | |
| $r_{19}$= ∞ | $d_{19}$= 0.8000 | $n_{d10}$=1.51633 | $\nu_{d10}$=64.14 |
| $r_{20}$= ∞ | $d_{20}$= 1.8000 | $n_{d11}$=1.54771 | $\nu_{d11}$=62.84 |
| $r_{21}$= ∞ | $d_{21}$= 0.5000 | | |
| $r_{22}$= ∞ | $d_{22}$= 0.5000 | $n_{d12}$=1.51633 | $\nu_{d12}$=64.14 |
| $r_{23}$= ∞ | $d_{23}$ = 1.2588 | | |
| $r_{24}$= ∞ (Image Plane) | | | |

Aspherical Coefficients

4th surface
K =42.6072
$A_4$ = 4. 5281 $\times 10^{-4}$
$A_6$ =-1.2752 $\times 10^{-6}$
$A_8$ = 2.9327 $\times 10^{-7}$
$A_{10}$= 0
7 th surface
K = 0
$A_4$ =-2.9136 $\times 10^{-4}$
$A_8$ =-7.7511 $\times 10^{-7}$
$A_8$ = 2.4221 $\times 10^{-8}$

$A_{10} = 0$
17th surface
$K = 0$
$A_4 = -8.0585 \times 10^{-4}$
$A_6 = 1.7583 \times 10^{-5}$
$A_8 = -1.1309 \times 10^{-6}$
$A_{10} = 0$

**Zooming Data ($\infty$)**

|  | WE | ST | TE |
|---|---|---|---|
| f (mm) | 4.71141 | 7.84455 | 13.21508 |
| $F_{NO}$ | 2.8000 | 3.6612 | 5.0650 |
| $2\omega$ (°) | 67.8 | 41.2 | 24.8 |
| $d_5$ | 10.20144 | 4.70557 | 1.12127 |
| $d_6$ | 7.09024 | 5.59391 | 1.24849 |
| $d_{12}$ | 3.08267 | 9.70509 | 10.04403 |
| $d_{16}$ | 0.98577 | 1.28696 | 8.72623 |

Example 1 6

| | | | |
|---|---|---|---|
| $r_1$ = 22. 0799 | $d_1$ = 0.7823 | $n_{d1}$ =1.80400 | $\nu_{d1}$ =46.57 |
| $r_2$ = 7.0105 | $d_2$ = 1.1905 | | |
| $r_3$ = $\infty$ | $d_3$ = 3.8000 | $n_{d2}$ =1.80400 | $\nu_{d2}$ =46.57 |
| $r_4$ = $\infty$ (Reflecting surface) | $d_2$ = 3.4483 | $n_{d3}$ =1.80400 | $\nu_{d3}$ =46.57 |
| $r_5$ = $\infty$ | $d_5$ = 0.4000 | | |
| $r_6$ = -43.4610 | $d_6$ = 0.7742 | $n_{d4}$ =1.77250 | $\nu_{d4}$ =49.60 |
| $r_7$ = 9.6384 | $d_7$ = 0.6369 | | |
| $r_8$ = 19.1908(Aspheric) | $d_8$ = 1.6810 | $n_{d5}$ =1.84666 | $\nu_{d5}$ =23.78 |
| $r_9$ = -40.1274 | $d_9$ =(Variable) | | |
| $r_{10}$= $\infty$ (Stop) | $d_{10}$= 0.5000 | | |
| $r_{11}$= 85.1662 | $d_{11}$= 1.5117 | $n_{d6}$ =1.58913 | $\nu_{d2}$ =61.26 |
| $r_{12}$= -18.3807 | $d_{12}$=(Variable) | | |
| $r_{13}$= 5.5347(Aspheric) | $d_{13}$= 2.9473 | $n_{d7}$ =1.48749 | $\nu_{d7}$ =70.23 |
| $r_{14}$ = -102.8346 | $d_{14}$ = 0.1500 | | |
| $r_{15}$= 68. 5128 | $d_{15}$= 3. 4582 | $n_{d8}$ =1.84666 | $\nu_{d6}$ =23.78 |
| $r_{16}$= 5.6774 | $d_{16}$= 2.1376 | | |
| $r_{17}$= 7.8453 | $d_{17}$= 2.3148 | $n_{d9}$ =1.60542 | $\nu_{d9}$ =45.99 |
| $r_{18}$= -12.6010 | $d_{18}$= 0.5441 | | |
| $r_{19}$= -6.0465 | $d_{19}$= 0.7255 | $n_{d10}$=1.61800 | $\nu_{d10}$=63.33 |
| $r_{20}$= -17.9513 | $d_{20}$=(Variable) | | |
| $r_{21}$= -17.2238(Aspheric) | $d_{21}$= 1.4117 | $n_{d11}$=1.58913 | $\nu_{d11}$=61.26 |
| $r_{22}$= -9.8048 | $d_{22}$= 0.5599 | | |
| $r_{23}$= $\infty$ | $d_{23}$= 0.8000 | $n_{d12}$=1.51633 | $\nu_{d12}$=64.14 |
| $r_{24}$= $\infty$ | $d_{24}$= 1.8000 | $n_{d13}$=1.54771 | $\nu_{d13}$=62.84 |
| $r_{25}$= $\infty$ | $d_{25}$= 0.5000 | | |
| $r_{25}$= $\infty$ | $d_{25}$= 0.5000 | $n_{d14}$=1.51633 | $\nu_{d14}$=64.14 |
| $r_{27}$= $\infty$ | $d_{27}$= 1.3641 | | |
| $r_{28}$= $\infty$ (Image Plane) | | | |

Aspherical Coefficients

8 th surface
K = 1.5876
$A_4$ = 2.6616 $\times 10^{-4}$
$A_6$ = 3.3939 $\times 10^{-6}$
$A_8$ =-1.0023 $\times 10^{-7}$
$A_{10}$= 0
1 3 th surface
K = 0
$A_4$ =-2.7230 $\times 10^{-4}$
$A_6$ =-5. 7432 $\times 10^{-6}$
$A_8$ =-3. 4301 $\times 10^{-7}$
$A_{10}$= 0
2 1 th surface
K = 0
$A_4$ =-8. 9975 $\times 10^{-4}$
$A_8$ =-1.8358 $\times 10^{-5}$
$A_8$ = 1. 4143 $\times 10^{-6}$
$A_{10}$= 0

**Zooming Data** ($\infty$)

|  | WE | ST | TE |
|---|---|---|---|
| f (mm) | 4.60758 | 7.85021 | 13.40785 |
| $F_{NO}$ | 2.8000 | 3.4489 | 4.6187 |
| 2 $\omega$ (°) | 65.3 | 39.0 | 22.9 |
| $d_9$ | 14.75212 | 6.67783 | 2.00000 |
| $d_{12}$ | 0.67500 | 4.26744 | 1.54139 |
| $d_{20}$ | 1.35767 | 6.03580 | 13.51290 |

Example 17

| | | | |
|---|---|---|---|
| $r_1$ = 29. 0184 | $d_1$ = 0.7437 | $n_{d1}$ =1.80400 | $\nu_{d1}$ =46.57 |
| $r_2$ = 7. 3275 | $d_2$ = 1.3049 | | |
| r3 = $\infty$ | $d_3$ = 4.0000 | $n_{d2}$ =1.80400 | $\nu_{d2}$ =46.57 |
| r4 = $\infty$ (Reflecting surface ) | $d_4$ = 3.5133 | nd$_3$ =1.80400 | $\nu_{d3}$ =46.57 |
| $r_5$ = $\infty$ | $d_5$ = 0.3000 | | |
| $r_6$ = -31.2038 | $d_6$ = 0.7673 | $n_{d4}$ =1.80400 | $\nu_{d4}$ =46.57 |
| $r_7$ = 15.2085 | $d_7$ = 1.5760 | | |
| $r_8$ = 33.1818 (Aspheric) | $d_8$ = 1.5628 | $n_{d5}$ =1.84666 | $\nu_{d5}$ =23.78 |
| $r_9$ = -29.4113 | $d_9$ =(Variable) | | |
| $r_0$ = $\infty$ (Stop) | $d_{10}$= 0.5000 | | |
| $r_{11}$= 20.3172(Aspheric) | $d_{11}$= 1.9876 | $n_{d6}$ =1.58913 | $\nu_{d6}$ =61.26 |
| $r_{12}$= -14.3558 | $d_{12}$= 0.1387 | | |
| $r_{13}$= 7.0863 | $d_{13}$= 2.5021 | $n_{d7}$ =1.48749 | $\nu_{d7}$ =70.23 |
| $r_{14}$= -521.1337 | $d_{14}$= 0.0001 | | |
| $r_{15}$= 217.6721 | $d_{15}$= 5.9501 | $n_{d8}$ =1.84666 | $\nu_{d8}$ =23.78 |
| $r_{16}$= 4.5340 | $d_{16}$=(Variable) | | |

(continued)

| | | | |
|---|---|---|---|
| $r_{17}$= 10.1062 | $d_{17}$= 1.8686 | $n_{d9}$ =1.60300 | $\nu d_9$ =65.44 |
| $r_{18}$= 46.5940 | $d_{18}$=(Variable) | | |
| $r_{19}$= -22.5387 (Aspheric) | $d_{19}$= 2.3721 | $n_{d10}$=1.58913 | $\nu_{d10}$=61.26 |
| $r_{20}$= -5.8538 | $d_{20}$= 0.4297 | | |
| $r_{21}$= ∞ | $d_{21}$= 0.8000 | $n_{d11}$=1.51633 | $\nu_{d11}$=64.14 |
| $r_{22}$= ∞ | $d_{22}$= 0.8000 | $n_{d12}$=1.54771 | $\nu_{d12}$=62.84 |
| $r_{23}$= ∞ | $d_{23}$= 0.5000 | | |
| $r_{24}$= ∞ | $d_{24}$= 0.5000 | $n_{d13}$=1.51633 | $\nu_{d13}$=64.14 |
| $r_{25}$= ∞ | $d_{25}$= 1.3824 | | |
| $r_{27}$= ∞ (Image Plane) | | | |

Aspherical Coefficients

8 th surface
K = 1. 9221
$A_4$ = 1. 0674 $\times 10^{-4}$
$A_6$ = 7. 5509 $\times 10^{-7}$
$A_8$ =-6. 9692 $\times 10^{-8}$
$A_{10}$= 0
1 1 th surface
K = 0
$A_4$ =-1. 4582 $\times 10^{-1}$
$A_6$ = 4. 2034 $\times 10^{-8}$
$A_8$ = 1. 1204 $\times 10^{-8}$
$AA_{10}$= 0
1 9 th surface
K = 0
$A_4$ =-1. 8514 $\times 10^{-3}$
$A_6$ = 6. 5803 $\times 10^{-6}$
$A_8$ =-9. 0686 $\times 10^{-7}$
$A_{10}$= 0

**Zooming Data** (∞)

| | WE | ST | TE |
|---|---|---|---|
| f (mm) | 4.65117 | 7.85007 | 13.29161 |
| $F_{NO}$ | 2.5000 | 3.4944 | 4.8337 |
| 2 $\omega$ (° ) | 68.4 | 41.7 | 24.7 |
| $d_9$ | 13.35295 | 7.17214 | 2.00000 |
| $d_{16}$ | 1.22323 | 4.89168 | 2.01917 |
| $d_{18}$ | 0.94992 | 3.89804 | 12.56077 |

Example 18

| | | | |
|---|---|---|---|
| $r_1$ = 15.9959 | $d_1$ = 2.0000 | $n_{d1}$ =1.84666 | $\nu_{d1}$ =23.78 |
| $r_2$ = 17.9366 (Aspheric) | $d_2$ = 0.8000 | | |
| $r_3$ = 122.3665 | $d_3$ = 1.0000 | $n_{d2}$ =1.72916 | $\nu_{d2}$ =54.68 |

(continued)

| | | | |
|---|---|---|---|
| $r_4 = 6.1500$ | $d_4 = 1.9000$ | | |
| $r_5 = \infty$ | $d_5 = 4.1000$ | $n_{d3} = 1.56883$ | $\nu_{d3} = 56.36$ |
| $r_6 = \infty$ (Reflecting surface ) | $d_6 = 3.9000$ | $n_{d4} = 1.56883$ | $\nu_{d4} = 56.36$ |
| $r_7 = \infty$ | $d_7 =$ (Variable) | | |
| $r_8 = \infty$ (Stop) | $d_8 = 0.5928$ | | |
| $r_9 = 14.1418$ (Aspheric) | $d_9 = 3.0000$ | $n_{d5} = 1.80610$ | $\nu_{d5} = 40.92$ |
| $r_{10} = -138.1914$ | $d_{10} =$ (Variable) | | |
| $r_{11} = 9.2691$ | $d_{11} = 3.2000$ | $n_{d6} = 1.48749$ | $\nu_{d6} = 70.23$ |
| $r_{12} = -18.4588$ | $d_{12} = 1.0064$ | $n_{d7} = 1.84666$ | $\nu_{d7} = 23.78$ |
| $r_{13} = 7.4386$ | $d_{13} = 0.5000$ | | |
| $r_{14} = 9.1725$ | $d_{14} = 2.4000$ | $n_{d8} = 1.80518$ | $\nu_{d8} = 25.42$ |
| $r_{15} = -16.4170$ | $d_{15} =$ (Variable) | | |
| $r_{16} = 44.6119$ | $d_{16} = 0.8000$ | $n_{d9} = 1.84666$ | $\nu_{d9} = 23.78$ |
| $r_{17} = 8.9511$ (Aspheric) | $d_{17} =$ (Variable) | | |
| $r_{18} = 11.2550$ | $d_{18} = 2.6000$ | $n_{d10} = 1.58913$ | $\nu_{d10} = 61.26$ |
| $r_{19} = 673.2282$ (Aspheric) | $d_{19} =$ (Variable) | | |
| $r_{20} = \infty$ | $d_{20} = 1.5000$ | $n_{d11} = 1.51633$ | $\nu_{d11} = 64.14$ |
| $r_{21} = \infty$ | $d_{21} = 1.4400$ | $n_{d12} = 1.54771$ | $\nu_{d12} = 62.84$ |
| $r_{22} = \infty$ | $d_{22} = 0.8000$ | | |
| $r_{23} = \infty$ | $d_{23} = 0.8000$ | $n_{d13} = 1.51633$ | $\nu_{d13} = 64.14$ |
| $r_{24} = \infty$ | $d_{24} = 1.0000$ | | |
| $r_{25} = \infty$ (Image Plane) | | | |

Aspherical Coefficients

2 nd surface
K = 0
$A_4 = -2.1855 \times 10^{-4}$
$A_6 = 3.4923 \times 10^{-7}$
$A_8 = 0$
$A_{10} = 0$
9 th surface
K = 5.1530
$A_4 = -2.4340 \times 10^{-4}$
$A_6 = -7.4872 \times 10^{-6}$
$A_8 = 2.0515 \times 10^{-7}$
$A_{10} = -1.0188 \times 10^{-8}$
1 7 th surface
K = -3.7152
$A_4 = 1.2209 \times 10^{-3}$
$A_6 = -1.7576 \times 10^{-5}$
$A_8 = 2.5810 \times 10^{-6}$
$A_{10} = -1.2193 \times 10^{-7}$
1 9 th surface
K = 1.4583
$A_4 = -1.5578 \times 10^{-4}$
$A_6 = -1.1072 \times 10^{-5}$
$A_8 = 5.6481 \times 10^{-7}$
$A_{10} = -8.6742 \times 10^{-9}$

**Zooming Data** ($\infty$)

|  | WE | ST | TE |
|---|---|---|---|
| f (mm) | 5.43000 | 10.61200 | 15.80000 |
| $F_{NO}$ | 2.7116 | 3.7726 | 4.5293 |
| $2\omega$ (°) | 63.5 | 35.7 | 24.5 |
| $d_7$ | 13.12435 | 4.47821 | 0.50000 |
| $d_{10}$ | 0.81880 | 1.71785 | 0.50000 |
| $d_{15}$ | 0.60000 | 2.00387 | 4.09707 |
| $d_{17}$ | 1.40000 | 8.20925 | 11.93740 |
| $d_{19}$ | 2.71758 | 2.25155 | 1.62627 |

Example 1 9

| | | | |
|---|---|---|---|
| $r_1$ = 49.3427 | $d_1$ = 2.0000 | $n_{d1}$ =1.84666 | $\nu_{d1}$ =23.78 |
| $r_2$ = -115.4656 | $d_2$ = 0.4000 | | |
| $r_3$ = -52.5304 (Aspheric) | $d_3$ = 1.0000 | $n_{d2}$ =1.69350 | $\nu_{d2}$ =53.21 |
| $r_4$ = 5.8428 | $d_4$ = 1.8000 | | |
| $r_5$ = $\infty$ | $d_5$ = 4.0000 | $n_{d3}$ =1.56883 | $\nu_{d3}$ =56.36 |
| $r_6$ = $\infty$ (Reflecting surface ) | $d_6$ = 3.8000 | $n_{d4}$ =1.56883 | $\nu_{d4}$ =56.36 |
| $r_7$ = $\infty$ | $d_7$ =(Variable) | | |
| $r_8$ = $\infty$ (Stop) | $d_8$ = 0.6000 | | |
| $r_9$ = 8.0295(Aspheric) | $d_9$ = 2.8000 | $n_{d5}$ =1.69350 | $\nu_{d5}$ =53.21 |
| $r_{10}$= -5.9145 | $d_{10}$= 0.8000 | $n_{d6}$ =1.80440 | $\nu_{d6}$ =39.59 |
| $r_{11}$= -12.3640 | $d_{11}$=(Variable) | | |
| $r_{12}$= 26.8805 | $d_{12}$= 0.8000 | $n_{d7}$ =1.84666 | $\nu_{d7}$ =23.78 |
| $r_{13}$= 7.1849(Aspheric) | $d_{13}$=(Variable) | | |
| $r_{14}$= 10.7803 | $d_{14}$= 3.1000 | $n_{d8}$ =1.48749 | $\nu_{d8}$ =70.23 |
| $r_{15}$= -52.9481 | $d_{15}$=(Variable) | | |
| $r_{16}$= $\infty$ | $d_{16}$= 1.5000 | $n_{d9}$ =1.51633 | $\nu_{d9}$ =64.14 |
| $r_{17}$= $\infty$ | $d_{17}$= 1.4400 | $n_{d10}$=1.54771 | $\nu_{d10}$=62.84 |
| $r_{18}$= $\infty$ | $d_{18}$= 0.8000 | | |
| $r_{19}$= $\infty$ | $d_{19}$= 0.8000 | $n_{d11}$=1.51633 | $\nu_{d11}$ =64.14 |
| $r_{20}$= $\infty$ | $d_{20}$= 1.0000 | | |
| $r_{21}$= $\infty$ (Image Plane) | | | |

Aspherical Coefficients

3 rd surface
K = 0
$A_4$ = 2. 6048 $\times$ 10$^{-4}$
$A_6$ =-3. 2365 $\times$10$^{-6}$
$A_8$ = 2. 2913 $\times$10$^{-8}$
$A_{10}$= 0
9 th surface
K = 0
$A_4$ =-3. 0615 $\times$10$^{-4}$
$A_6$ =-2. 0330 $\times$10$^{-6}$

$A_8 = -1.0403 \times 10^{-7}$
$A_{10} = 0$
13th surface
$K = -3.5241$
$A_4 = 1.8328 \times 10^{-3}$
$A_6 = -1.6164 \times 10^{-5}$
$A_8 = 3.5495 \times 10^{-6}$
$A_{10} = -1.2410 \times 10^{-7}$

**Zooming Data** ($\infty$)

|  | WE | ST | TE |
|---|---|---|---|
| f (mm) | 5.38001 | 8.50001 | 13.45001 |
| $F_{NO}$ | 3.0358 | 3.8702 | 4.5606 |
| $2\omega$ (°) | 65.8 | 43.8 | 28.4 |
| $d_7$ | 11.53527 | 6.15290 | 0.50000 |
| $d_{11}$ | 2.10162 | 2.49863 | 3.68430 |
| $d_{13}$ | 3.96820 | 9.09478 | 10.56416 |
| $d_{15}$ | 1.75491 | 1.61369 | 4.61155 |

Example 2 0

| | | | |
|---|---|---|---|
| $r_1$ = 21.0760 | $d_1$ = 1.4000 | $n_{d1}$ =1.74320 | $\nu_{d1}$ =49.34 |
| $r_2$ = 7.9352 (Aspheric) | $d_2$ = 2.8000 | | |
| $r_3 = \infty$ | $d_3$ = 6.5000 | $n_{d2}$ =1.56883 | $\nu_{d2}$ =56.36 |
| $r_4 = \infty$ (Reflecting surface ) | $d_4$ = 6.0000 | $n_{d3}$ =1.56883 | $\nu_{d3}$ =56.36 |
| $r_5 = \infty$ | $d_5$ = 0.8000 | | |
| $r_6$ = -18.8610 | $d_6$ = 0.8000 | $n_{d4}$ =1.72916 | $\nu_{d4}$ =54.68 |
| $r_7$ = 29.7460 | $d_7$ = 0.5273 | | |
| $r_8$ = 25.1850 | $d_8$ = 1.9000 | $n_{d5}$ =1.84666 | $\nu_{d5}$ =23.78 |
| $r_9$ = -121.8149 | $d_9$ =(Variable) | | |
| $r_{10}= \infty$ (Stop) | $d_{10}$= 0.8000 | | |
| $r_{11}$= 11.8772 (Aspheric) | $d_{11}$= 1.9992 | $n_{d6}$ =1.49700 | $\nu_{d6}$ =81.54 |
| $r_{12}$= -22.2117 | $d_{12}$= 0.3000 | | |
| $r_{13}$= 8.0295 | $d_{13}$= 1.9997 | $n_{d7}$ =1.48749 | $\nu_{d7}$ =70.23 |
| $r_{14}$= -16.2855 | $d_{14}$= 0.7997 | $n_{d8}$ =1.64769 | $\nu_{d8}$ =33.79 |
| $r_{15}$= -52.6732 | $d_{15}$= 0.3000 | | |
| $r_{16}$= 7.3242 | $d_{16}$= 1.3308 | $n_{d9}$ =1.84666 | $\nu_{d9}$ =23.78 |
| $r_{17}$= 4.4772 | $d_{17}$= 1.2000 | | |
| $r_{18}$= 17.2769 | $d_{18}$= 1.1317 | $n_{d10}$=1.80610 | $\nu_{d10}$=40.92 |
| $r_{19}$= 6.2199 | $d_{19}$=(Variable) | | |
| $r_{20}$= 9.0812 | $d_{20}$= 2.0000 | $n_{d11}$=1.61800 | $\nu_{d11}$=63.33 |
| $r_{21}$= 19.8406 | $d_{21}$=(Variable) | | |
| $r_{22}$= -34.2139 (Aspheric) | $d_{22}$= 2.0000 | $n_{d12}$=1.58313 | $\nu_{d12}$=59.38 |
| $r_{23}$= -9.7728 | $d_{23}$= 1.0032 | | |
| $r_{24}= \infty$ | $d_{25}$= 1.4400 | $n_{d13}$=1.54771 | $\nu_{d13}$=62.84 |
| $r_{25}= \infty$ | $d_{26}$= 0.8000 | | |
| $r_{26}= \infty$ | $d_{27}$= 0.8000 | $n_{d14}$=1.51633 | $\nu_{d14}$=64.14 |
| $r_{27}= \infty$ | $d_{28}$= 1.0003 | | |
| $r_{28}= \infty$ (Image Plane) | | | |

Aspherical Coefficients

2 nd surface
K = 0
$A_4 = -9.3483 \times 10^{-5}$
$A_6 = 1.4787 \times 10^{-7}$
$A_8 = -4.5620 \times 10^{-8}$
$A_{10} = 0$
1 1 th surface
K = 0
$A_4 = -2.6863 \times 10^{-4}$
$A_6 = -1.0879 \times 10^{-7}$
$A_8 = 3.8711 \times 10^{-9}$
$A_{10} = 0$
2 2 th surface
K = 0
$A_4 = -4.8081 \times 10^{-4}$
$A_6 = 5.9535 \times 10^{-6}$
$A_8 = -1.6767 \times 10^{-7}$
$A_{10} = 0$

**Zooming Data** ($\infty$)

|  | WE | ST | TE |
|---|---|---|---|
| f (mm) | 5.80000 | 9.17005 | 14.49992 |
| $F_{NO}$ | 2.6880 | 3.4974 | 4.5402 |
| $2\omega$ (°) | 60.8 | 40.1 | 25.4 |
| $d_9$ | 14.10553 | 7.78994 | 2.48873 |
| $d_{19}$ | 1.54225 | 5.16705 | 2.56297 |
| $d_{2.1}$ | 2.32790 | 5.01801 | 12.92472 |

Example 2 1

| | | | |
|---|---|---|---|
| $r_1$ = 16.1825 (Aspheric) | $d_1$ = 1.4000 | $n_{d1}$ =1.80610 | $\nu_{d1}$ =40.92 |
| $r_2$ = 7.3872 | $d_2$ = 3.5000 | | |
| $r_3$ = ∞ | $d_3$ = 6.5000 | $n_{d2}$ =1.60311 | $\nu_{d2}$ =60.64 |
| $r_4$ = ∞ (Reflecting surface ) | $d_4$ = 6.0000 | $n_{d3}$ =1.60311 | $\nu_{d3}$ =60.64 |
| $r_5$ = ∞ | $d_5$ = 0.7950 | | |
| $r_6$ = -27.1461 | $d_6$ = 0.8000 | $n_{d4}$ =1.72916 | $\nu_{d4}$ =54.68 |
| $r_7$ = 20.2982 | $d_7$ = 0.5273 | | |
| $r_8$ = 17.2255 | $d_8$ = 1.9000 | $n_{d5}$ =1.84666 | $\nu_{d5}$ =23.78 |
| $r_9$ = 90.2451 | $d_9$ = (Variable) | | |
| $r_{10}$ = ∞ (Stop) | $d_{10}$ = 0.8000 | | |
| $r_{11}$ = 17.0416(Aspheric) | $d_{11}$ = 1.9965 | $n_{d6}$ =1.56384 | $\nu_{d6}$ =60.67 |
| $r_{12}$ = -13.7245 | $d_{12}$ = 0.5000 | | |
| $r_{13}$ = 5.5039 | $d_{13}$ = 3.7857 | $n_{d7}$ =1.48749 | $\nu_{d7}$ =70.23 |
| $r_{14}$ = -38.8943 | $d_{14}$ = 0.8000 | $n_{d8}$ =1.69895 | $\nu_{d8}$ =30.13 |
| $r_{15}$ = 4.2611 | $d_{15}$ =(Variable) | | |
| $r_{16}$ = 16.8715 | $d_{16}$ = 2.0000 | $n_{d9}$ =1.48749 | $\nu_{d9}$ =70.23 |

(continued)

| | | | |
|---|---|---|---|
| r$_{17}$= 96.4706 | d$_{17}$=(Variable) | | |
| r$_{18}$= -60.1937 | d$_{18}$= 2.0000 | n$_{d10}$=1.56384 | ν$_{d10}$=60.67 |
| r$_{19}$= -11.5463 (Aspheric) | d$_{19}$= 1.0039 | | |
| r$_{20}$= ∞ | d$_{20}$= 1.4400 | n$_{d11}$=1.54771 | ν$_{d11}$=62.84 |
| r$_{21}$= ∞ | d$_{21}$= 0.8000 | | |
| r$_{22}$= ∞ | d$_{22}$= 0.8000 | n$_{d12}$=1.51633 | ν$_{d12}$=64.14 |
| r$_{23}$= ∞ | d$_{23}$= 1.0021 | | |
| r$_{24}$= ∞ (Image Plane) | | | |

Aspherical Coefficients

1st surface
K = 0
A$_4$ = 5. 1308 ×10$^{-5}$
A$_6$ = = 2. 3428 ×10$^{-7}$
A$_8$ =-3. 7916 ×10$^{-9}$
A$_{10}$= 7. 2819 ×10$^{-11}$
1 1 th surface
K = 0
A$_4$ =-1. 6960 ×10$^{-7}$
A$_6$ =-1. 0587 ×10$^{-6}$
A$_8$ = 5. 6885 ×10$^{-8}$
A$_{10}$=-2. 0816 ×10$^{-10}$
19th surface
K = 0
A$_4$ = 2. 9238 ×10$^{-4}$
A$_6$ =-1.4179 ×10$^{-5}$
A$_8$ = 6. 7945 ×10$^{-7}$
A$_{10}$=-1. 6439 ×10$^{-8}$

**Zooming Data** (∞)

| | WE | ST | TE |
|---|---|---|---|
| f (mm) | 5.80001 | 9.17026 | 14.49938 |
| F$_{NO}$ | 2.6926 | 3.5230 | 4.5194 |
| 2ω (°) | 61.1 | 40.1 | 25.7 |
| d$_9$ | 14.09978 | 8.00554 | 2.48873 |
| d$_{15}$ | 2.47558 | 7.50212 | 3.24411 |
| d$_{17}$ | 3.07729 | 4.13993 | 13.92316 |

Example 2 2

| | | | |
|---|---|---|---|
| r$_1$ = 21.2658 | d$_1$ = 1.0000 | n$_{d1}$ =1.74100 | ν$_{d1}$ =52.64 |
| r$_2$ = 8.6245 | d$_2$ = 3.3711 | | |
| r$_3$ = ∞ | d$_3$ = 5.8400 | n$_{d2}$ =1.80400 | ν$_{d2}$ =46.57 |
| r$_4$ = ∞ (Reflecting surface ) | d$_4$ = 5.4952 | n$_{d3}$ =1.80400 | ν$_{d3}$ =46.57 |
| r$_5$ = ∞ | d$_5$ = 0.3221 | | |

(continued)

| | | | |
|---|---|---|---|
| $r_6 = 300.0000$ | $d_6 = 1.0000$ | $n_{d4} = 1.74320$ | $\nu_{d4} = 49.34$ |
| $r_7 = 15.3314$ (Aspheric) | $d_7 = 0.5979$ | | |
| $r_8 = 15.8974$ | $d_8 = 1.4903$ | $n_{d5} = 1.84666$ | $\nu_{d5} = 23.78$ |
| $r_9 = 43.0822$ | $d_9 = $(Variable) | | |
| $r_{10} = \infty$ (Stop) | $d_{10} = 0.6000$ | | |
| $r_{11} = 63.9771$ | $d_{11} = 1.3913$ | $n_{d6} = 1.61800$ | $\nu_{d6} = 63.33$ |
| $r_{12} = -23.2380$ | $d_{12} = $(Variable) | | |
| $r_{13} = 7.9674$(Aspheric) | $d_{13} = 2.3478$ | $n_{d7} = 1.48749$ | $\nu_{d7} = 70.23$ |
| $r_{14} = -68.3182$ | $d_{14} = 0.1000$ | | |
| $r_{15} = 24.3652$ | $d_{15} = 3.3012$ | $n_{d8} = 1.84666$ | $\nu_{d8} = 23.78$ |
| $r_{16} = 7.7880$ | $d_{16} = 0.2484$ | | |
| $r_{17} = 9.2912$ | $d_{17} = 2.1349$ | $n_{d9} = 1.72916$ | $\nu_{d9} = 54.68$ |
| $r_{18} = -19.4929$ | $d_{18} = 0.7000$ | $n_{d10} = 1.53172$ | $\nu_{d10} = 48.84$ |
| $r_{19} = 5.2999$ | $d_{19} = $ (Variable) | | |
| $r_{20} = -22.5496$ (Aspheric) | $d_{20} = 2.5068$ | $n_{d11} = 1.58913$ | $\nu_{d11} = 61.14$ |
| $r_{21} = -6.5395$ | $d_{21} = 1.0000$ | | |
| $r_{22} = \infty$ | $d_{22} = 1.5000$ | $n_{d12} = 1.51633$ | $\nu_{d12} = 64.14$ |
| $r_{23} = \infty$ | $d_{23} = 1.4400$ | $n_{d13} = 1.54771$ | $\nu_{d13} = 62.84$ |
| $r_{24} = \infty$ | $d_{24} = 0.8000$ | | |
| $r_{25} = \infty$ | $d_{25} = 0.8000$ | $n_{d14} = 1.51633$ | $\nu_{d14} = 64.14$ |
| $r_{26} = \infty$ | $d_{26} = 1.0894$ | | |
| $r_{27} = \infty$ (Image Plane) | | | |

Aspherical Coefficients

7 th surface
$K = 0$
$A_4 = -6.9423 \times 10^{-5}$
$A_6 = 1.9216 \times 10^{-7}$
$A_8 = -2.3395 \times 10^{-8}$
$A_{10} = 0$
1 3 th surface
$K = 0$
$A_4 = -2.1881 \times 10^{-4}$
$A_6 = -2.0288 \times 10^{-6}$
$A_8 = 7.6472 \times 10^{-10}$
$A_{10} = 0$
2 0 th surface
$K = 0$
$A_4 = -1.0095 \times 10^{-3}$
$A_6 = 3.4022 \times 10^{-8}$
$A_8 = -1.7165 \times 10^{-7}$
$A_{10} = 0$

**Zooming Data** ($\infty$)

| | WE | ST | TE |
|---|---|---|---|
| f (mm) | 5.52179 | 7.96811 | 15.98093 |
| $F_{NO}$ | 2.4770 | 2.9873 | 4.5000 |

(continued)

|  | WE | ST | TE |
|---|---|---|---|
| $2\omega$ ( ° ) | 64.5 | 44.7 | 22.7 |
| $d_9$ | 17.73448 | 10.81643 | 2.00000 |
| $d_{12}$ | 1.20000 | 3.80000 | 3.50000 |
| $d_{19}$ | 2.60300 | 5.58623 | 15.86209 |

Example 2 3

| | | | |
|---|---|---|---|
| $r_1$ = 24.8917 | $d_1$ = 1.0000 | $n_{d1}$ =1.74100 | $v_{d1}$ =52.64 |
| $r_2$ = 8.0792 | $d_2$ = 2.3760 | | |
| $r_3$ = ∞ | $d_3$ = 5.2400 | $n_{d2}$ =1.80400 | $v_{d2}$ =46.57 |
| $r_4$ = ∞ (Reflecting surface ) | $d_4$ = 5.0006 | $n_{d3}$ =1.80400 | $v_{d3}$ =46.57 |
| $r_5$ = ∞ | $d_5$ = 0.2922 | | |
| $r_6$ = 300.0000 | $d_6$ = 1.0000 | $n_{d4}$ =1.74320 | $v_{d4}$ =49.34 |
| $r_7$ = 14.5213 (Aspheric) | $d_7$ = 0.1000 | | |
| $r_8$ = 14.5896 | $d_8$ = 1.7517 | $n_{d5}$ =1.84666 | $v_{d5}$ =23.78 |
| $r_9$ = 64.9869 | $d_9$ =(Variable) | | |
| $r_{10}$= ∞ (Stop) | $d_{10}$= 0.6000 | | |
| $r_{11}$ = 33.4595 | $d_{11}$= 1.8985 | $n_{d6}$ =1.61800 | $v_{d6}$ =63.33 |
| $r_{12}$= -11.1499 | $d_{12}$= 0.7000 | $n_{d7}$ =1.80518 | $v_{d7}$ =25.42 |
| $r_{13}$= -20.0542 | $d_{13}$=(Variable) | | |
| $r_{14}$ = 10.2987(Aspheric) | $d_{14}$= 2.0299 | $n_{d8}$ =1.48749 | $v_{d8}$ =70.23 |
| $r_{15}$= 18890.0000 | $d_{15}$= 0.1000 | | |
| $r_{16}$= 19.8062 | $d_{16}$= 4.5045 | $n_{d9}$ =1.84666 | $v_{d9}$ =23.78 |
| $r_{17}$= 9.7836 | $d_{17}$= 0.2000 | | |
| $r_{18}$= 11.2175 | $d_{18}$ = 1.7598 | $n_{d10}$=1.72916 | $v_{d10}$=54.68 |
| $r_{19}$= -51.5183 | $d_{19}$= 0.7000 | $n_{d11}$=1.53172 | $v_{d11}$=48.84 |
| $r_{20}$= 5.5430 | $d_{20}$=(Variable) | | |
| $r_{21}$= -23.0137(Aspheric) | $d_{21}$= 1.9685 | $n_{d12}$=1.58913 | $v_{d12}$=61.14 |
| $r_{22}$= -7.0933 | $d_{22}$= 1.0000 | | |
| $r_{23}$= ∞ | $d_{23}$= 1.5000 | $n_{d13}$=1.51633 | $v_{d13}$=64.14 |
| $r_{24}$= ∞ | $d_{24}$= 1.4400 | $n_{d14}$=1.54771 | $v_{d14}$=62.84 |
| $r_{25}$= ∞ | $d_{15}$= 0.8000 | | |
| $r_{26}$= ∞ | $d_{16}$= 0.8000 | $n_{d15}$=1.51633 | $v_{d15}$=64.14 |
| $r_{27}$= ∞ | $d_{17}$= 1.0106 | | |
| $r_{28}$= ∞ (Image Plane) | | | |

Aspherical Coefficients

7 th surface
K = 0
$A_4$ =-8. 0580 ×10⁻⁵
$A_6$ = 7. 6927 ×10⁻⁷
$A_8$ =-2. 7173 ×10⁻⁸
$A_{10}$= 0
1 4 th surface
K = 0

$A_4 = -1.1033 \times 10^{-4}$
$A_6 = -1.4285 \times 10^{-8}$
$A_8 = -1.8629 \times 10^{-8}$
$A_{10} = 0$
2 1 th surface
$K = 0$
$A_4 = -8.5891 \times 10^{-4}$
$A_6 = 1.0215 \times 10^{-5}$
$A_8 = -3.2143 \times 10^{-7}$
$A_{10} = 0$

**Zooming Data** ($\infty$)

|  | WE | ST | TE |
|---|---|---|---|
| f (mm) | 5.86879 | 9.99877 | 17.39648 |
| $F_{NO}$ | 2.4340 | 3.2140 | 4.5000 |
| $2\omega$ ( ° ) | 61.4 | 35.8 | 21.0 |
| $d_9$ | 17.88781 | 8.41716 | 2.00000 |
| $d_{13}$ | 1.20000 | 6.81663 | 3.50000 |
| $d_{20}$ | 3.14136 | 7.01231 | 16.74709 |

Example 2 4

| | | | |
|---|---|---|---|
| $r_1 = 41.9739$ | $d_1 = 1.2000$ | $n_{d1} = 1.77250$ | $v_{d1} = 49.60$ |
| $r_2 = 11.1642$ | $d_2 = 2.9000$ | | |
| $r_3 = \infty$ | $d_3 = 6.5000$ | $n_{d2} = 1.78590$ | $v_{d2} = 44.20$ |
| $r_4 = \infty$ (Reflecting surface ) | $d_4 = 6.0000$ | $n_{d3} = 1.78590$ | $v_{d3} = 44.20$ |
| $r_5 = \infty$ | $d_5 = 0.3971$ | | |
| $r_6 = 28.0000$ | $d_6 = 1.2000$ | $n_{d4} = 1.74330$ | $v_{d4} = 49.33$ |
| $r_7 = 11.3578$ (Aspheric) | $d_7 = 0.3457$ | | |
| $r_8 = 9.4845$ | $d_8 = 1.7925$ | $n_{d5} = 1.84666$ | $v_{d5} = 23.78$ |
| $r_9 = 14.2959$ | $d_9 =$ (Variable) | | |
| $r_{10} = \infty$ (Stop) | $d_{10} = 1.0000$ | | |
| $r_{11} = 47.8757$ | $d_{11} = 1.9600$ | $n_{d6} = 1.72916$ | $v_{d6} = 54.68$ |
| $r_{12} = -9.0806$ | $d_{12} = 0.7000$ | $n_{d7} = 1.72825$ | $v_{d7} = 28.46$ |
| $r_{13} = -25.4395$ | $d_{13} =$ (Variable) | | |
| $r_{14} = 9.1761$ (Aspheric) | $d_{14} = 1.9500$ | $n_{d8} = 1.74330$ | $v_{d8} = 49.33$ |
| $r_{15} = 75.3616$ | $d_{15} = 0.8461$ | | |
| $r_{16} = 24.3002$ | $d_{16} = 3.8969$ | $n_{d9} = 1.74330$ | $v_{d9} = 49.33$ |
| $r_{17} = \infty$ | $d_{17} = 1.0000$ | $n_{d10} = 1.72825$ | $v_{d10} = 28.46$ |
| $r_{18} = 4.8249$ | $d_{18} =$ (Variable) | | |
| $r_{19} = 49.5382$ | $d_{19} = 2.7500$ | $n_{d11} = 1.69350$ | $v_{d11} = 53.20$ |
| $r_{20} = -10.0407$ (Aspheric) | $d_{20} = 0.8269$ | | |
| $r_{21} = \infty$ | $d_{21} = 1.4400$ | $n_{d12} = 1.54771$ | $v_{d12} = 62.84$ |
| $r_{22} = \infty$ | $d_{22} = 0.8000$ | | |
| $r_{23} = \infty$ | $d_{23} = 0.8000$ | $n_{d13} = 1.51633$ | $v_{d13} = 64.14$ |
| $r_{24} = \infty$ | $d_{24} = 1.0447$ | | |
| $r_{25} = \infty$ (Image Plane) | | | |

Aspherical Coefficients

7 th surface
K = 0
$A_4 = 2.2504 \times 10^{-5}$
$A_6 = 2.6875 \times 10^{-6}$
$A_8 = -1.2962 \times 10^{-7}$
$A_{10} = 2.8718 \times 10^{-9}$
1 4 th surface
K = 0
$A_4 = -9.8664 \times 10^{-5}$
$A_6 = 4.0400 \times 10^{-6}$
$A_8 = -4.4986 \times 10^{-7}$
$A_{10} = 1.3851 \times 10^{-8}$
20th surface
K = 0
$A_4 = 5.3089 \times 10^{-4}$
$A_6 = -1.6198 \times 10^{-5}$
$A_8 = 4.4581 \times 10^{-7}$
$A_{10} = -4.9080 \times 10^{-9}$

**Zooming Data** (∞)

|            | WE       | ST      | TE       |
|------------|----------|---------|----------|
| f (mm)     | 6.02622  | 9.31725 | 14.28897 |
| $F_{NO}$   | 2.7652   | 3.4888  | 4.5271   |
| $2\omega$ ( ° ) | 62.4 | 42.8    | 28.7     |
| $d_9$      | 14.24100 | 6.97804 | 2.00694  |
| $d_{13}$   | 2.10000  | 6.51339 | 5.34809  |
| $d_{18}$   | 2.46549  | 5.31403 | 11.45279 |

Example 2 5

| | | | |
|---|---|---|---|
| $r_1 = -14.2761$(Aspheric) | $d_1 = 5.1000$ | $n_{d1} = 1.50913$ | $v_{d1} = 56.20$ |
| $r_2 = \infty$ (Reflecting surface ) | $d_2 = 5.7941$ | $n_{d2} = 1.50913$ | $v_{d2} = 56.20$ |
| $r_3 = \infty$ | $d_3 = 2.1000$ | | |
| $r_4 = -6.4892$ | $d_4 = 0.8000$ | $n_{d3} = 1.64000$ | $v_{d3} = 60.07$ |
| $r_5 = -84.1654$ | $d_5 = 1.1935$ | $n_{d4} = 1.84666$ | $v_{d4} = 23.78$ |
| $r_6 = -16.8306$ | $d_6 =$(Variable) | | |
| $r_7 = \infty$ (Stop) | $d_7 = 0.4000$ | | |
| $r_8 = 34.9225$ (Aspheric) | $d_8 = 1.4006$ | $n_{d5} = 1.74330$ | $v_{d5} = 49.33$ |
| $r_9 = -15.2934$ | $d_9 = 0.1500$ | | |
| $r_{10} = 6.1210$ | $d_{10} = 3.3481$ | $n_{d6} = 1.61800$ | $v_{d6} = 63.33$ |
| $r_{11} = 27.4556$ | $d_{11} = 0.8000$ | $n_{d7} = 1.84666$ | $v_{d7} = 23.78$ |
| $r_{12} = 4.9467$ | $d_{12} =$(Variable) | | |
| $r_{13} = 13.6380$ | $d_{13} = 1.4415$ | $n_{d8} = 1.51633$ | $v_{d8} = 64.14$ |
| $r_{14} = -143.7586$ | $d_{14} =$(Variable) | | |
| $r_{15} = -19.5436$ | $d_{15} = 1.3641$ | $n_{d9} = 1.58913$ | $v_{d9} = 61.25$ |
| $r_{16} = -7.1346$ (Aspheric) | $d_{16} = 0.8000$ | | |

(continued)

| | | | |
|---|---|---|---|
| $r_{17}= \infty$ | $d_{17}= 1.0500$ | $n_{d10}=1.54771$ | $v_{d10}=62.84$ |
| $r_{18}= \infty$ | $d_{18}= 0.8000$ | | |
| $r_{19}= \infty$ | $d_{19}= 0.8000$ | $n_{d11}=1.51633$ | $v_{d11}=64.14$ |
| $r_{20}= \infty$ | $d_{20}= 0.9669$ | | |
| $r_{21}= \infty$ (Image Plane) | | | |

Aspherical Coefficients

1st surface
$K = 0$
$A_4 = 3.2165 \times 10^{-4}$
$A_6 =-9.1756 \times 10^{-7}$
$A_8 = 4.1788 \times 10^{-9}$
$A_{10}= 0.0000$
8 th surface
$K = 0$
$A_4 =-1. 2083 \times 10^{-4}$
$A_6 = 1.1516 \times 10^{-7}$
$A_8 =-2.9381 \times 10^{-8}$
$A_{10}= 0.0000$
1 6 th surface
$K = 0$
$A_4 = 1.3137 \times 10^{-3}$
$A_6 =-2.0878 \times 10^{-5}$
$A_8 = 4. 9397 \times 10^{-7}$
$A_{10}= 0.0000$

**Zooming Data ($\infty$)**

| | WE | ST | TE |
|---|---|---|---|
| f (mm) | 5.02898 | 8.69474 | 14.52092 |
| $F_{NO}$ | 2.6544 | 3.5217 | 4.5079 |
| $2\omega$ ( ° ) | 64.8 | 38.2 | 22.6 |
| $d_6$ | 14.61860 | 7.39251 | 1.80000 |
| $d_{12}$ | 3.75585 | 8.20107 | 4.39975 |
| $d_{14}$ | 3.16733 | 5.96897 | 15.38987 |

Which of the zoom types $\underline{a}$ to $\underline{d}$ is used in Examples 1 to 13 is set out below with the values of conditions (1) to (31) and the values of $\underline{a}$, $t_{LPF}$ and L concerning condition (32).

| | Example 1 | Example 2 | Example 3 | Example 4 | Example 5 |
|---|---|---|---|---|---|
| **Zooming type** | a | d | c | b | b |
| ( 1 ) | 1.38822 | 1.41072 | 1.37082 | 1.45054 | 1.37212 |
| ( 2 ) | 1.66024 | 2.28107 | 2.01027 | 1.74028 | 1.58543 |
| ( 3 ) | 1.67612 | 1.52529 | 1.29028 | 1.28997 | 1.18812 |
| ( 4 ) , (4C) | 0.34947 | *** | *** | *** | *** |
| ( 5 ) , (5C) , ( 10 ) , (10C) | -0.48666 | *** | -1.00064 | *** | *** |
| ( 6 ) , (6C) , ( 11 ) , (11C) | 27.79 | *** | 33.07 | *** | *** |
| ( 7 ) , (7C) | -0.61816 | *** | *** | *** | *** |

(continued)

| Zooming type | Example 1 a | Example 2 d | Example 3 c | Example 4 b | Example 5 b |
|---|---|---|---|---|---|
| ( 8 ) , (8C) , (13) , (13C ) , (18) , (18C ) | -0.72084 | 0.25142 | 0.21762 | 0.44850 | 0.53142 |
| ( 9 ) , (9C) , (14) , (14C ) | *** | 0.73100 | 0.73030 | 0.89173 | 0.88437 |
| (12) , (12C ) , (17) , (17C ) | *** | -3.12101 | -0.79692 | -0.31222 | -0.47931 |
| (15) , (15C ) | *** | 1.35184 | *** | 0.81112 | 0.73000 |
| (16) , (16C ) | *** | 29.43 | *** | 25.56 | 25.56 |
| (19) | 0.40806 | 0.48761 | 0.38280 | 0.40516 | 0.44149 |
| (20) | 0.21992 | 0.15218 | 0.10734 | 0.14176 | -0.11046 |
| (21) | 0.70097 | 0.57446 | 0.67059 | 0.57052 | 0.60231 |
| (22) | 0.27038 | 0.27052 | 0.27044 | 0.27032 | 0.27034 |
| (23) | 1.41223 | 1.42456 | 1.42456 | 1.39716 | 1.39716 |
| (24) | 1.78590 | 1.78590 | 1.78590 | 1.78590 | 1.78592 |
| (25) | -0.19814 | -0.14934 | -0.16882 | -0.12548 | -0.14612 |
| (26) | 0.62425 | 0.43029 | 0.50182 | 0.35540 | 0.41694 |
| (27) | 1.11933 | 1.10145 | 1.13322 | 1.07061 | 1.13215 |
| (28) | 1.0 | 1.0 | 1.0 | 1.0 | 1.0 |
| (29) | 0.04 | 0.04 | 0.04 | 0.04 | 0.04 |
| (30) | 0.0 | 0.0 | 0.0 | 0.0 | 0.0 |
| (31) | 1.06 | 1.06 | 1.06 | 1.06 | 1.06 |
| a | 3.5 | 3.9 | 3.7 | 2.9 | 2.5 |
| $t_{LPF}$ | 0.55 | 0.58 | 0.52 | 0.38 | 0.30 |
| L | 7.30 | 7.30 | 7.30 | 7.30 | 7.30 |

| Zooming type | Example 6 b | Example 7 b | Example 8 b | Example 9 a | Example 10 b |
|---|---|---|---|---|---|
| (1) | 1.36326 | 1.30842 | 1.37622 | 1.49634 | 1.15970 |
| (2) | 1.57780 | 1.51202 | 1.57269 | 1.88643 | 1.47797 |
| (3) | 1.16490 | 1.13951 | 1.14667 | 3.68738 | 1.41403 |
| (4), (4C) | *** | *** | *** | 0.49409 | *** |
| (5) , (5C) , (10) , (10C) | *** | *** | *** | 0.00000 | *** |
| (6) , (6C) , (11) , (11C) | *** | *** | *** | 24.04 | *** |
| (7) , (7C) | *** | *** | *** | -0.72854 | *** |
| (8) , (8C) , (13) , (13C ) , (18) , (18C ) | 0.51417 | 0.56419 | 0.52960 | -0.42385 | 0.46600 |
| (9) , (9C) , (14) , (14C ) | 0.91188 | 0.91652 | 0.93112 | *** | 0.93549 |
| (12) , (12C ) , (17) , (17C ) | -0.24544 | -0.31721 | -0.31127 | *** | 0.16632 |
| (15) , (15C) | 0.66364 | 0.56154 | 0.56154 | *** | 0.69524 |
| (16) , (16C ) | 25.56 | 25.56 | 25.56 | *** | 25.56 |
| (19) | 0.43615 | 0.40132 | 0.40923 | 0.40737 | 0.54841 |
| (20) | 0.10368 | 0.09281 | 0.09173 | 0.26966 | 0.17155 |
| (21) | 0.60543 | 0.63420 | 0.63699 | 0.67986 | 0.49871 |
| (22) | 0.27030 | 0.27035 | 0.27038 | 0.27043 | 0.27026 |
| (23) | 1.39716 | 1.39716 | 1.39716 | 1.36976 | 1.385301 |
| (24) | 1.78590 | 1.78590 | 1.78590 | 1.78590 | 1.83481 |
| (25) | -0.14430 | -0.16362 | -0.13904 | -0.20851 | -0.23197 |
| (26) | 0.40879 | 0.47549 | 0.39515 | 0.78065 | 0.79956 |
| (27) | 1.13895 | 1.18742 | 1.12882 | 1.03909 | 1.49131 |
| (28) | 1.0 | 1.0 | 1.0 | 1.0 | 1.0 |
| (29) | 0.04 | 0.04 | 0.04 | 0.04 | 0.04 |
| (30) | 0.0 | 0.0 | 0.0 | 0.0 | 0.0 |

**EP 2 450 731 B1**

(continued)

|  | Example **6** | Example **7** | Example **8** | Example **9** | Example **10** |
|---|---|---|---|---|---|
| **Zooming type** | b | b | b | a | b |
| (31) | 1.06 | 1.06 | 1.06 | 1.06 | 1.06 |
| a | 2.8 | 2.7 | 2.6 | 3.3 | 3.1 |
| $t_{LPF}$ | 0.25 | 0.25 | 0.26 | 0.24 | 0.25 |
| L | 7.30 | 7.30 | 7.30 | 7.30 | 7.30 |

|  | Example **11** | Example **12** | Example **13** |
|---|---|---|---|
| **Zooming type** | b | b | a |
| (1) | 1.12846 | 1.06460 | 1.24661 |
| ( 2 ) | 1.43635 | 1.43051 | 1.49969 |
| ( 3 ) | 1.50110 | 1.23503 | 5.68083 |
| (4), (4C) | *** | *** | 0.80815 |
| (5) , (5C) , (10) , (10C ) | *** | *** | 0.21853 |
| (6) , (6C) , (11) , (11C) | *** | *** | 39.55 |
| (7) , (7C) | *** | *** | 0.39089 |
| (8) , (8C) , (13) , (13C ) , (18) , (18C ) | 0.44082 | 0.56189 | 0.11923 |
| (9) , (9C) , (14) , (14C ) | 1.04989 | 0.90164 | *** |
| (12) , (12C ) , (17) , (17C ) | 0.78258 | -0.31328 | *** |
| (15) , (15C ) | 0.44242 | 0.41684 | *** |
| (16) , (16C ) | 25.56 | 25.56 | *** |
| (19) | 0.52310 | 0.13339 | 0.30301 |
| (20) | 0.19211 | 0.07549 | 0.24793 |
| (21) | -0.50649 | -0.97637 | 0.95350 |
| (22) | 0.10425 | 0.11002 | 0.32739 |
| (23) | 1.40014 | 1.39808 | 1.20313 |
| (24) | 1.80610 | 1.7725 | 1.50913 |
| (25) | -0.35720 | -0.20746 | 0.27111 |
| (26) | 1.94314 | 0.59664 | 1.26698 ∗ |
| (27) | 1.53460 | 1.62493 | 1.36309 |
| (28) | 1.0 | 1.0 | 1.0 |
| (29) | 0.04 | 0.04 | 0.04 |
| (30) | 0.0 | 0.0 | 0.0 |
| (31) | 1.06 | 1.06 | 1.06 |
| a | 2.8 | 1.85 | 2.5 |
| $t_{LPF}$ | 0.25 | 0 | 1.20 |
| L | 7.30 | 3.96 | 6.0 |

**Symbol** ∗ : When the entrance surface of the prism has refracting power, $f_{11}$ stands for the focal length from the surface nearest to the object side to the exit surface of the prism.

Referring to the numerical data about Examples 1 to 13, it is understood that the optical low-pass filter is composed of a plurality of filter elements, and the thickness of the infrared cut filter, etc. is included in such data. Thus, the maximum thickness corresponds to the value of $t_{LPF}$ in the above table, rather than the value of $t_{LPF}$.

Tabulated below are the values of L, d/L, $D_{FT}/f_T$, $M_3/M_2$, $f_{11}/f_{12}$, $\beta_{Rt}$, $\underline{a}$ and $t_{LPF}$ in conditions (a) to (f) in the above examples 14 to 25.

| Example | L | d/L | $D_{FT}/f_T$ | $M_3/M_2$ | $f_{11}/f_{12}$ |
|---|---|---|---|---|---|
| 14 | 5.6 | 0.72088 | 0.78471 | 1.19347 | -0.12343 |
| 15 | 6.0 | 0.79009 | 0.76004 | 0.53348 | -0.32094 |

(continued)

| Example | L | d/L | $D_{FT}/f_T$ | $M_3/M_2$ | $f_{11}/f_{12}$ |
|---|---|---|---|---|---|
| 16 | 5.6 | 0.71748 | 0.11496 | 0.93206 | 0.36284 |
| 17 | 6.0 | 0.69413 | 0.15191 | 0.92989 | 0.20195 |
| 18 | 6.64 | 0.76797 | 0.25931 | the 3rd group is negative. | 0 |
| 19 | 6.64 | 0.74877 | 0.27393 | the 3rd group is negative. | 0 |
| 20 | 6.64 | 1.19996 | 0.17676 | 0.91213 | 0.37232 |
| 21 | 6.64 | 1.17430 | 0.22374 | 0.93381 | 0.39484 |
| 22 | 6.64 | 0.94629 | 0.21901 | 0.85382 | 0.22917 |
| 23 | 6.64 | 0.85491 | 0.20119 | 0.85523 | 0.05553 |
| 24 | 6.64 | 0.94867 | 0.37452 | 0.73366 | 0.09671 |
| 25 | 6.0 | 1.20313 | 0.30301 | 0.95350 | 1.26698 |

| Example | $\beta_{Rt}$ | a | $t_{LPF}$ |
|---|---|---|---|
| 14 | -1.6884 | 3.0 | 1.80 |
| 15 | -1.19598 | 3.0 | 1.80 |
| 16 | -1.49396 | 3.0 | 1.80 |
| 17 | -1.26884 | 3.0 | 0.80 |
| 18 | -1.51672 | 3.0 | 1.55 |
| 19 | -1.38530 | 3.0 | 1.44 |
| 20 | -1.26560 | 3.0 | 1.44 |
| 21 | -1.30121 | 3.0 | 1.44 |
| 22 | -1.05735 | 3.0 | 1.44 |
| 23 | -1.14882 | 3.0 | 1.44 |
| 24 | -0.86588 | 3.0 | 1.44 |
| 25 | -1.36309 | 2.5 | 1.20 |

Next, Examples 26-28 of the zoom lens constructed are explained with reference to the drawings.

Example 26

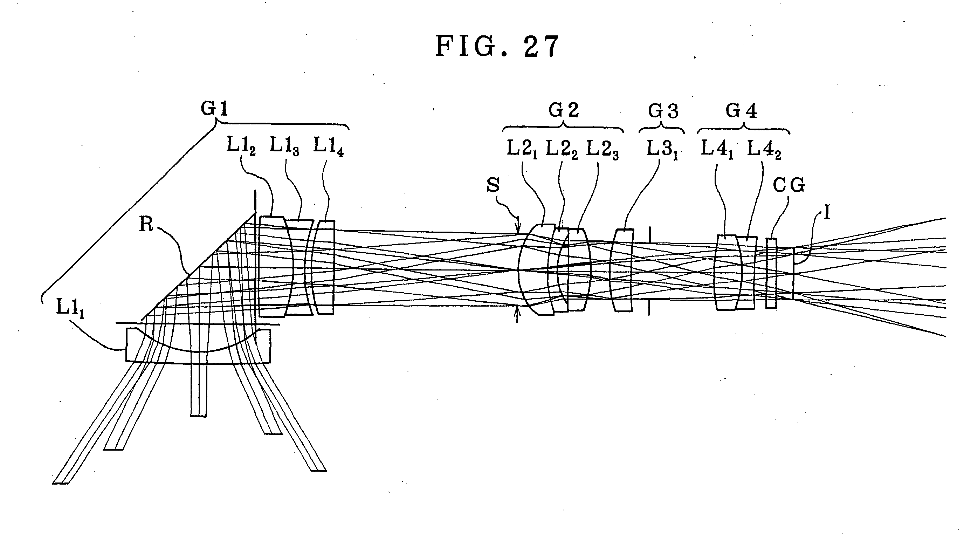

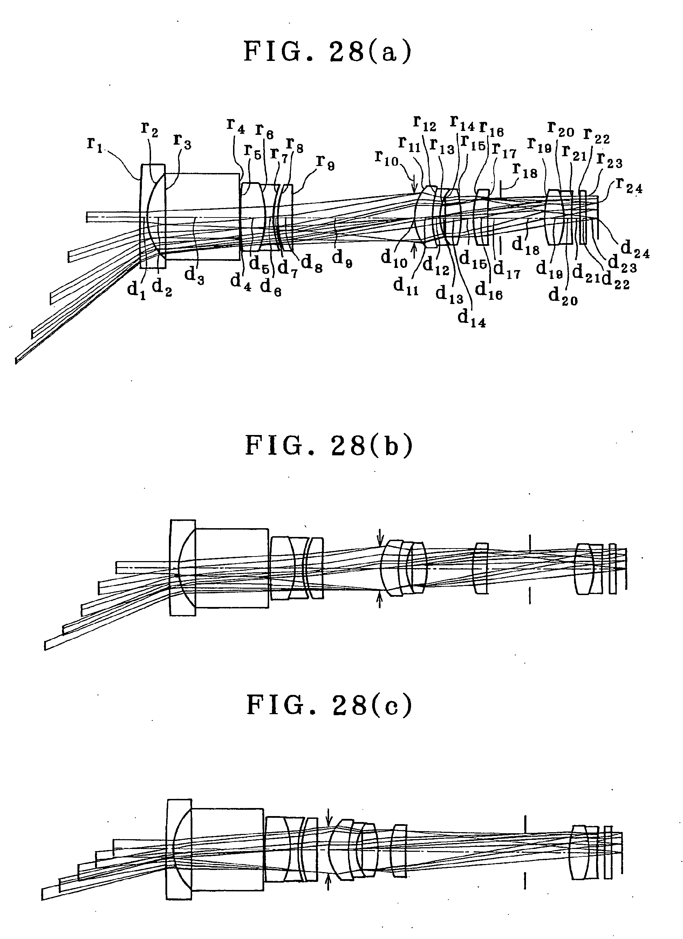

Fig. 27 is a sectional view taken along the optical axis of the optical construction of Example 26 of the zoom lens used with the electronic imaging system according to the invention, showing how the optical path is bent upon focused on an object at infinity at the wide-angle end. Figs. 28(a), 28(b) and 28(c) are sectional views taken along the optical axis of the optical construction of the zoom lens according to Example 26 at the wide-angle end (a), in an intermediate state (b) and at the telephoto end, respectively.

As shown in Fig. 27, the electronic imaging system according to Example 26 is built up of, in order from its object side, a zoom lens and an electronic image pickup device CCD. In Fig. 27, the capital I represents the image pickup plane of CCD. A plane-parallel plate form of CCD cover glass is interposed between the zoom lens and the image pickup plane I.

The zoom lens is comprised of, in order from its object side, a first lens group G1, an aperture stop S, a second lens group G2, a third lens group G3 and a fourth lens group G4.

The first lens group G1 is made up of, in order from its object side, a front subgroup, a reflecting optical element R1 for bending an optical path and a rear subgroup having negative refracting power, and has a generally negative refracting power.

The front subgroup is made up of a negative meniscus lens $L1_1$ convex on its object side. The rear subgroup is made up of, in order from its object side, a cemented lens consisting of a double-convex positive lens $L1_2$ and a double-concave negative lens $L1_3$ and having a generally negative refracting power, and a positive meniscus lens $L1_4$ convex on its object side.

The reflecting optical element R1 is provided in the form of a reflecting prism for bending the optical path through 90°.

In each example of the invention, it is noted that the aspect ratio of the effective image pickup area is 3:4, and the optical path is bent in the lateral direction.

The second lens group G2 is made up of, in order from its object side, a cemented lens consisting of a positive meniscus lens $L2_1$ convex on its object side and a negative meniscus lens $L2_2$ convex on its object side and a double-convex positive lens $L2_3$, and has a generally positive refracting power.

The third lens group G3 is made up of a positive meniscus lens $L3_1$ convex on its object side.

The fourth lens group G4 is made up of, in order from its object side, a cemented lens consisting of a double-convex positive lens $L4_1$ and a double-concave negative lens $L4_2$.

For zooming from the wide-angle end to the telephoto end of the zoom lens upon focused on an object point at infinity, the first lens group G1 and the fourth lens group G4 remain in position, the second lens group G2 together with the aperture stop S moves only toward the object side, and the third lens group G3 moves only toward the object side while the spacing between it and the second lens group G2 becomes wide and then narrow.

For focusing, the third lens group G3 moves on the optical axis of the zoom lens.

It should be noted that during focusing, the fourth lens group G4 remains in position.

Three aspheric surfaces are used; one at the image-side surface of the negative meniscus lens $L1_1$ in the first lens group G1, which is convex on its object side, one at the object-side surface of the positive meniscus lens $L2_1$ in the second lens group G2, which is convex on its object side, and one at the object-side surface of the double-convex positive lens $L4_1$ in the fourth lens group G4.

Numerical data on optical members that form the zoom lens of Example 26 will be given later.

Regarding the numerical data in Example 26, the symbols have the following meanings:

$r_1$, $r_2$, $\cdots$: radius of curvature of each lens surface,
$d_1$, $d_2$, $\cdots$: spacing between adjacent lens surfaces,
$nd_1$, $n_{d2}$, $\cdots$: d-line refractive index of each lens,
$v_{d1}$, $v_{d2}$, $\cdots$: Abbe number of each lens,
Fno.: F-number,
f: focal length of the zoom lens,
ω: half angle of view,
D0: distance from the object to the first surface,
WE: wide-angle end,
ST: intermediate state, and
TE: telephoto end.

Here let z be an optical axis on condition that the direction of propagation of light is positive and y be a direction orthogonal to the optical axis. Then, aspheric configuration is given by

$$z=(y^2/r)/[1+\{1-(K+1)(y/r)^2\}^{1/2}]+A_4y^4+A_6y^6+A_8y^8+A_{10}y^{10}$$

where r is a paraxial radius of curvature, K is a conical coefficient, and $A_4$, $A_6$, $A_8$ and $A_{10}$ are the fourth, sixth, eighth and tenth aspheric coefficients, respectively.

It is noted that such symbols are common to numerical data in the following examples, too.

Example 27

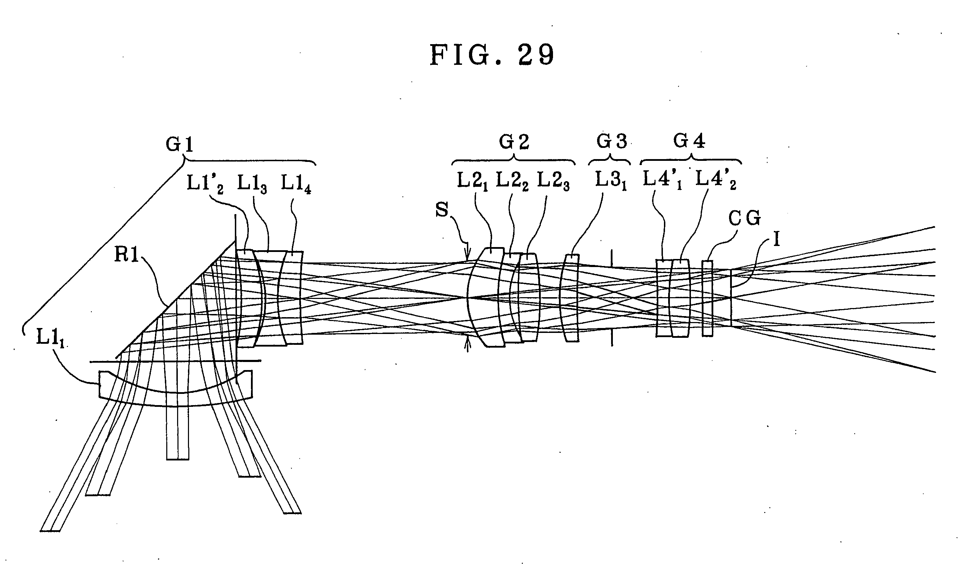

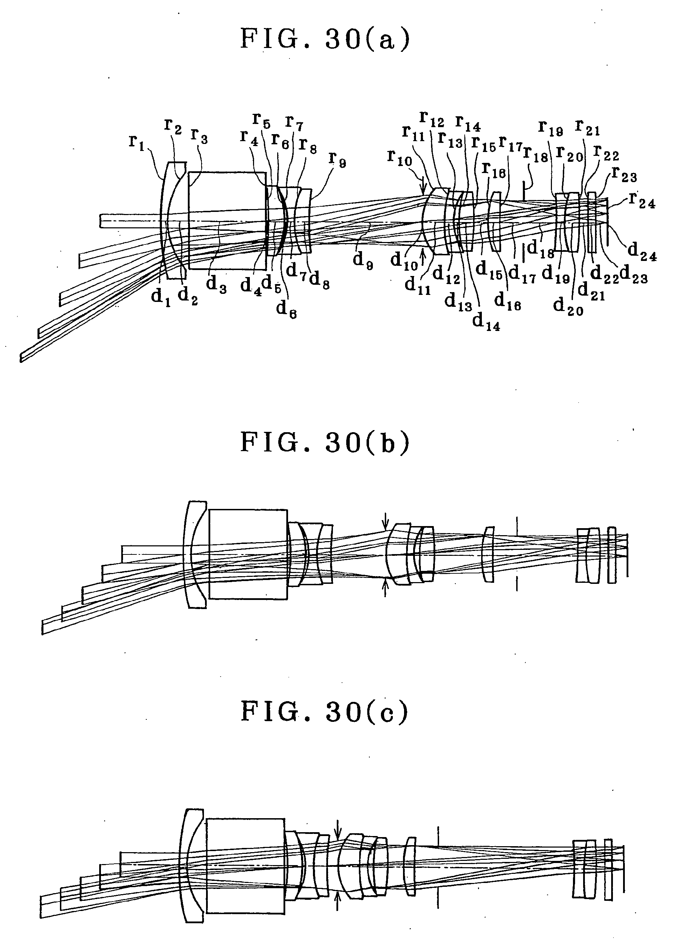

Fig. 29 is a sectional view taken along the optical axis of the optical construction of Example 27 of the zoom lens used with the electronic imaging system according to the invention, showing how the optical path is bent upon focused on an object at infinity at the wide-angle end. Figs. 30(a), 30(b) and 30(c) are sectional views taken along the optical axis of the optical construction of the zoom lens according to Example 27 at the wide-angle end (a), in an intermediate state (b) and at the telephoto end, respectively.

As shown in Fig. 29, the electronic imaging system according to Example 27 is built up of, in order from its object side, a zoom lens and an electronic image pickup device CCD. In Fig. 29, I represents the image pickup plane of CCD. A plane-parallel plate form of CCD cover glass is interposed between the zoom lens and the image pickup plane I.

The zoom lens is comprised of, in order from its object side, a first lens group G1, an aperture stop S, a second lens group G2, a third lens group G3 and a fourth lens group G4.

The first lens group G1 is made up of, in order from its object side, a front subgroup, a reflecting optical element R1 for bending an optical path and a rear subgroup having negative refracting power, and has a generally negative refracting power.

The front subgroup is made up of a negative meniscus lens $L1_1$ convex on its object side. The rear subgroup is made up of, in order from its object side, a positive meniscus lens $L1_2$' concave on its object side, and a cemented lens consisting of a double-concave negative lens $L1_3$ and a positive meniscus lens $L1_4$ convex on its object side and having a generally negative refracting power.

The reflecting optical element R1 is provided in the form of a reflecting prism for bending the optical path through 90°.

In each example of the invention, it is noted that the aspect ratio of the effective image pickup area is 3:4, and the optical path is bent in the lateral direction.

The second lens group G2 is made up of, in order from its object side, a cemented lens consisting of a positive meniscus lens $L2_1$ convex on its object side and a negative meniscus lens $L2_2$ convex on its object side and a double-convex positive lens $L2_3$, and has a generally positive refracting power.

The third lens group G3 is made up of a positive meniscus lens $L3_1$ convex on its object side.

The fourth lens group G4 is made up of, in order from its object side, a cemented lens consisting of a double-concave negative lens $L4_1$' and a double-convex positive lens $L4_2$'.

For zooming from the wide-angle end to the telephoto end of the zoom lens upon focused on an object point at infinity, the first lens group G1 and the fourth lens group G4 remain in position, the second lens group G2 together with the aperture stop S moves only toward the object side, and the third lens group G3 moves only toward the object side while the spacing between it and the second lens group G2 becomes wide and then narrow.

For focusing, the third lens group G3 moves on the optical axis of the zoom lens.

It should be noted that during focusing, too, the fourth lens group G4 remains in position.

Three aspheric surfaces are used; one at the image-side surface of the negative meniscus lens $L1_1$ in the first lens group G1, which is convex on its object side, one at the object-side surface of the positive meniscus lens $L2_1$ in the second lens group G2, which is convex on its object side, and one at the object-side surface of the double-convex positive lens $L4_2$' in the fourth lens group G4.

Numerical data on optical members that form the zoom lens of Example 27 will be given later.

Example 28

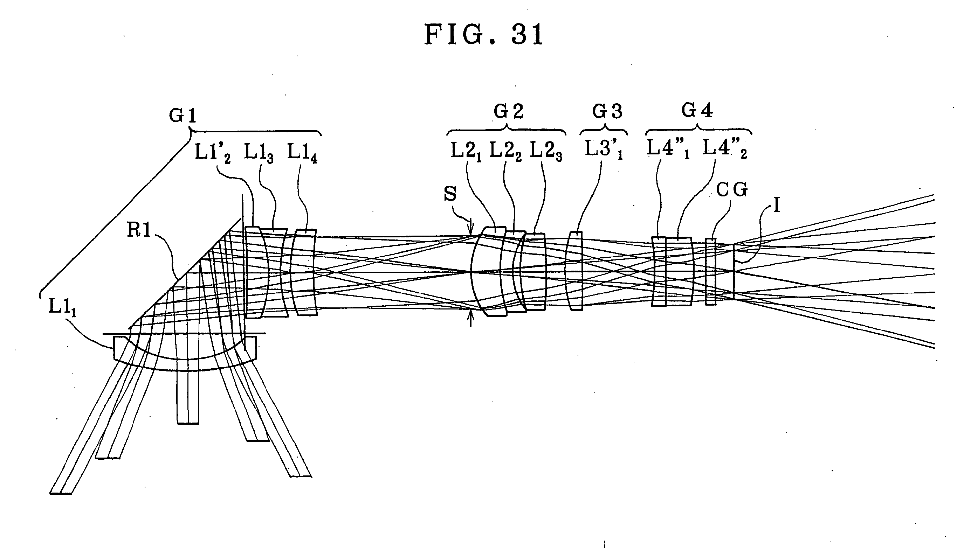

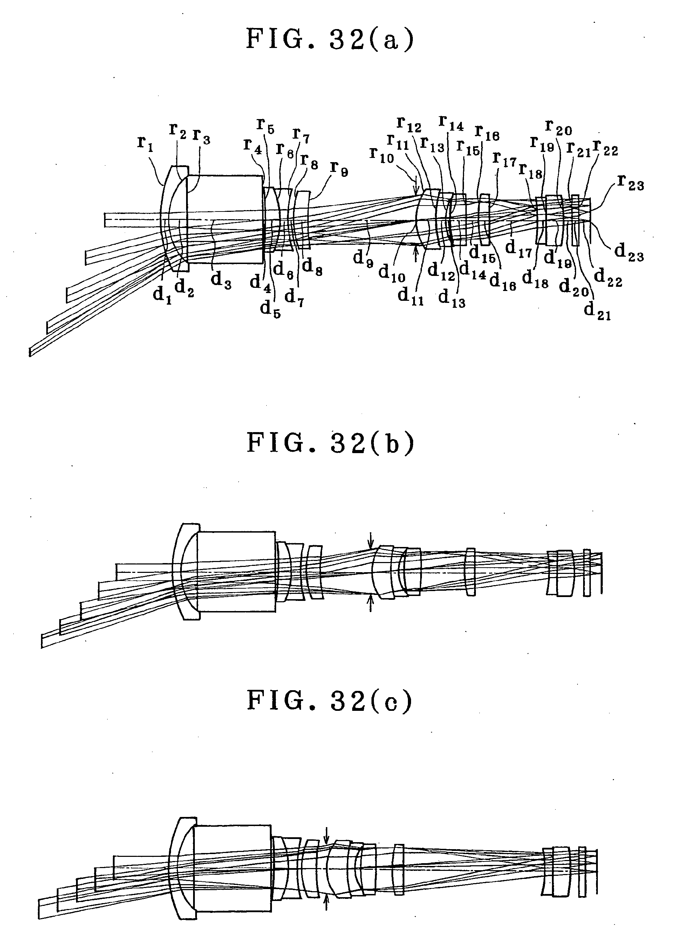

Fig. 31 is a sectional view taken along the optical axis of the optical construction of Example 28 of the zoom lens used with the electronic imaging system according to the invention, showing how the optical path is bent upon focused on an object at infinity at the wide-angle end. Figs. 32(a), 32 (b) and 32(c) are sectional views taken along the optical axis of the optical construction of the zoom lens according to Example 27 at the wide-angle end (a), in an intermediate state (b) and at the telephoto end, respectively.

As shown in Fig. 31, the electronic imaging system according to Example 28 is built up of, in order from its object side, a zoom lens and an electronic image pickup device CCD. In Fig. 31, I represents the image pickup plane of CCD. A plane-parallel plate form of CCD cover glass is interposed between the zoom lens and the image pickup plane I.

The zoom lens is comprised of, in order from its object side, a first lens group G1, an aperture stop S, a second lens group G2, a third lens group G3 and a fourth lens group G4.

The first lens group G1 is made up of, in order from its object side, a front subgroup, a reflecting optical element R1 for bending an optical path and a rear subgroup having negative refracting power, and has a generally negative refracting power.

The front subgroup is made up of a negative meniscus lens $L1_1$ convex on its object side. The rear subgroup is made up of, in order from its object side, a cemented lens consisting of a positive meniscus lens $L1_2$' concave on its object side and a double-concave negative lens $L1_3$ and having a generally negative refracting power, and a positive meniscus lens $L1_4$ convex on its object side.

The reflecting optical element R1 is provided in the form of a reflecting prism for bending the optical path through 90°.

In each example of the invention, it is noted that the aspect ratio of the effective image pickup area is 3:4, and the optical path is bent in the lateral direction.

The second lens group G2 is made up of, in order from its object side, a cemented lens consisting of a positive meniscus lens $L2_1$ convex on its object side and a negative meniscus lens $L2_2$ convex on its object side and a double-convex positive lens $L2_3$, and has a generally positive refracting power.

The third lens group G3 is made up of a double-convex positive lens $L3_1$'.

The fourth lens group G4 is made up of, in order from its object side, a cemented lens consisting of a negative lens $L4_1$" having a concave surface on its object side and a planar surface on its image side and a positive lens $L4_2$" having a planar surface on its object side and a convex surface on its image side.

For zooming from the wide-angle end to the telephoto end of the zoom lens upon focused on an object point at infinity, the first lens group G1 and the fourth lens group G4 remain in position, the second lens group G2 together with the aperture stop S moves only toward the object side, and the third lens group G3 moves only toward the object side while the spacing between it and the second lens group G2 becomes wide and then narrow.

For focusing, the third lens group G3 moves on the optical axis of the zoom lens.

It should be noted that during focusing, too, the fourth lens group G4 remains in position.

Three aspheric surfaces are used; one at the image-side surface of the negative meniscus lens $L1_1$ in the first lens group G1, which is convex on its object side, one at the object-side surface of the positive meniscus lens $L2_1$ in the second lens group G2, which is convex on its object side, and one at the image-side surface of the positive lens $L4_2"$ in the fourth lens group G4, which has a planar surface on its object side and a convex surface on its image side.

Numerical data on the optical members that form the zoom lenses of Examples 26-28 are now set out below.

Example 2 6

$r_1$ =69.3459

   $d_1$ =0.7000    $n_{d1}$ =1.80610    $v_{d1}$=40.92

$r_2$ =4.6083 (Aspheric)

   $d_2$ =1.7000

$r_3$ =∞

   $d_3$ =6.8000    $n_{d3}$ =1.80610    $v_{d3}$ =40.92

$r_4$ =∞

   $d_4$ =0.1500

$r_5$ =54.8200

   $d_5$ =2.2000    $n_{d5}$ =1.71736    $v_{d5}$ =29.52

$r_6$ =-8.5000

   $d_6$ =0.7000    $n_{d6}$ =1.80610    $v_{d6}$ =40.92

$r_7$ =8.4123

   $d_7$ =0.3500

$r_8$ =8.8098

   $d_8$ =1.4000    $n_{d8}$ =1.71736    $v_{d8}$ =29.52

$r_9$ =131.4438

   $d_9$ =D9

$r_{10}$ =∞ (Stop)

   $d_{10}$ =0

$r_{11}$ =3.6905(Aspheric)

   $d_{11}$ =1.8000    $n_{d11}$ =1.69350    $v_{d11}$ =53.21

$r_{12}$ =6.9000

   $d_{12}$ =0.7000    $n_{d12}$ =1.84666    $v_{d12}$ =23.78

$r_{13}$ =3.5205

   $d_{13}$ =0.6000

$r_{14}$ =41.4060

   $d_{14}$ =1.5000    $n_{d14}$ =1.48749    $v_{d14}$ =70.23

$r_{15}$ =-7.8730

   $d_{15}$ =D15

$r_{16}$ =7.3983

   $d_{16}$=1.4000    $n_{d16}$ =1.48749    $v_{d16}$ =70.23

$r_{17}$ =22.6658

   $d_{17}$ =D17

$r_{18}$ =∞ (Variable Transmittance Means or Shutter)

   $d_{18}$ =4.0000

$r_{19}$ =8.8186(Aspheric)

   $d_{19}$ =1.8000    $n_{d19}$ =1.69350    $v_{d19}$ =53.21

$r_{20}$ =-6.0000

   $d_{20}$ =0.7000    $n_{d20}$ =1.84666    $v_{d20}$ =23.78

(continued)

$r_{21}$ =24.3642

$d_{21}$ =0.7000

$r_{22}$ =∞

$d_{22}$ =0.6000    $n_{d22}$ =1.51633    $v_{d22}$ =64.14

$r_{23}$ =∞

$d_{23}$ =D23

$r_{24}$ =∞ (Image Pick-up Plane)

$d_{24}$ =0

Aspherical Coefficients

2 nd surface
K=0
$A_2$ =0          $A_4$ =-1.3839 × 10$^{-3}$    $A_6$ =-4.9944 × 10$^{-6}$
$A_8$ =-3.2538 × 10$^{-6}$    $A_{10}$=0
11th surface
K=0
$A_2$ =0          $A_4$ =1.1930 × 10$^{-3}$    $A_6$ =-2.3404 × 10$^{-5}$
$A_8$ =-8.1742 × 10$^{-6}$    $A_{10}$=0
19th surface
K=0
$A_2$ =0          $A_4$ =-1.3986 × 10$^{-4}$    $A_6$ =-1.5479 × 10$^{-4}$
$A_8$ =1.5996 × 10$^{-5}$    $A_{10}$=0

Zooming Data

When D0 (distance from object to the first surface) is infinity(∞),

|  | WE | ST | TE |
|---|---|---|---|
| f (mm) | 2.50881 | 4.33366 | 7.49747 |
| Fno . | 2.6859 | 3.4516 | 4.5092 |
| $\omega$ (°) | 39.7 | 24.8 | 14.5 |
| D0 | ∞ | ∞ | ∞ |
| D9 | 11.53831 | 5.32706 | 0.89925 |
| D15 | 1.10008 | 4.40521 | 1.29951 |
| D17 | 1.08630 | 4.00010 | 11.52593 |
| D23 | 1.00000 | 1.00000 | 1.00000 |

When D 0 (distance from object to the first surface) is near distance(1 6cm),

|  | WE | ST | TE |
|---|---|---|---|
| D0 | 162.6560 | 162.6560 | 162.6560 |
| D9 | 11.53831 | 5.32706 | 0.89925 |
| D15 | 1.02955 | 4.22279 | 0.81871 |
| D17 | 1.15683 | 4.18253 | 12.00672 |
| D23 | 1.00000 | 1.00000 | 1.00000 |

Example 2 7

r$_1$ =18.1048

    d$_1$ =0.7000   n$_{d1}$ =1.80610   $v_{d1}$=40.92

r$_2$ =5.9446 (Aspheric)

    d$_2$ =1.7000

r$_3$ =∞

    d$_3$ =6.8000   n$_{d3}$=1.80610   $v_{d3}$=40.92

r$_4$ =∞

    d$_4$ =0.2500

r$_5$ =15.8755

    d$_5$ =1.2000   n$_{d5}$=1.77250   $v_{d5}$=49.60

r$_6$ =7.9342

    d$_6$ =0.2000

r$_7$ =-5.4811

    d$_7$ =0.7000   n$_{d7}$ =1.57099   $v_{d7}$=50.80

r$_8$ =6.5000

    d$_8$ =1.3000   n$_{d8}$=1.80518   $v_{d8}$=25.42

r$_9$ =21.9926

    d$_9$ =D9

r$_{10}$ =∞ (Stop)

    d$_{10}$=0

r$_{11}$=3.8249 (Aspheric)

    d$_{11}$=1.8000   n$_{d11}$ =1.74320   $v_{d11}$ =49.34

r$_{12}$ =8.7000

    d$_{12}$ =0.7000   n$_{d12}$ =1.84666   $v_{d12}$ =23.78

r$_{13}$=3.5665

    d$_{13}$=0.5000

r$_4$=14.6834

    d$_{14}$=1.3000   n$_{d14}$ =1.72916   $v_{d14}$=54.68

r$_{15}$=-14.3114

    d$_{15}$=D15

r$_{16}$=7.2299

    d$_{16}$=1.0500   n$_{d16}$=1.48749   $v$d$_{16}$=70.23

r$_{17}$=37.5176

    d$_{17}$=2.0000

r$_{18}$=∞

    d$_{18}$=D18

r$_{19}$=-39.6012

    d$_{19}$=0.7000   n$_{d19}$=1.84666   $v_{d19}$ =23.78

r$_{20}$=10.0000

    d$_{20}$=1.2000   n$_{d20}$ =1.74320   $v_{d20}$=49.34

r$_{21}$=-17.1302(Aspheric)

    d$_{21}$=0.7000

r$_{22}$=∞

    d$_{22}$=0.6000   n$_{d22}$=1.51633   $v_{d22}$ =64.14

r$_{23}$=∞

    d$_{23}$=D23

r$_{24}$=∞ (Image Pick-up Plane)

    d$_{24}$=0

Aspherical Coefficients

2nd surface
K=0
$A_2$=0 $\qquad$ $A_4$ =-2.5409 × 10$^{-4}$ $\quad$ $A_6$ =1.8273 × 10$^{-5}$
$A_8$ =-3.9239 × 10$^{-7}$ $\quad$ $A_{10}$=0
11th surface
K=0
$A_2$ =0 $\qquad$ $A_4$ =-1.0303 × 10$^{-3}$ $\quad$ $A_6$ =2.5041 × 10$^{-5}$
$A_8$ =-5.4268 × 10$^{-6}$ $\quad$ $A_{10}$=0
21 th surface
K=0
$A_2$ =0 $\qquad$ $A_4$ =7.1492 × 10$^{-4}$ $\quad$ $A_6$ =3.4398 × 10$^{-4}$
$A_8$ =-3.5902 × 10$^{-5}$ $\quad$ $A_{10}$=0

Zooming Data

When D0 (distance from object to the first surface) is infinity($\infty$),

|  | WE | ST | TE |
|---|---|---|---|
| f (mm) | 3.25250 | 5.64370 | 9.74816 |
| Fno. | 2.7058 | 3.4789 | 4.5017 |
| $\omega$ (°) | 32.6 | 19.5 | 11.3 |
| D0 | $\infty$ | $\infty$ | $\infty$ |
| D9 | 9.75120 | 4.59700 | 0.89810 |
| D15 | 1.09986 | 3.92831 | 1.29837 |
| D18 | 2.66550 | 4.99975 | 11.32016 |
| D23 | 1.00000 | 1.00000 | 1.00000 |

When D 0 (distance from object to the first surface) is near distance(1 6cm),

|  | WE | ST | TE |
|---|---|---|---|
| D0 | 162.6560 | 162.6560 | 162.6560 |
| D9 | 9.75120 | 4.59700 | 0.89810 |
| D15 | 1.01401 | 3.70564 | 0.72133 |
| D18 | 2.75134 | 5.22242 | 11.89720 |
| D23 | 1.00000 | 1.00000 | 1.00000 |

Example 2 8

$r_1$ =10.9287
$\qquad$ $d_1$ =0.7000 $\qquad$ $n_{d1}$ =1.80610 $\qquad$ $v_{d1}$ =40.92
$r_2$ =4.8122(Aspheric)
$\qquad$ $d_2$ =1.5500
$r_3$ =$\infty$
$\qquad$ $d_3$ =6.8000 $\qquad$ $n_{d3}$ =1.80610 $\qquad$ $v_{d3}$=40.92
$r_4$ =$\infty$
$\qquad$ $d_4$ =0.1500
$r_5$ =-79.5466

(continued)

|  | $d_5 = 1.3000$ | $n_{d5} = 1.75520$ | $\nu_{d5} = 27.51$ |
| $r_6 = -6.5000$ | | | |
|  | $d_6 = 0.7000$ | $n_{d6} = 1.80610$ | $\nu_{d6} = 40.92$ |
| $r_7 = 8.2436$ | | | |
|  | $d_7 = 0.5000$ | | |
| $r_8 = 7.4880$ | | | |
|  | $d_8 = 1.3000$ | $n_{d8} = 1.84666$ | $\nu_{d8} = 23.78$ |
| $r_9 = 13.0280$ | | | |
|  | $d_9 = D9$ | | |
| $r_{10} = \infty$ (Stop) | | | |
|  | $d_{10} = 0$ | | |
| $r_{11} = 3.7669$(Aspheric) | | | |
|  | $d_{11} = 1.8000$ | $n_{d11} = 1.74320$ | $\nu_{d11} = 49.34$ |
| $r_{12} = 8.0000$ | | | |
|  | $d_{12} = 0.7000$ | $n_{d12} = 1.84666$ | $\nu_{d12} = 23.78$ |
| $r_{13} = 3.3737$ | | | |
|  | $d_{13} = 0.5000$ | | |
| $r_{14} = 8.4174$ | | | |
|  | $d_{14} = 1.5000$ | $nd_{14} = 1.72916$ | $\nu_{d14} = 54.68$ |
| $r_{15} = -28.9216$ | | | |
|  | $d_{15} = D15$ | | |
| $r_{16} = 7.6784$ | | | |
|  | $d_{16} = 1.0500$ | $n_{d16} = 1.48749$ | $\nu_{d16} = 70.23$ |
| $r_{17} = -1722.3948$ | | | |
|  | $d_{17} = D17$ | | |
| $r_{18} = -12.1628$ | | | |
|  | $d_{18} = 0.7000$ | $n_{d18} = 1.84666$ | $\nu_{d18} = 23.78$ |
| $r_{19} = \infty$ | | | |
|  | $d_{19} = 1.6000$ | $n_{d19} = 1.74320$ | $\nu_{d19} = 49.34$ |
| $r_{20} = -11.2101$(Aspheric) | | | |
|  | $d_{20} = 0.7000$ | | |
| $r_{21} = \infty$ | | | |
|  | $d_{21} = 0.6000$ | $n_{d21} = 1.51633$ | $\nu_{d21} = 64.14$ |
| $r_{22} = \infty$ | | | |
|  | $d_{22} = D22$ | | |
| $r_{23} = \infty$ (Image Pick-up Plane) | | | |
|  | $d_{23} = 0$ | | |

Aspherical Coefficients

2nd surface
$K = 0$
$A_2 = 0$ $A_4 = -3.2755 \times 10^{-5}$ $A_6 = -3.4477 \times 10^{-5}$
$A_8 = 9.7425 \times 10^{-8}$ $A_{10} = 0$
11th surface
$K = 0$
$A_4 = 0$ $A_4 = -1.0080 \times 10^{-3}$ $A_6 = 1.8736 \times 10^{-5}$
$A_8 = -6.2191 \times 10^{-6}$ $A_{10} = 0$

(continued)

20 th surface
K=0

A$_2$ =0            A$_4$ =4.2956 × 10$^{-4}$    A$_6$ =5.2969 × 10$^{-4}$

A$_4$ =-5.4664 × 10$^{-5}$    A$_{10}$=0

Zooming Data

When D0 (distance from object to the first surface) is infinity($\infty$),

|         | WE       | ST       | TE       |
|---------|----------|----------|----------|
| f (mm)  | 3.25606  | 5.64124  | 9.74748  |
| Fno.    | 2.7505   | 3.5079   | 4.5204   |
| $\omega$ (°) | 32.6 | 19.5     | 11.3     |
| D0      | $\infty$ | $\infty$ | $\infty$ |
| D9      | 9.41588  | 4.43316  | 0.89783  |
| D15     | 1.10006  | 3.71349  | 1.29897  |
| D17     | 4.24487  | 6.62213  | 12.56406 |
| D22     | 1.00000  | 1.00000  | 1.00000  |

When D 0 (distance from object to the first surface) is near distance(1 6cm),

|      | WE       | ST       | TE       |
|------|----------|----------|----------|
| D0   | 162.6560 | 162.6560 | 162.6560 |
| D9   | 9.41588  | 4.43316  | 0.89783  |
| D15  | 1.02958  | 3.53180  | 0.80556  |
| D17  | 4.31535  | 6.80382  | 13.05747 |
| D22  | 1.00000  | 1.00000  | 1.00000  |

The values of L in Examples 26-28, and the values concerning conditions (41)-(53) and (28)-(31), and the values of <u>a</u> are tabulated below.

|                            | Example **26** | Example **27** | Example **28** |
|----------------------------|----------------|----------------|----------------|
| L                          | 3.96           | 3.96           | 3.96           |
| $\beta_{Rt}$               | -1. 44704      | -1.71738       | -1. 85432      |
| $R_{21R}/R_{21P}$          | 0.95394        | 0.93244        | 0.89562        |
| $L/R_{21c}$                | 0.57391        | 0.45517        | 0.49500        |
| $v_{21F} - v_{21R}$        | 29.43          | 25.56          | 25.56          |
| $L/fD$                     | 0.09555        | 0.05099        | 0.01058        |
| $v_{4P}-v_{4N}$            | 29.43          | 25.56          | 25. 56         |
| $(R_{11F}+R_{11R})/(R_{11F}-R_{11R})$ | 1.14237 | 1.97764     | 2.57351        |
| $f_{11}/f_{12}$            | 0.08793        | 0.62729        | 0.72786        |
| $(R_{12R}/R_{13F})^P$      | 0.95488        | 0.69082        | 1.10091        |
| $v_{A2N} - v_{A2P}$        | 11.4           | 25.38          | 13.41          |
| $Q \cdot L/R_{A2c}$        | 0.46588        | 0.60923        | 0.60923        |
| $f_T / f_W$                | 2.98846        | 2.99713        | 2. 99364       |
| $\tau_{600} / \tau_{550}$  | 1.0            | 1.0            | 1.0            |
| $\tau_{700} / \tau_{550}$  | 0.04           | 0.04           | 0.04           |
| $\tau_{400} / \tau_{550}$  | 0.0            | 0.0            | 0.0            |
| $\tau_{440} / \tau_{550}$  | 1.06           | 1.06           | 1.06           |
| a ($\mu$m)                 | 2.0            | 2.0            | 2.0            |

Throughout Examples 26 to 28 , the optical path is bent in the long side (horizontal) direction of the electronic image pickup device. Although the bending of the optical path in the short side (vertical) direction is advantageous for size reductions because the space for bending becomes small, it is preferable to bend the optical path not only in the short side direction but also in the long side direction, because the freedom in designing a camera with a built-in zoom lens becomes high.

Although any low-pass filter is not built in each example, it is acceptable to use the low-pass filter.

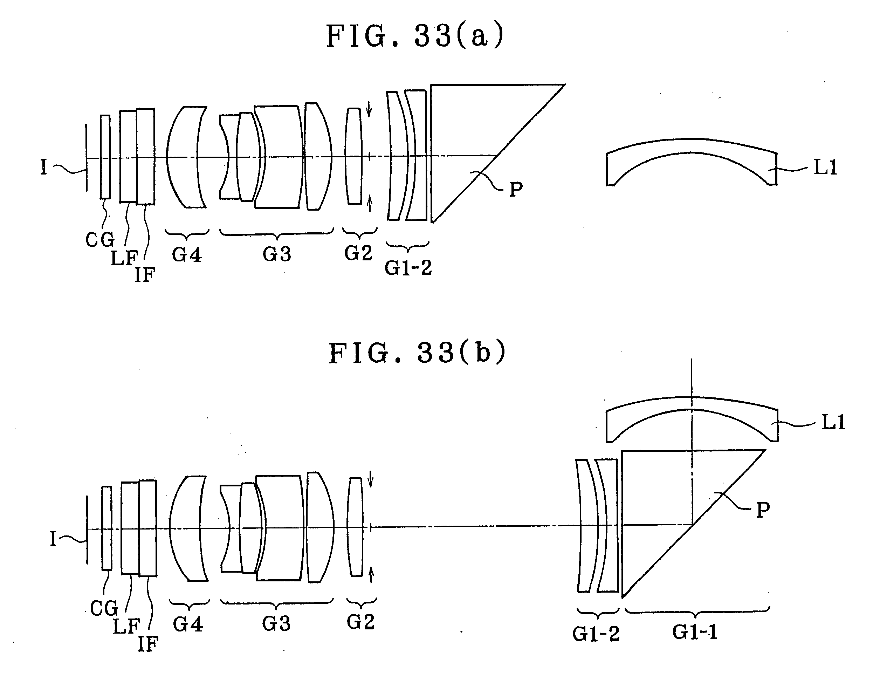

How to receive the optical path bending zoom optical system at a collapsible lens mount is now explained specifically. Figs. 23(a) and 23(b) are illustrative of how to receive the optical path bending zoom optical system of Fig. 23 (Example 22) in place. Fig. 33(b) is a sectional schematic inclusive of an optical path turn-back axis, showing Example 22 of the optical path bending zoom optical system at the wide-angle end. In this state, two lenses forming the second lens group G2 and the optical path bending prism P forming a part of the 1-1st lens group G1-1 are relocated in a space between the 1-2nd lens group G1-2 and the second lens group G2, and the negative meniscus lens L1 located in front of the optical path bending prism P in the 1-1st lens group G1-1 is received in the resulting space, so that the thickness of the optical path bending zoom optical system in its entrance axis direction (in the depth direction of the camera) can be reduced. It is here noted that when there is a space on the image plane I side with respect to the second lens group G2, it is preferable to relocate the optical path bending prism P and the 1-2nd lens group G1-2 as well as the second lens group G2, etc. on the image plane I side.

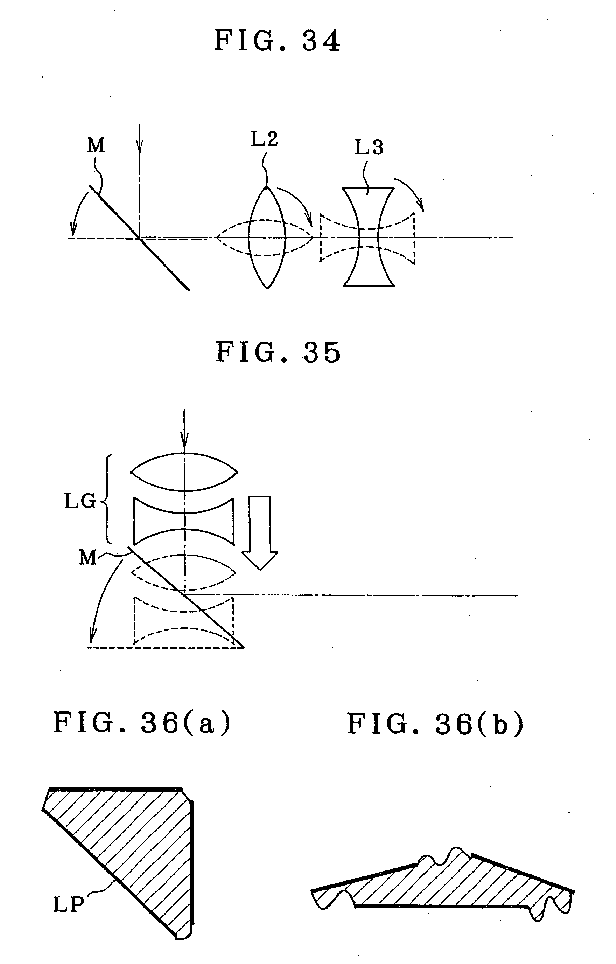

Fig. 34 is a conceptual schematic of one embodiment of how to receive the reflecting optical element for bending an optical path in the optical path bending zoom optical system when that optical element is constructed of a mirror M. The mirror M is tilted at a position indicated by a broken line, and lenses L2 and L3 located on the image plane I side with respect to the mirror M are tilted at positions indicated by broken lines, so that the thickness of the zoom optical system in its optical axis direction (in the depth direction of a camera) can be reduced.

Fig. 35 is a conceptual schematic of another embodiment of how to receive the reflecting optical element for bending an optical path in the optical path bending zoom optical system when that reflecting optical element is formed of a mirror M. The mirror M is tilted at a position indicated by a broken line and a lens group LG located on the object side with respect to the mirror M is received in the resulting space, thereby achieving similar thickness reductions. Instead of tilting the mirror M, it may be relocated along the optical axis after turned back, as shown in Fig. 33.

Figs. 36(a) and 36(b) are illustrative of one embodiment of the reflecting optical element for bending an optical path, which is constructed of a liquid or transformable or deformable prism LP (see Fig. 36(a)). This reflecting optical element may be received in place as by removing the liquid therefrom as shown in Fig. 36(b), thereby achieving thickness reductions. Alternatively, lens groups located on the object side with respect to the prism LP may be received in the resulting space (see Fig. 35), or other lenses may be tilted (see Fig. 34), again achieving thickness reductions.

The reflecting optical element for bending an optical path may also be constructed of a variable-shape mirror. The variable-shape mirror is a reflecting mirror comprising a transformable film with a reflecting mirror coating applied thereon. This reflecting mirror may be relocated by folding or winding.

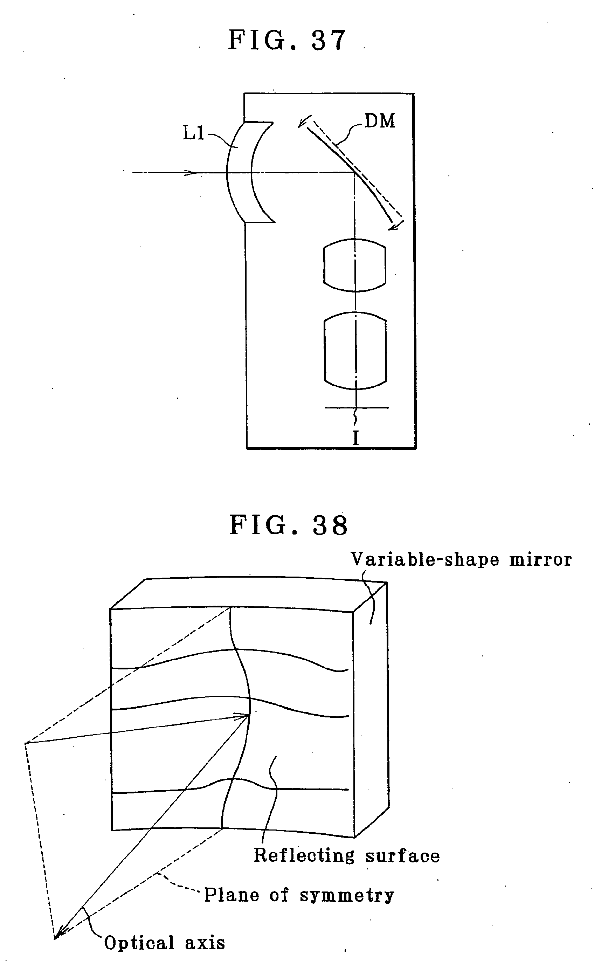

When the reflecting optical element for bending an optical path is constructed of a variable-shape mirror, it is acceptable to carry out focusing by the transformation of that mirror, as shown conceptually in Fig. 37. For focusing on a near distance object, only the transformation of a planar form of variable-shape mirror DM into a concave surface is needed upon focused on a point at infinity, as shown by an arrow. That is, for focusing on a near distance object, the surface shape of the variable-shape mirror DM is transformed into an aspheric surface shape within an effective reflecting surface. Especially when power is imparted to a reflecting surface that is of rotationally symmetric shape, decentration aberrations are produced at that surface due to decentered incidence of light thereon. It is thus desired that the variable-shape mirror DM be defined by a rotationally asymmetric curved surface.

Off-axis, rotationally asymmetric distortions or the like, too, are produced by decentration. To make correction for decentration aberrations symmetric with respect to plane, it is preferable to transform the surface of the variable-shape mirror DM into a curved surface with respect to plane, where only one symmetric surface is defined by a plane including an optical axis entered in and reflected at the reflecting surface of the variable-shape mirror DM, as shown in Fig. 38.

Referring again to Fig. 37, the variable-shape mirror DM takes a planar form upon focused on a point at infinity. To make correction for decentration aberrations produced upon focused on a near distance object point, however, it is preferable to transform the reflecting surface of the mirror DM into a rotationally asymmetric surface having only one symmetric plane, as shown in Fig. 38. With this arrangement, it is possible to achieve the whole size reduction of an electronic image pickup system and maintain its performance.

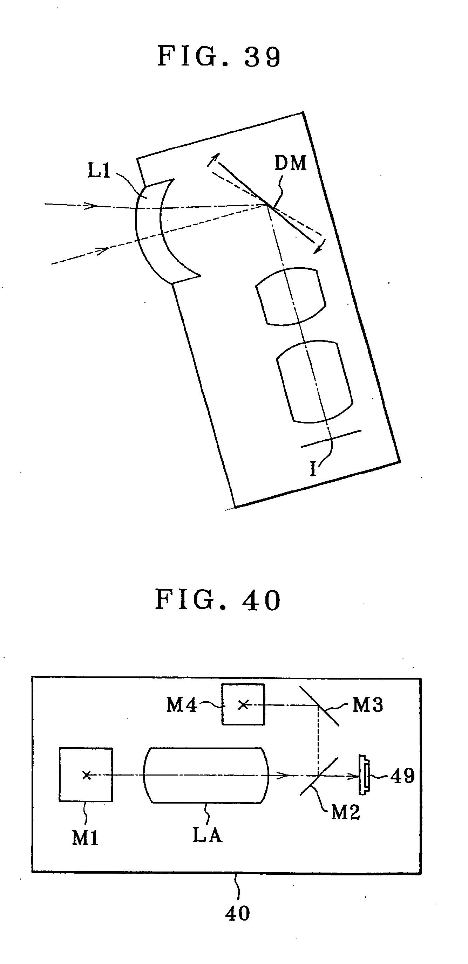

Fig. 39 is illustrative of one embodiment of how to correct camera movements by tilting the reflecting surface of a variable-shape mirror DM in an arrow direction. In the state of Fig. 37, there is no camera movement, and in the state of Fig. 39, the function of correcting camera movements by tilting the reflecting surface of the variable-shape mirror DM is brought into action. When an image pickup device turns down with respect to a phototaking direction as shown in Fig. 39, the inclination of the reflecting surface of the variable-shape mirror DM displaces from a broken-line position to a solid-line position so that the entrance optical axis is kept from inclination. Preferably in this case, the whole surface shape of the variable-shape mirror DM is so transformed that fluctuations of aberrations can be prevented.

It is acceptable to impart power to the reflecting surface of the reflecting optical element for bending an optical path and configure its surface shape with a free-form surface or the like. Alternatively, it is acceptable to construct the reflecting surface of the reflecting optical element with a holographic optical element (HOE).

When the reflecting optical element is constructed of an optical path bending prism P as set forth in Examples 1 to 28, it is acceptable to cement the prism P to lenses located before and after the same.

When an electronic image pickup system such as a digital camera is constructed using the optical path bending zoom optical system of the present disclosure, it bending is acceptable to interpose an optical path splitter element between the optical path bending zoom optical system and an electronic image pickup device such as a CCD to split an phototaking optical path to a finder optical path, as shown in Fig. 40. Fig. 40 is a front view of a digital camera 40. In this case, an optical path bending zoom optical system comprises a reflecting optical element M1 for bending an optical path through 90° and a lens group LA located on the image plane side of the element M1, with an image pickup device CCD 49 positioned on the image plane. Between the lens group LA and CCD 49, there is interposed an optical path splitter element M2 such as a half-silvered mirror to split the optical path, so that a part thereof is deflected to a side substantially vertical to a plane including an optical axis before and after reflection at the reflecting optical element M1 (the upper side of Fig. 40). It should be understood that the optical path splitter element M2 may be defined by a reflecting surface that is inserted only when a light beam is guided to the finder optical path. An optical path reflected at the optical path splitter element M2 is bent by another reflecting surface M3 through 90° in a plane including an optical axis before and after reflected at the optical path splitter element M2 and further bent by a fourth reflecting surface M4 through 90°, running substantially parallel with the optical axis entered in the reflecting optical element M1. Although an eyepiece optical system is not shown in Fig. 40, it is understood that it is located on the exit side of the fourth reflecting surface M4 or before and after a plane including that reflecting surface M4, so that a subject image under observation is viewed by the viewer's eyeball positioned on the exit side of the fourth reflecting surface M4.

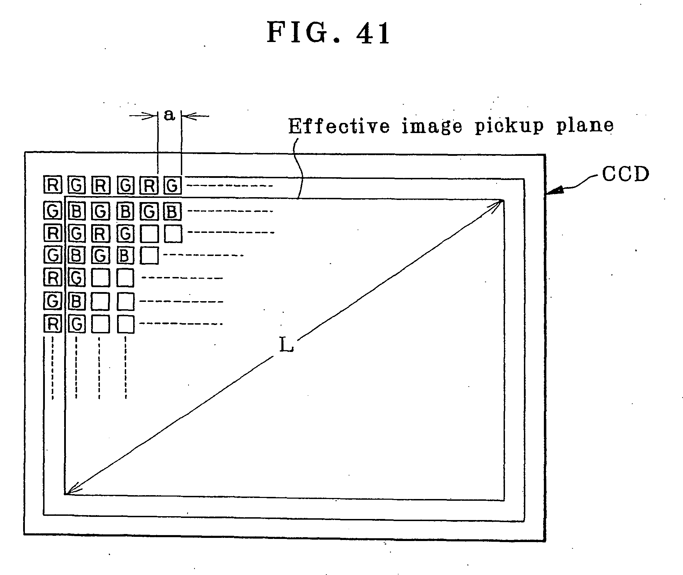

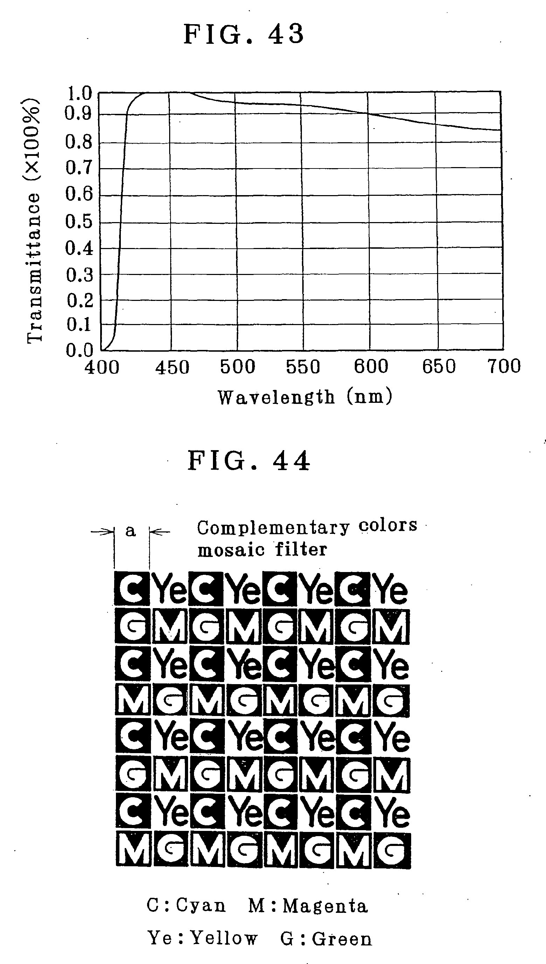

Here the diagonal length L of the effective image pickup plane of the electronic image pickup device and the pixel spacing a are explained. Fig. 41 is illustrative of one exemplary pixel array for the electronic image pickup device, wherein R (red), G (green) and B (blue) pixels or four pixels, i.e., cyan, magenta, yellow and green (G) pixels (see Fig. 44) are mosaically arranged at the pixel spacing $\underline{a}$. The "effective image pickup plane" used herein is understood to mean a certain area in the photoelectric conversion surface on an image pickup device used for the reproduction of a phototaken image (on a personal computer or by a printer). The effective image pickup plane shown in Fig. 41 is set at an area narrower than the total photoelectric conversion surface on the image pickup device, depending on the performance of the optical system used (an image circle that can be ensured by the performance of the optical system). The diagonal length L of an effective image pickup plane is thus defined by that of the effective image pickup plane. Although the image pickup range used for image reproduction may be variable, it is noted that when the zoom lens of the present disclosure is used on an image pickup apparatus having such functions, the diagonal length L of its effective image pickup plane varies. In that case, the diagonal length L of the effective image pickup plane according to the present invention is defined by the maximum value in the widest possible range for L.

In each example of the present disclosure, on the image side of the final lens group there is provided a near-infrared cut filter or an optical low-pass filter LF with a near-infrared cut coat surface applied on its entrance side. This near-infrared cut filter or near-infrared cut coat surface is designed to have a transmittance of at least 80% at 600 nm wavelength and a transmittance of up to 10% at 700 nm wavelength. More specifically, the near-infrared cut filter or the near-infrared sharp cut coating has a multilayer structure made up of 27 such layers as mentioned below; however, the design wavelength is 780 nm.

| | Substrate Material | Physical Thickness (nm) | λ/4 |
|---|---|---|---|
| 1st layer | Al$_2$O$_3$ | 58.96 | 0.50 |
| 2nd layer | TiO$_2$ | 84.19 | 1.00 |
| 3rd layer | SiO$_2$ | 134.14 | 1.00 |
| 4th layer | TiO$_2$ | 84.19 | 1.00 |
| 5th layer | SiO$_2$ | 134.14 | 1.00 |
| 6th layer | TiO$_2$ | 84.19 | 1.00 |
| 7th layer | SiO$_2$ | 134.14 | 1.00 |
| 8th layer | TiO$_2$ | 84.19 | 1.00 |
| 9th layer | SiO$_2$ | 134.14 | 1.00 |
| 10th layer | TiO$_2$ | 84.19 | 1.00 |
| 11th layer | SiO$_2$ | 134.14 | 1.00 |

(continued)

| Substrate | Material | Physical Thickness (nm) | $\lambda/4$ |
|---|---|---|---|
| 12th layer | TiO$_2$ | 84.19 | 1.00 |
| 13th layer | SiO$_2$ | 134.14 | 1.00 |
| 14th layer | TiO$_2$ | 84.19 | 1.00 |
| 15th layer | SiO$_2$ | 178.41 | 1.33 |
| 16th layer | TiO$_2$ | 101.03 | 1.21 |
| 17th layer | SiO$_2$ | 167.67 | 1.25 |
| 18th layer | TiO$_2$ | 96.82 | 1.15 |
| 19th layer | SiO$_2$ | 147.55 | 1.05 |
| 20th layer | TiO$_2$ | 84.19 | 1.00 |
| 21st layer | SiO$_2$ | 160.97 | 1.20 |
| 22nd layer | TiO$_2$ | 84.19 | 1.00 |
| 23rd layer | SiO$_2$ | 154.26 | 1.15 |
| 24th layer | TiO$_2$ | 95.13 | 1.13 |
| 25th layer | SiO$_2$ | 160.97 | 1.20 |
| 26th layer | TiO$_2$ | 99.34 | 1.18 |
| 27th layer | SiO$_2$ | 87.19 | 0.65 |

Air

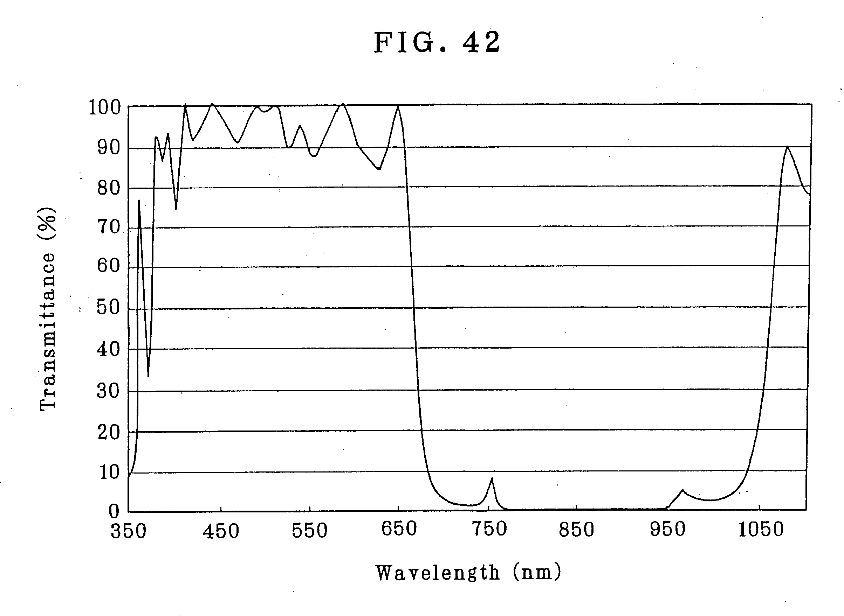

The aforesaid near-infrared sharp cut coating has such transmittance characteristics as shown in Fig. 42.

The low-pass filter LF is provided on its exit surface side with a color filter or coating for reducing the transmission of colors at such a short wavelength region as shown in Fig. 43, thereby making the color reproducibility of an electronic image much higher.

Preferably, that filter or coating should be designed such that the ratio of the transmittance of 420 nm wavelength with respect to the transmittance of a wavelength in the range of 400 nm to 700 nm at which the highest transmittance is found is at least 15% and that the ratio of 400 nm wavelength with respect to the highest wavelength transmittance is up to 6%.

It is thus possible to reduce a discernible difference between the colors perceived by the human eyes and the colors of the image to be picked up and reproduced. In other words, it is possible to prevent degradation in images due to the fact that a color of short wavelength less likely to be perceived through the human sense of sight can be readily seen by the human eyes.

When the ratio of the 400 nm wavelength transmittance is greater than 6%, the short wavelength region less likely to be perceived by the human eyes would be reproduced with perceivable wavelengths. Conversely, when the ratio of the 420 nm wavelength transmittance is less than 15%, a wavelength region perceivable by the human eyes is less likely to be reproduced, putting colors in an ill-balanced state.

Such means for limiting wavelengths can be more effective for imaging systems using a complementary colors mosaic filter.

In each of the aforesaid examples, coating is applied in such a way that, as shown in Fig. 43, the transmittance for 400 nm wavelength is 0%, the transmittance for 420 nm is 90%, and the transmittance for 440 nm peaks or reaches 100%.

With the synergistic action of the aforesaid near-infrared sharp cut coat and that coating, the transmittance for 400 nm is set at 0%, the transmittance for 420 nm at 80%, the transmittance for 600 nm at 82%, and the transmittance for 700 nm at 2% with the transmittance for 450 nm wavelength peaking at 99%, thereby ensuring more faithful color reproduction.

The low-pass filter LF is made up of three different filter elements stacked one upon another in the optical axis direction, each filter element having crystal axes in directions where, upon projected onto the image plane, the azimuth angle is horizontal (=0°) and ±45° therefrom. Three such filter elements are mutually displaced by $\underline{a}$ μm in the horizontal direction and by SQRT(1/2) × $\underline{a}$ in the ±45° direction for the purpose of moire control, wherein SQRT means a square root.

The image pickup plane I of a CCD is provided thereon with a complementary colors mosaic filter wherein, as shown in Fig. 44, color filter elements of four colors, cyan, magenta, yellow and green are arranged in a mosaic fashion corresponding to image pickup pixels. More specifically, these four different color filter elements, used in almost equal numbers, are arranged in such a mosaic fashion that neighboring pixels do not correspond to the same type of color filter elements, thereby ensuring more faithful color reproduction.

To be more specific, the complementary colors mosaic filter is composed of at least four different color filter elements as shown in Fig. 44, which should preferably have such characteristics as given below.

Each green color filter element G has a spectral strength peak at a wavelength Gp,

each yellow filter element $Y_e$ has a spectral strength peak at a wavelength $Y_p$,

each cyan filter element C has a spectral strength peak at a wavelength $C_p$, and

each magenta filter element M has spectral strength peaks at wavelengths $M_{P1}$ and $M_{P2}$, and these wavelengths satisfy the following conditions.

$$510 \text{ nm} < G_P < 540 \text{ nm}$$

$$5 \text{ nm} < Y_P - G_P < 35 \text{ nm}$$

$$-100 \text{ nm} < C_P - G_P < -5 \text{ nm}$$

$$430 \text{ nm} < M_{P1} < 480 \text{ nm}$$

$$580 \text{ nm} < M_{P2} < 640 \text{ nm}$$

To ensure higher color reproducibility, it is preferred that the green, yellow and cyan filter elements have a strength of at least 80% at 530 nm wavelength with respect to their respective spectral strength peaks, and the magenta filter elements have a strength of 10% to 50% at 530 nm wavelength with their spectral strength peak.

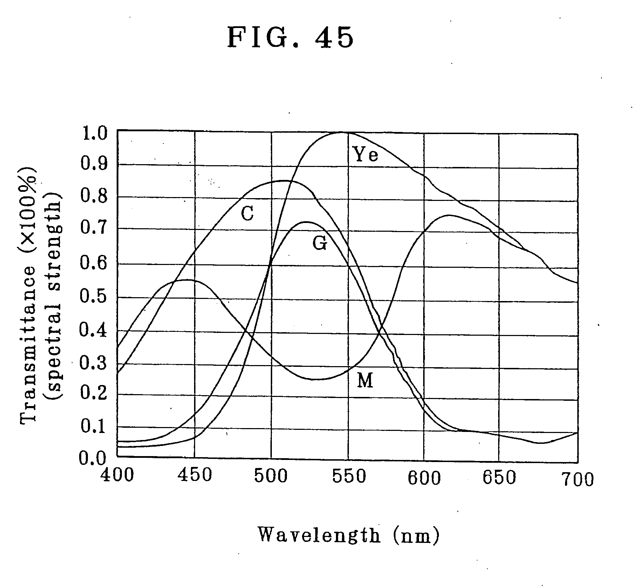

One example of the wavelength characteristics in the aforesaid respective examples is shown in Fig. 45. The green filter element G has a spectral strength peak at 525 nm. The yellow filter element $Y_e$ has a spectral strength peak at 555 nm. The cyan filter element C has a spectral strength peak at 510 nm. The magenta filter element M has peaks at 445 nm and 620 nm. At 530 nm, the respective color filter elements have, with respect to their respective spectral strength peaks, strengths of 99% for G, 95% for $Y_e$, 97% for C and 38% for M.

For such a complementary colors filter, such signal processing as mentioned below is electrically carried out by means of a controller (not shown) (or a controller used with digital cameras).

For luminance signals,

$$Y = |G + M + Y_e + C| \times 1/4$$

For chromatic signals,

$$R - Y = |(M + Y_e) - (G + C)|$$

$$B - Y = |(M + C) - (G + Y_e)|$$

Through this signal processing, the signals from the complementary colors filter are converted into R (red), G (green) and B (blue) signals.

In this regard, it is noted that the aforesaid near-infrared sharp cut coat may be located anywhere on the optical path, and that the number of low-pass filters LF may be either two as mentioned above or one, or even three.

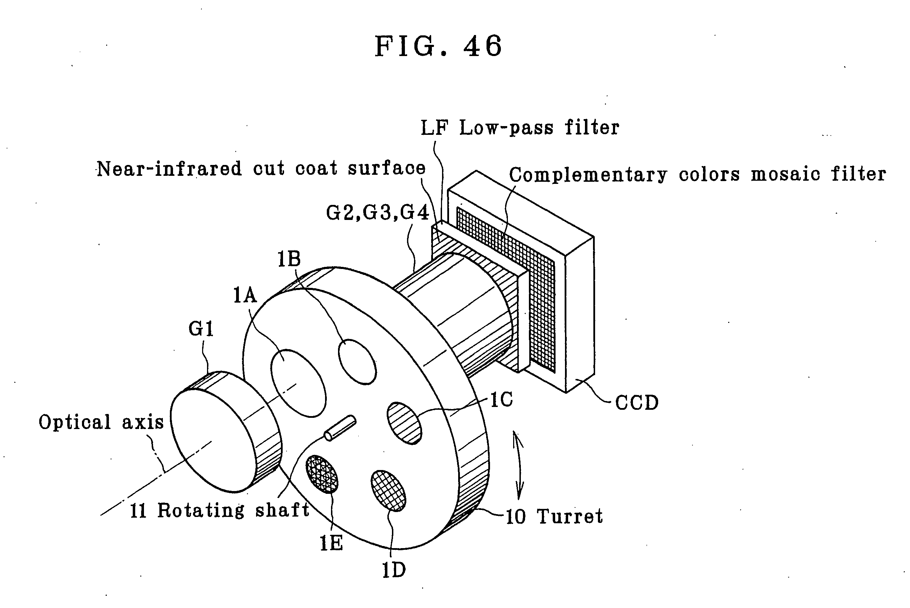

Details of the aperture stop portion in each example are shown in Fig. 46 in conjunction with a four-group arrangement, wherein the first lens group G1 excepting the optical path-bending prism P is shown. At a stop position on the optical axis between the first lens group G1 and the second lens group G2 in the phototaking optical system, there is located a turret 10 capable of brightness control at 0 stage, -1 stage, -2 stage, -3 state and -4 stage. The turret 10 is composed of an aperture 1A for 0 stage control, which is defined by a circular fixed space of about 4 mm in diameter (with a transmittance of 100% with respect to 550 nm wavelength), an aperture 1B for -1 stage correction, which is defined by a transparent plane-parallel plate having a fixed aperture shape with an aperture area nearly half that of the aperture 1A (with a transmittance of 99% with respect to 550 nm wavelength), and circular apertures 1C, 1D and 1E for -2, -3 and -4 stage corrections, which have the same aperture area as that of the aperture 1B and are provided with ND filters having the respective transmittances of 50%, 25% and 13% with respect to 550 nm wavelength.

By turning of the turret 10 around a rotating shaft 11, any one of the apertures is located at the stop position, thereby controlling the quantity of light.

The turret 10 is also designed that when the effective F-number $F_{no}$' is $F_{no}$'>a/0.4 μm, an ND filter with a transmittance of less than 80% with respect to 550 nm wavelength is inserted in the aperture. Referring specifically to Example 1, the effective F-number at the telephoto end satisfies the following condition when the effective F-number becomes 9.0 at the -2 stage with respect to the stop-in (0) stage, and the then corresponding aperture is 1C, whereby any image degradation due to a diffraction phenomenon by the stop is prevented.

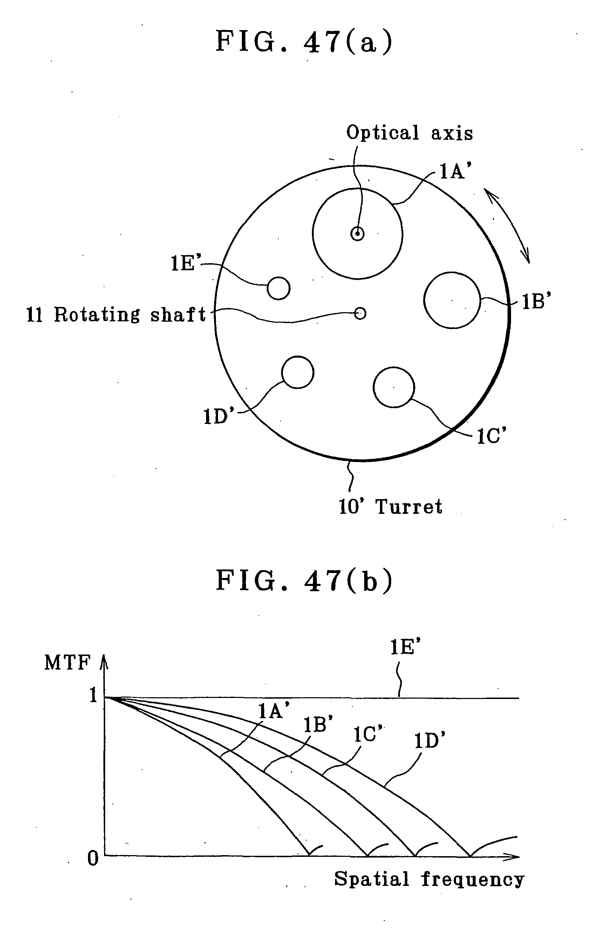

Instead of the turret 10 shown in Fig. 46, it is acceptable to use a turret 10' shown in Fig. 47(a). This turret 10' capable of brightness control at 0 stage, -1 stage, -2 stage, -3 stage and -4 stage is located at the aperture stop position on the optical axis between the first lens group G1 and the second lens group G2 in the phototaking optical system. The turret 10' is composed of an aperture 1A' for 0 stage control, which is defined by a circular fixed space of about 4 mm in diameter, an aperture 1B' for -1 stage correction, which is of a fixed aperture shape with an aperture area nearly half that of the aperture 1A', and apertures 1C', 1D' and 1E' for -2, - 3 and -4 stage corrections, which are of fixed shape with decreasing areas in this order. By turning of the turret 10' around a rotating shaft 11, any one of the apertures is located at the stop position thereby controlling the quantity of light.

Further, optical low-pass filters having varying spatial frequency characteristics are located in association with 1A' to 1D' of plural such apertures. Then, as shown in Fig. 47(b), the spatial frequency characteristics of the optical filters are designed in such a way that as the aperture diameter becomes small, they become high, thereby preventing image degradations due to a diffraction phenomenon by stop-down. Each curve in Fig. 47(b) is indicative of the spatial frequency characteristics of the low-pass filters alone, wherein all the characteristics including diffraction by the stop are set in such a way as to be equal to one another.

The present electronic imaging system constructed as described above may be applied to phototaking systems where object images formed through zoom lenses are received at image pickup devices such as CCDs or silver-halide films, inter alia, digital cameras or video cameras as well as PCs and telephone sets which are typical information processors, in particular, easy-to-carry cellular phones. Given below are some such embodiments.

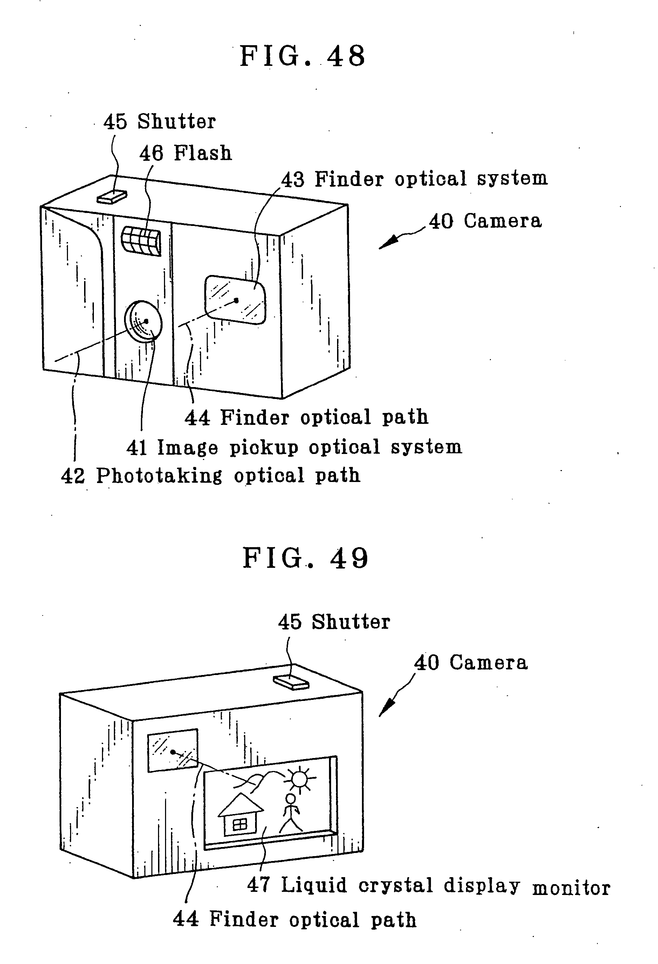

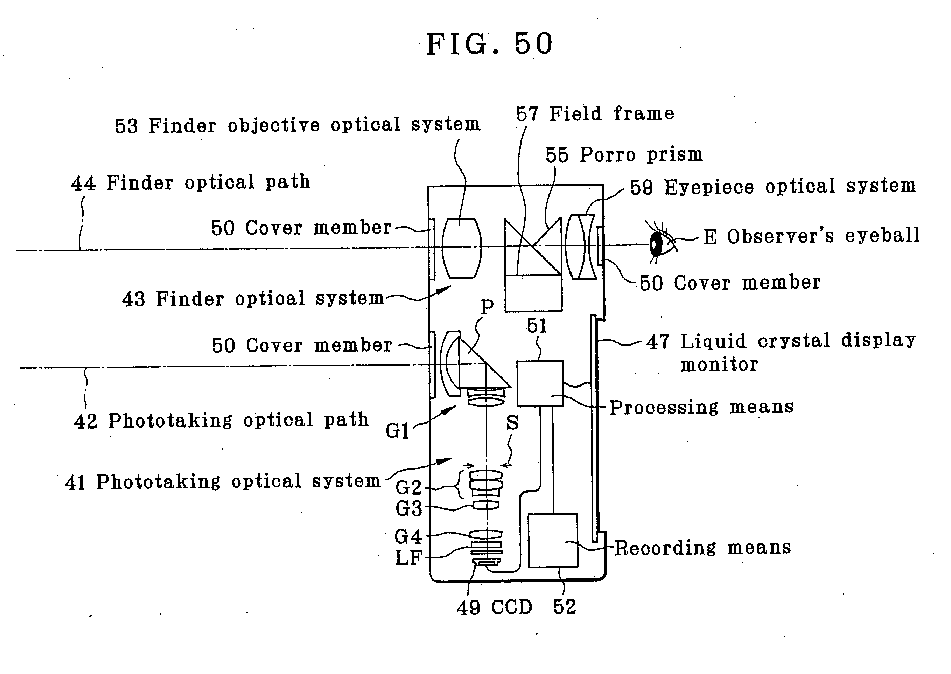

Figs. 48, 49 and 50 are conceptual illustrations of a phototaking optical system 41 for digital cameras, in which the zoom lens of the present disclosure is built. Fig. 48 is a front perspective view of the outside shape of a digital camera 40, and Fig. 49 is a rear perspective view of the same. Fig. 50 is a sectional view of the construction of the digital camera 40. In this embodiment, the digital camera 40 comprises a phototaking optical system 41 including a phototaking optical path 42, a finder optical system 43 including a finder optical path 44, a shutter 45, a flash 46, a liquid crystal monitor 47 and so on. As the shutter 45 mounted on the upper portion of the camera 40 is pressed down, phototaking takes place through the phototaking optical system 41, for instance, the optical path bending zoom lens according to Example 1. An object image formed by the phototaking optical system 41 is formed on the image pickup plane of a CCD 49 via an optical low-pass filter LF comprising a dummy transparent plane plate provided thereon with a near-infrared cut coat and an optical low-pass filter LF. The object image received at CCD 49 is shown as an electronic image on the liquid crystal monitor 47 via processing means 51, which monitor is mounted on the back of the camera. This processing means 51 is connected with recording means 52 in which the phototaken electronic image may be recorded. It is here noted that the recording means 52 may be provided separately from the processing means 51 or, alternatively, it may be constructed in such a way that images are electronically recorded and written therein by means of floppy discs, memory cards, MOs or the like. This camera may also be constructed in the form of a silver halide camera using a silver halide film in place of CCD 49.

Moreover, a finder objective optical system 53 is located on the finder optical path 44. An object image formed by the finder objective optical system 53 is in turn formed on the field frame 57 of a Porro prism 55 that is an image erecting member. In the rear of the Porro prism 55 there is located an eyepiece optical system 59 for guiding an erected image into the eyeball E of an observer. It is here noted that cover members 50 are provided on the entrance sides of the phototaking optical system 41 and finder objective optical system 53 as well as on the exit side of the eyepiece optical system 59.

With the thus constructed digital camera 40, it is possible to achieve high performance and cost reductions, because the phototaking optical system 41 is constructed of a fast zoom lens having a high zoom ratio at the wide-angle end with satisfactory aberrations and a back focus large enough to receive a filter, etc. therein.

In the embodiment of Fig. 50, plane-parallel plates are used as the cover members 50; however, it is acceptable to use powered lenses.

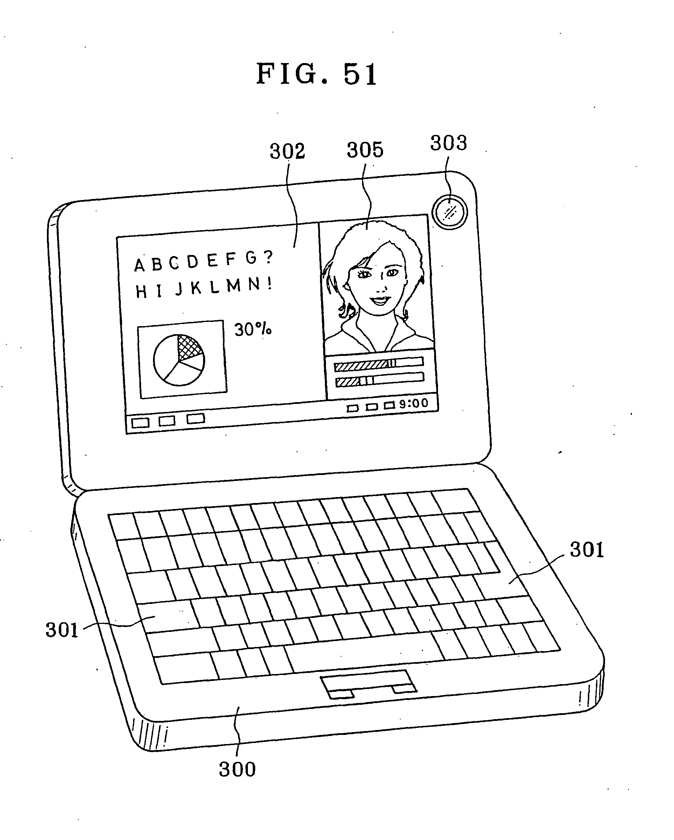

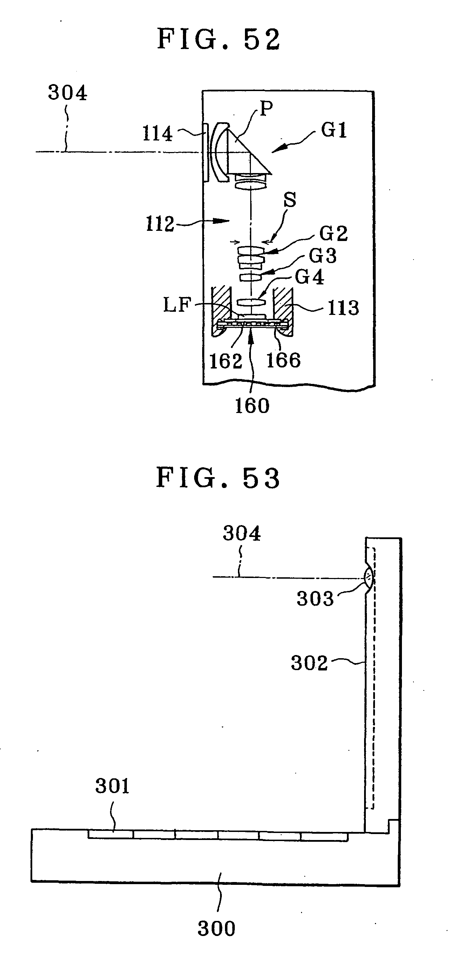

Figs. 51, 52 and 53 are illustrative of a personal computer that is one example of the information processor in which the image-formation optical system of the present disclosure is built as an objective optical system. Fig. 51 is a front perspective view of a personal computer 300 with a cover opened, Fig. 52 is a sectional view of a phototaking optical system 303 in the personal computer 300, and Fig. 53 is a side view of the state of Fig. 51. As shown in Figs. 51, 52 and 53, the personal computer 300 comprises a keyboard 301 via which an operator enters information therein from outside, information processing or recording means (not shown), a monitor 302 on which the information is shown for the operator, and a phototaking optical system 303 for taking an image of the operator and surrounding images. For the monitor 302, use may be made of a transmission type liquid crystal display device illuminated by backlight (not shown) from the back surface, a reflection type liquid crystal display device in which light from the front is reflected to show images, or a CRT display device. While the phototaking optical system 303 is shown as being built in the right upper portion of the monitor 302, it may be located on somewhere around the monitor 302 or keyboard 301.

This phototaking optical system 303 comprises on a phototaking optical path 304 and an objective lens 112 such as one represented by Example 1 an image pickup device chip 162 for receiving an image, all built in the personal computer 300.

Here an optical low-pass filter LF is additionally applied onto the image pickup device chip 162 to form an integral imaging unit 160, which can be fitted into the rear end of a lens barrel 113 of the objective lens 112 in one-touch operation. Thus, the assembly of the objective lens 112 and image pickup device chip 162 is facilitated because of no need of alignment or control of surface-to-surface spacing. The lens barrel 113 is provided at its end (not shown) with a cover glass 114 for protection of the objective lens 112. It is here noted that driving mechanisms for the zoom lens, etc. contained in the lens barrel 113 are not shown.

An object image received at the image pickup device chip 162 is entered via a terminal 166 in the processing means of the personal computer 300, and displayed as an electronic image on the monitor 302. As an example, an image 305 taken of the operator is shown in Fig. 51. This image 305 may be displayed on a personal computer on the other end via suitable processing means and the Internet or telephone line.

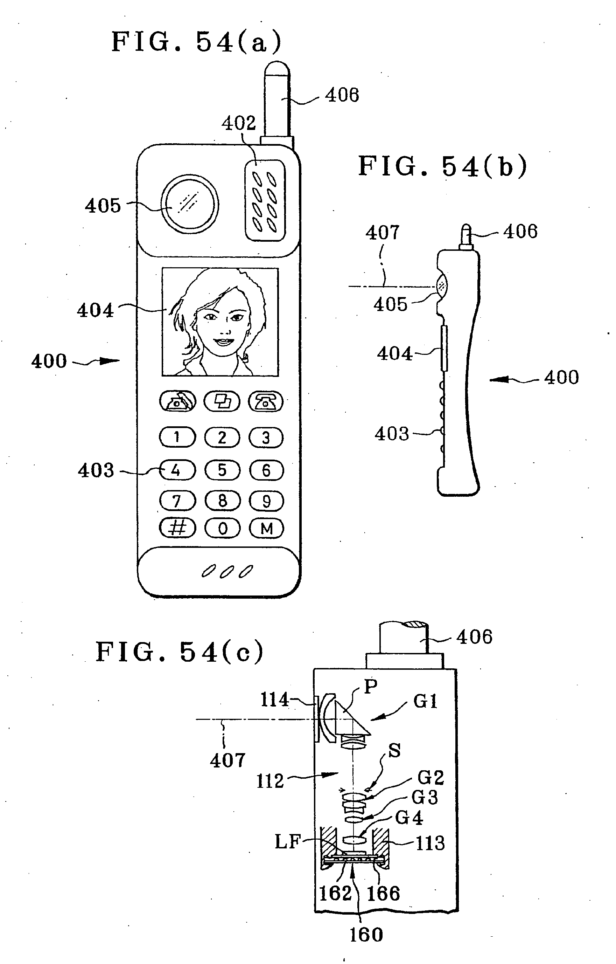

Figs. 54 (a), 54 (b) and 54 (c) are illustrative of a telephone set that is one example of the information processor in which the image-formation optical system of the present disclosure is built in the form of a photo-taking optical system, especially a convenient-to-carry cellular phone. Fig. 54(a) and Fig. 54(b) are a front view and a side view of a cellular phone 400, respectively, and the Fig. 54(c) is a sectional view of a phototaking optical system 405. As shown in Figs. 54(a), 54(b) and 54(c), the cellular phone 400 comprises a microphone 401 for entering the voice of an operator therein as information, a speaker 402 for producing the voice of the person on the other end, an input dial 403 via which the operator enters information therein, a monitor 404 for displaying an image taken of the operator or the person on the other end and indicating information such as telephone numbers, a photo-taking optical system 405, an antenna 406 for transmitting and receiving communication waves, and processing means (not shown) for processing image information, communication information, input signals, etc. Here the monitor 404 is a liquid crystal display device. It is noted that the components are not necessarily arranged as shown. The phototaking optical system 405 comprises on a phototaking optical path 407 an objective lens 112 such as one represented by Example 1 of the optical path-bending zoom lens according to the present invention and an image pickup device chip 162 for receiving an object image. These are built in the cellular phone 400.

Here an optical low-pass filter LF is additionally applied onto the image pickup device chip 162 to form an integral imaging unit 160, which can be fitted into the rear end of a lens barrel 113 of the objective lens 112 in one-touch operation. Thus, the assembly of the objective lens 112 and image pickup device chip 162 is facilitated because of no need of alignment or control of surface-to-surface spacing. The lens barrel 113 is provided at its end (not shown) with a cover glass 114 for protection of the objective lens 112. It is here noted that driving mechanisms for the zoom lens, etc. contained in the lens barrel 113 are not shown.

An object image received at the image pickup device chip 162 is entered via a terminal 166 in processing means (not shown), so that the object image can be displayed as an electronic image on the monitor 404 and/or a monitor at the other end. The processing means also include a signal processing function for converting information about the object image received at the image pickup device chip 162 into transmittable signals, thereby sending the image to the person at the other end.

As described above, the present disclosure provides an optical system, especially a zoom lens system wherein the reflecting optical element such as a mirror is located as closely to the object side thereof as possible, so that an optical path can be bent, with various contrivances added thereto. While having high optical performance specifications such as high zoom ratios, wide angles of view, reduced F-numbers and limited aberrations, the zoom lens of the present invention enables a camera to be immediately put into the ready state unlike a collapsible lens mount camera, makes the camera preferable for water- and dust-proofing purposes, and enables the depth dimension of the camera to be reduced as much as possible.

According to the present disclosure, it is possible to obtain a zoom lens that is thin upon received in a collapsible lens mount with efficiency, has a high magnification and shows improved image-formation capabilities upon rear focusing, thereby sliming down video cameras or digital cameras to the limit.

**Claims**

1. An electronic imaging system, comprising
a zoom lens, comprising a moving lens group B (G2) that has positive refracting power and moves only toward an object side of the zoom lens upon zooming from a wide-angle end to a telephoto end of the zoom lens, and a lens group A (G1) remaining fixed during the zooming, which is located on an object side of the zoom lens with respect to the moving lens group B (G2) and has negative refracting power,
and an electronic image pickup device (CG, I) located on an image side of the zoom lens,
said moving lens group B (G2) is composed of three lenses of, in order from an object side thereof, a positive lens, a negative lens and a positive lens, and a reflecting optical element (P) for bending an optical path is located on an object side of the zoom lens with respect to all lens groups that move for zooming or focusing,
said lens group A (G1) that remains fixed during zooming is positioned nearest to the object side of the zoom lens,
said lens group A (G1) that remains fixed during zooming further comprises the reflecting optical element (P) for bending an optical path,
**characterized in that** said lens group A (G1) that remains fixed during zooming comprises, in order from an object side thereof, an object-side subgroup A1, said reflecting optical element (P), and an image-side subgroup A2, and wherein the following condition (25) is satisfied:

$$-0.5 < L/f_{12} < 0 \tag{25}$$

where L is a diagonal length of an effective image pickup area of the electronic image pickup device (CG, I), and $f_{12}$ is a focal length of the image-side subgroup A2 in the lens group A (G1) that remains fixed during zooming.

2. The electronic imaging system according to claim 1, **characterized in that** said negative lens in said moving lens group B (G2) is cemented to said positive lens adjacent to the object side thereof or said positive lens adjacent to an image side thereof.

3. The electronic imaging system according to claim 1, **characterized by** further comprising a third lens group C (G3) on an image side of said moving lens group B (G2) with a variable air space interposed therebetween.

4. The electronic imaging system according to claim 1, **characterized in that** lens groups that move during said zooming or during focusing are defined by only two lens groups inclusive of said moving lens group B (G2) throughout the zoom lens.

5. The electronic imaging system according to claim 3, **characterized in that** said third lens group C (G3) moves during focusing.

6. The electronic imaging system according to claim 3, **characterized in that** said third lens group C (G3) has positive refracting power.

7. The electronic imaging system according to claim 3, **characterized by** further comprising a fourth lens group D (G4) having an aspheric surface on an image side of the zoom lens with respect to said third lens group C (G3).

8. The electronic imaging system according to claim 7, **characterized in that** said fourth lens group D (G4) remains fixed during said zooming or during focusing.

9. The electronic imaging system according to claim 1, **characterized in that** said reflecting optical element (P) is a prism (P) for bending an optical path.

10. The electronic imaging system according to claim 9, **characterized in that** at least one of transmitting surfaces of said prism (P) has a curvature.

11. The electronic imaging system according to claim 9, **characterized in that** an entrance surface of said prism (P) is concave on an object side thereof.

**12.** The electronic imaging system according to claim 11, **characterized in that** said prism (P) is located nearest to an object side.

**13.** The electronic imaging system according to claim 9, **characterized in that** an entrance surface of said prism (P) is defined by an aspheric surface.

**14.** The electronic imaging system according to claim 9, **characterized in that** an exit surface of said prism (P) is defined by a planar surface.

**15.** The electronic imaging system according to claim 1, **characterized in that** said lens group A (G1) that remains fixed during zooming comprises, in order from an object side thereof, the object-side subgroup A1 comprising a negative meniscus lens convex on an object side thereof, said reflecting optical element (P), and the image-side subgroup A2 comprising a positive lens.

**16.** The electronic imaging system according to claim 1, **characterized by** satisfying the following conditions (1) and (2):

$$0.9 < -f_A/\sqrt{(f_W \cdot f_T)} < 2.0 \qquad (1)$$

$$1.0 < f_B/\sqrt{(f_W \cdot f_T)} < 3.0 \qquad (2)$$

where $f_A$ is a focal length of the lens group A (G1), $f_B$ is a focal length of the lens group B (G2), $f_W$ is a focal length of the zoom lens at the wide-angle end, and $f_T$ is a focal length of the zoom lens at the telephoto end.

**17.** The electronic imaging system according to claim 13, **characterized by** satisfying the following condition (3):

$$0.9 < \log \gamma_B/\log \gamma < 10 \qquad (3)$$

where $\gamma = f_T/f_W$, and $\gamma_B$ is a ratio of a magnification of the lens group B (G2) at the telephoto end/a magnification of the lens group B (G2) at the wide-angle end.

**18.** The electronic imaging system according to claim 1, **characterized in that** said reflecting optical element (P) is composed of a prism (P) that satisfies the following condition (24):

$$1.5 < n_{pri} \qquad (24)$$

where $n_{pri}$ is a d-line refractive index of a prism (P) medium.

**19.** The electronic imaging system according to claim 1, wherein the image-side subgroup A2 in said lens group A (G1) that remains fixed during zooming is composed of two lenses of, in order from an object side thereof, a negative lens and a positive lens.

**20.** The electronic imaging system according to claim 1, **characterized in that** the object-side subgroup A1 in the lens group A (G1) that remains fixed during zooming consists of only one negative lens convex on an object side thereof.

**21.** The electronic imaging system according to claim 20, **characterized by** further satisfying the following condition (26):

$$0 < f_{11}/f_{12} < 1.6 \qquad (26)$$

where $f_{11}$ is a focal length of the object-side subgroup A1 in the lens group A (G1) that remains fixed during zooming, and $f_{12}$ is a focal length of the image-side subgroup A2 in that lens group A (G1).

**22.** The electronic imaging system according to claim 3, **characterized in that** said third lens group C (G3) is composed of one single lens.

**23.** The electronic imaging system according to claim 3, **characterized in that** said third lens group C (G3) moves toward the image side at the telephoto end rather than at the wide-angle end.

**24.** The electronic imaging system according to claim 23, **characterized by** further satisfying the following condition (27):

$$0.8 < -\beta_{Rt} < 2.1 \qquad (27)$$

where $\beta_{Rt}$ is a composite magnification of the moving lens group B (G2) and subsequent lens group or groups at the telephoto end upon focused on an infinite object point.


**Patentansprüche**

**1.** Elektronisches Abbildungssystem, umfassend
ein Zoomobjektiv, umfassend eine sich bewegende Linsengruppe B (G2), welche eine positive Brechkraft aufweist und sich nur zu einer Gegenstandsseite des Zoomobjektivs hin bewegt bei Zoomen von einem Weitwinkel-Ende zu einem Tele-End des Zoomobjektivs, und eine während des Zoomens fixiert bleibende Linsengruppe A (G1), welche an einer Gegenstandsseite des Zoomobjektivs in Bezug auf die sich bewegende Linsengruppe B (G2) angeordnet ist und eine negative Brechkraft aufweist,
und eine an einer Bildseite des Zoomobjektivs angeordnete elektronische Bildaufnahmevorrichtung (CG, I),
wobei die sich bewegende Linsengruppe B (G2) zusammengesetzt ist aus drei Linsen, der Reihe nach von einer Gegenstandsseite davon, einer Sammellinse, einer Zerstreuungslinse und einer Sammellinse, und wobei ein reflektierendes optisches Element (P) zum Ablenken eines optischen Pfads an einer Gegenstandsseite des Zoomobjektivs in Bezug auf alle Linsengruppen, welche sich zum Zoomen oder Fokussieren bewegen, angeordnet ist, wobei die Linsengruppe A (G1), welche während des Zoomens fixiert bleibt, am nächsten an der Gegenstandsseite des Zoomobjektivs positioniert ist,
wobei die Linsengruppe A (G1), welche während des Zoomens fixiert bleibt, ferner das reflektierende optische Element (P) zum Ablenken eines optischen Pfades umfasst,
**dadurch gekennzeichnet, dass** die Linsengruppe A (G1), welche während des Zoomens fixiert bleibt, umfasst, der Reihe nach von einer Gegenstandsseite davon, eine gegenstandsseitige Untergruppe A1, das reflektierende optische Element (P), und eine bildseitige Untergruppe A2, und wobei die folgende Bedingung (25) erfüllt ist:

$$-0{,}5 < L/f_{12} < 0 \qquad \ldots (25)$$

wobei L eine diagonale Länge eines wirksamen Bildaufnahmebereichs der Bildaufnahmevorrichtung (CG, I) ist, und $f_{12}$ eine Brennweite der bildseitigen Untergruppe A2 in der Linsengruppe A (G1) ist, welche während des Zoomens fixiert bleibt.

**EP 2 450 731 B1**

2. Elektronisches Abbildungssystem nach Anspruch 1, **dadurch gekennzeichnet, dass** die Zerstreuungslinse in der sich bewegenden Linsengruppe B (G2) mit der an die Gegenstandsseite davon angrenzenden Sammellinse oder der an eine Bildseite davon angrenzenden Sammellinse verkittet ist.

3. Elektronisches Abbildungssystem nach Anspruch 1, **dadurch gekennzeichnet, dass** es ferner eine dritte Linsengruppe C (G3) an einer Bildseite der sich bewegenden Linsengruppe B (G2) mit einem dazwischen angeordneten variablen Luftraum umfasst.

4. Elektronisches Abbildungssystem nach Anspruch 1, **dadurch gekennzeichnet, dass** die Linsengruppen, welche sich während des Zoomens oder Fokussierens bewegen, definiert sind durch nur zwei Linsengruppen, einschließlich der sich bewegenden Linsengruppe B (G2) überall in dem Zoomobjektiv.

5. Elektronisches Abbildungssystem nach Anspruch 3, **dadurch gekennzeichnet, dass** sich die dritte Linsengruppe C (G3) während des Fokussierens bewegt.

6. Elektronisches Abbildungssystem nach Anspruch 3, **dadurch gekennzeichnet, dass** die dritte Linsengruppe C (G3) eine positive Brechkraft aufweist.

7. Elektronisches Abbildungssystem nach Anspruch 3, **dadurch gekennzeichnet, dass** es ferner eine vierte Linsengruppe D (G4) umfasst, welche eine asphärische Fläche an einer Bildseite des Zoomobjektivs in Bezug auf die dritte Linsengruppe C (G3) aufweist.

8. Elektronisches Abbildungssystem nach Anspruch 7, **dadurch gekennzeichnet, dass** die vierte Linsengruppe D (G4) während des Zoomens oder während des Fokussierens fixiert bleibt.

9. Elektronisches Abbildungssystem nach Anspruch 1, **dadurch gekennzeichnet, dass** das reflektierende optische Element (P) ein Prisma (P) zum Ablenken eines optischen Pfades ist.

10. Elektronisches Abbildungssystem nach Anspruch 9, **dadurch gekennzeichnet, dass** wenigstens eine der durchlassenden Flächen des Prismas (P) eine Krümmung aufweist.

11. Elektronisches Abbildungssystem nach Anspruch 9, **dadurch gekennzeichnet, dass** eine Eintrittsfläche des Prismas (P) an einer Gegenstandsseite davon konkav ist.

12. Elektronisches Abbildungssystem nach Anspruch 11, **dadurch gekennzeichnet, dass** das Prisma (P) am nächsten zu einer Gegenstandsseite angeordnet ist.

13. Elektronisches Abbildungssystem nach Anspruch 9, **dadurch gekennzeichnet, dass** eine Eintrittsfläche des Prismas (P) durch eine asphärische Fläche definiert ist.

14. Elektronisches Abbildungssystem nach Anspruch 9, **dadurch gekennzeichnet, dass** eine Austrittsfläche des Prismas (P) durch eine ebene Fläche definiert ist.

15. Elektronisches Abbildungssystem nach Anspruch 1, **dadurch gekennzeichnet, dass** die Linsengruppe A (G1), welche während des Zoomens fixiert bleibt, umfasst, der Reihe nach von einer Gegenstandsseite davon, eine gegenstandsseitige Untergruppe A1, welche eine negative Meniskuslinse umfasst, die an einer Gegenstandsseite davon konvex ist, das reflektierende optische Element (P), und eine bildseitige Untergruppe A2, welche eine Sammellinse umfasst.

16. Elektronisches Abbildungssystem nach Anspruch 1, **dadurch gekennzeichnet, dass** es die folgenden Bedingungen (1) und (2) erfüllt:

$$0,9 < -f_A/\sqrt{(f_W \cdot f_T)} < 2,0 \qquad \ldots(1)$$

$$1,0 < f_B/\sqrt{(f_W \cdot f_T)} < 3,0 \qquad \ldots(2)$$

94

wobei $f_A$ eine Brennweite der Linsengruppe A (G1) ist, $f_B$ eine Brennweite der Linsengruppe B (G2) ist, $f_W$ eine Brennweite des Zoomobjektivs an dem Weitwinkel-Ende ist, und $f_T$ eine Brennweite des Zoomobjektivs an dem Tele-Ende ist.

17. Elektronisches Abbildungssystem nach Anspruch 13, **dadurch gekennzeichnet, dass** es die folgende Bedingung (3) erfüllt:

$$0,9 < \log \gamma_B / \log \gamma < 10 \qquad \ldots(3)$$

wobei $\gamma = f_T/f_W$, und $\gamma_B$ ein Verhältnis aus einem Abbildungsmaßstab der Linsengruppe B (G2) an dem Tele-Ende/ einen Abbildungsmaßstab der Linsengruppe B (G2) an dem Weitwinkel-Ende ist.

18. Elektronisches Abbildungssystem nach Anspruch 1, **dadurch gekennzeichnet, dass** das reflektierende optische Element (P) aus einem Prisma zusammengesetzt ist, welches die folgende Bedingung (24) erfüllt:

$$1,5 < n_{pri} \qquad \ldots(24)$$

wobei $n_{pri}$ ein D-Linie-Brechnungsindex eines Prismenmediums ist.

19. Elektronisches Abbildungssystem nach Anspruch 1, wobei die bildseitige Untergruppe A2 in der Linsengruppe A (G1), welche während des Zoomens fixiert bleibt, zusammengesetzt ist aus zwei Linsen, der Reihe nach von einer Gegenstandsseite davon, einer Zerstreuungslinse und einer Sammellinse.

20. Elektronisches Abbildungssystem nach Anspruch 1, **dadurch gekennzeichnet, dass** die gegenstandsseitige Untergruppe A1 in der Linsengruppe A (G1), welche während des Zoomens fixiert bleibt, aus nur einer Zerstreuungslinse besteht, welche auf der Gegenstandsseite davon konvex ist.

21. Elektronisches Abbildungssystem nach Anspruch 20, **dadurch gekennzeichnet, dass** es ferner die folgende Bedingung (26) erfüllt:

$$0 < f_{11}/f_{12} < 1,6 \qquad \ldots(26)$$

wobei $f_{11}$ eine Brennweite der gegenstandsseitigen Untergruppe A1 in der Linsengruppe A (G1) ist, welche während des Zoomens fixiert bleibt, und $f_{12}$ eine Brennweite der bildseitigen Untergruppe A2 in dieser Linsengruppe A (G1) ist.

22. Elektronisches Abbildungssystem nach Anspruch 3, **dadurch gekennzeichnet, dass** die dritte Linsengruppe C (G3) aus einer einzelnen Linse zusammengesetzt ist.

23. Elektronisches Abbildungssystem nach Anspruch 3, **dadurch gekennzeichnet, dass** sich die dritte Linsengruppe C (G3) eher zur Bildseite an dem Tele-Ende als an dem Weitwinkel-Ende hin bewegt.

24. Elektronisches Abbildungssystem nach Anspruch 23, **dadurch gekennzeichnet, dass** es ferner die folgende Bedingung (27) erfüllt:

$$0,8 < -\beta_{Rt} < 2,1 \qquad \ldots(27)$$

wobei $\beta_{Rt}$ ein Kombinationsabbildungsmaßstab der sich bewegenden Linsengruppe B (G2) und einer nachfolgenden Linsengruppe oder nachfolgender Linsengruppen an dem Tele-Ende bei Fokussieren auf einen Bildpunkt im Unendlichen ist.

**Revendications**

**1.** Système d'imagerie électronique, comprenant :

un objectif à focale variable, comprenant un groupe de lentilles mobiles B (G2) qui possède un pouvoir réfringent positif et se déplace seulement vers un côté objet de l'objectif à focale variable lors du changement de focale d'une extrémité grand-angle à une extrémité téléobjectif de l'objectif à focale variable, et un groupe de lentilles A (G1) restant fixe durant le changement de focale, qui est positionné sur un côté objet de l'objectif à focale variable par rapport au groupe de lentilles mobiles B (G2) et possède un pouvoir réfringent négatif,
et un dispositif de prise d'image électronique (CG, I) positionné sur un côté image de l'objectif à focale variable, ledit groupe de lentilles mobiles B (G2) est composé de trois lentilles, dans l'ordre à partir d'un côté objet de celui-ci, une lentille positive, une lentille négative et une lentille positive, et d'un élément optique réfléchissant (P) pour fléchir un trajet optique positionné sur un côté objet de l'objectif à focale variable par rapport à tous les groupes de lentilles qui se déplacent pour le changement de focale ou pour la mise au point,
ledit groupe de lentilles A (G1) qui reste fixe durant le changement de focale est positionné le plus près du côté objet de l'objectif à focale variable,
ledit groupe de lentilles A (G1) qui reste fixe durant le changement de focale comprend en outre l'élément optique réfléchissant (P) pour fléchir le trajet optique,
**caractérisé en ce que** ledit groupe de lentilles A (G1) qui reste fixe durant le changement de focale comprend, dans l'ordre à partir d'un côté objet de celui-ci, un sous-groupe côté objet A1, ledit élément optique réfléchissant (P), et un sous-groupe côté image A2,
et dans lequel la condition suivante (25) est satisfaite :

$$-0,5 < L/f_{12} < 0 \qquad (25)$$

où L est une longueur diagonale d'une zone de saisie d'image efficace du dispositif de prise d'image électronique (CG, I), et $f_{12}$ est une longueur focale du sous-groupe côté image A2 dans le groupe de lentilles A (G1) qui reste fixe durant le changement de focale.

**2.** Système d'imagerie électronique selon la revendication 1, **caractérisé en ce que** ladite lentille négative dans ledit groupe de lentilles mobiles B (G2) est collée à ladite lentille positive adjacente au côté objet de celui-ci ou à ladite lentille positive adjacente au côté image de celui-ci.

**3.** Système d'imagerie électronique selon la revendication 1, **caractérisé en ce qu'**il comprend en outre un troisième groupe de lentilles C (G3) sur un côté image dudit groupe de lentilles mobiles B (G2) avec un espace d'air variable interposé entre ceux-ci.

**4.** Système d'imagerie électronique selon la revendication 1, **caractérisé en ce que** les groupes de lentilles qui se déplacent durant ledit changement de focale ou durant ladite mise au point sont définis par seulement deux groupes de lentilles y compris ledit groupe de lentilles mobiles B (G2) dans la totalité de l'objectif à focale variable.

**5.** Système d'imagerie électronique selon la revendication 3, **caractérisé en ce que** ledit troisième groupe de lentilles C (G3) se déplace durant la mise au point.

**6.** Système d'imagerie électronique selon la revendication 3, caractérisé en ce que-ledit troisième groupe de lentilles C (G3) possède un pouvoir réfringent positif.

**7.** Système d'imagerie électronique selon la revendication 3, **caractérisé en ce qu'**il comprend en outre un quatrième groupe de lentilles D (G4) possédant une surface asphérique sur un côté image de l'objectif à focale variable par rapport audit troisième groupe de lentilles C (G3).

**8.** Système d'imagerie électronique selon la revendication 7, **caractérisé en ce que** ledit quatrième groupe de lentilles D (G4) reste fixe durant ledit changement de focale ou durant ladite mise au point.

**9.** Système d'imagerie électronique selon la revendication 1, **caractérisé en ce que** ledit élément optique réfléchissant (P) est un prisme (P) pour fléchir un trajet optique.

**10.** Système d'imagerie électronique selon la revendication 9, **caractérisé en ce qu'**au moins une des surfaces de transmission dudit prisme (P) possède une courbure.

**11.** Système d'imagerie électronique selon la revendication 9, **caractérisé en ce qu'**une surface d'entrée dudit prisme (P) est concave sur un côté objet de celui-ci.

**12.** Système d'imagerie électronique selon la revendication 11, **caractérisé en ce que** ledit prisme (P) est positionné le plus près du côté objet.

**13.** Système d'imagerie électronique selon la revendication 9, **caractérisé en ce qu'**une surface d'entrée dudit prisme (P) est définie par une surface asphérique.

**14.** Système d'imagerie électronique selon la revendication 9, **caractérisé en ce qu'**une surface de sortie dudit prisme (P) est définie par une surface plane.

**15.** Système d'imagerie électronique selon la revendication 1, **caractérisé en ce que** ledit groupe de lentilles A (G1) qui reste fixe durant le changement de focale comprend, dans l'ordre à partir du côté objet de celui-ci, le sous-groupe côté objet A1 comprenant une lentille ménisque divergent convexe sur un côté objet de celle-ci, ledit élément optique réfléchissant (P), et le sous-groupe côté image A2 comprenant une lentille positive.

**16.** Système d'imagerie électronique selon la revendication 1, **caractérisé en ce qu'**il satisfait les conditions suivantes (1) et (2) :

$$0,9 < -f_A / \sqrt{(f_w \cdot f_T)} < 2,0 \qquad (1)$$

$$1,0 < f_B / \sqrt{(f_w \cdot f_T)} < 3,0 \qquad (2)$$

où $f_A$ est une longueur focale du groupe de lentilles A (G1), $f_B$ est une longueur focale du groupe de lentilles B (G2), $f_w$ est une longueur focale de l'objectif à focale variable à l'extrémité grand-angle, et $f_T$ est une longueur focale de l'objectif à focale variable à l'extrémité téléobjectif.

**17.** Système d'imagerie électronique selon la revendication 13, **caractérisé en ce qu'**il satisfait la condition suivante (3) :

$$0,9 < \log \gamma_B / \log \gamma < 10 \qquad (3)$$

où $\gamma = f_T/f_w$, et $\gamma_B$ est un rapport d'un agrandissement du groupe de lentilles B (G2) à l'extrémité téléobjectif/un agrandissement du groupe de lentilles B (G2) à l'extrémité grand-angle.

**18.** Système d'imagerie électronique selon la revendication 1, **caractérisé en ce que** ledit élément optique réfléchissant (P) est composé d'un prisme (P) qui satisfait la condition suivante (24) :

$$1,5 < n_{pri} \qquad (24)$$

où $n_{pri}$ est un indice de réfraction d'une ligne d d'un milieu du prisme (P).

**19.** Système d'imagerie électronique selon la revendication 1, dans lequel le sous-groupe côté image A2 dans ledit groupe de lentilles A (G1) qui reste fixe durant le changement de focale est composé de deux lentilles, dans l'ordre à partir du côté objet de celui-ci, une lentille négative et une lentille positive.

**20.** Système d'imagerie électronique selon la revendication 1, **caractérisé en ce que** le sous-groupe côté objet A1 dans le groupe de lentilles A (G1) qui reste fixe durant le changement de focale est constitué de seulement une lentille négative convexe sur un côté objet de celui-ci.

**21.** Système d'imagerie électronique selon la revendication 20, **caractérisé en ce qu'**il satisfait en outre la condition suivante (26) :

$$0 < f_{11}/f_{12} < 1{,}6 \qquad (26)$$

où $f_{11}$ est une longueur focale du sous-groupe côté objet A1 dans le groupe de lentilles A (G1) qui reste fixe durant le changement de focale, et $f_{12}$ est une longueur focale du sous-groupe côté image A2 dans ce groupe de lentilles A (G1).

**22.** Système d'imagerie électronique selon la revendication 3, **caractérisé en ce que** ledit troisième groupe de lentilles C (G3) est composé d'une seule lentille.

**23.** Système d'imagerie électronique selon la revendication 3, **caractérisé en ce que** ledit troisième groupe de lentilles C (G3) se déplace vers le côté image à l'extrémité téléobjectif plutôt qu'à l'extrémité grand-angle.

**24.** Système d'imagerie électronique selon la revendication 23, **caractérisé en ce qu'**il satisfait en outre la condition suivante (27) :

$$0{,}8 < -\,\beta_{Rt} < 2{,}1 \qquad (27)$$

où $\beta_{Rt}$ est un agrandissement composite du groupe de lentilles mobiles B (G2) et d'un groupe ou de groupes de lentilles suivants à l'extrémité téléobjectif lorsqu'ils sont mis au point sur un point objet infini.

# FIG. 1(a)

# FIG. 1(b)

# FIG. 1(c)

# FIG. 2(a)

# FIG. 2(b)

# FIG. 2(c)

# FIG. 3(a)

# FIG. 3(b)

# FIG. 3(c)

# FIG. 4(a)

# FIG. 4(b)

# FIG. 4(c)

# FIG. 5(a)

# FIG. 5(b)

# FIG. 5(c)

# FIG. 6(a)

# FIG. 6(b)

# FIG. 6(c)

# FIG. 7(a)

# FIG. 7(b)

# FIG. 7(c)

# FIG. 8(a)

# FIG. 8(b)

# FIG. 8(c)

# FIG. 9(a)

# FIG. 9(b)

# FIG. 9(c)

# FIG. 10(a)

# FIG. 10(b)

# FIG. 10(c)

# FIG. 11(a)

# FIG. 11(b)

# FIG. 11(c)

# FIG. 12(a)

# FIG. 12(b)

# FIG. 12(c)

# FIG. 13(a)

# FIG. 13(b)

# FIG. 13(c)

# FIG. 14

G1    S  G2  G3  G4

P    LF  CG    I

# FIG. 15(a)

# FIG. 15(b)

# FIG. 15(c)

# FIG. 16(a)

# FIG. 16(b)

# FIG. 16(c)

## FIG. 17(a)

## FIG. 17(b)

## FIG. 17(c)

# FIG. 18(a)

# FIG. 18(b)

# FIG. 18(c)

# FIG. 19(a)

# FIG. 19(b)

# FIG. 19(c)

## FIG. 20(a)

## FIG. 20(b)

## FIG. 20(c)

# FIG. 21(a)

# FIG. 21(b)

# FIG. 21(c)

# FIG. 22(a)

# FIG. 22(b)

# FIG. 22(c)

# FIG. 23(a)

# FIG. 23(b)

# FIG. 23(c)

# FIG. 24(a)

# FIG. 24(b)

# FIG. 24(c)

## FIG. 25(a)

## FIG. 25(b)

## FIG. 25(c)

# FIG. 26(a)

# FIG. 26(b)

# FIG. 26(c)

124

# FIG. 27

EP 2 450 731 B1

# FIG. 28(a)

# FIG. 28(b)

# FIG. 28(c)

# FIG. 29

EP 2 450 731 B1

# FIG. 30(a)

# FIG. 30(b)

# FIG. 30(c)

# FIG. 31

EP 2 450 731 B1

# FIG. 32(a)

# FIG. 32(b)

# FIG. 32(c)

# FIG. 33(a)

# FIG. 33(b)

EP 2 450 731 B1

# FIG. 34

# FIG. 35

# FIG. 36(a)     FIG. 36(b)

# FIG. 37

L1 · DM

I

# FIG. 38

Variable-shape mirror

Reflecting surface

Plane of symmetry

Optical axis

# FIG. 39

# FIG. 40

# FIG. 41

FIG. 42

# FIG. 43

# FIG. 44

C : Cyan   M : Magenta

Ye : Yellow   G : Green

# FIG. 45

# FIG. 46

LF Low-pass filter

Near-infrared cut coat surface

Complementary colors mosaic filter

G2,G3,G4

1B

1A

G1

Optical axis

1C

CCD

11 Rotating shaft

10 Turret

1E

1D

EP 2 450 731 B1

# FIG. 47(a)

# FIG. 47(b)

## FIG. 48

45 Shutter
46 Flash
43 Finder optical system
40 Camera
44 Finder optical path
41 Image pickup optical system
42 Phototaking optical path

## FIG. 49

45 Shutter
40 Camera
47 Liquid crystal display monitor
44 Finder optical path

# FIG. 50

53 Finder objective optical system

57 Field frame

55 Porro prism

44 Finder optical path

59 Eyepiece optical system

50 Cover member

E Observer's eyeball

43 Finder optical system

50 Cover member

P

51

47 Liquid crystal display monitor

50 Cover member

Processing means

42 Phototaking optical path

G1

S

41 Phototaking optical system

G2

G3

G4

LF

Recording means

49 CCD    52

EP 2 450 731 B1

# FIG. 51

# FIG. 52

304

114 — P

G1

112 —

S

G2

G3

G4

LF

113

162 166

160

# FIG. 53

304

303

302

301

300

## FIG. 54(a)

## FIG. 54(b)

## FIG. 54(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11194274 A
- JP 11287953 A
- JP 2000009997 A
- US 20010038496 A1